# EUROPEAN PATENT APPLICATION

(11) **EP 2 813 977 A1**
(43) Date of publication of application: **17.12.2014**
(21) Application number: 14179503.9
(22) Date of filing: 02.08.2011
(51) Int. Cl.: G06N 5/04, G06F 17/30

(54) **The FSTP expert system**

(30) Priority: 17.08.2010 US 374312 P; 07.09.2010 US 380377 P; 21.09.2010 US 384770 P; 28.09.2010 US 387217 P; 05.10.2010 US 389829 P; 20.10.2010 US 394822 P; 27.10.2010 US 407076 P; 29.10.2010 US 408291 P; 01.11.2010 US 408790 P; 04.11.2010 US 410066 P; 08.11.2010 US 410971 P; 12.11.2010 US 412822 P; 15.11.2010 US 413517 P; 17.11.2010 US 414483 P; 18.11.2010 US 415021 P; 22.11.2010 US 415964 P; 23.11.2010 US 416478 P; 26.11.2010 US 417330 P; 29.11.2010 US 417477 P; 30.11.2010 US 418179 P; 06.12.2010 US 420058 P; 23.12.2010 US 201061426825 P; 27.12.2010 US 201061427244 P; 31.12.2010 US 201061428941 P; 10.01.2011 US 201161431129 P; 24.01.2011 US 201161435551 P; 07.02.2011 US 201161440053 P; 15.02.2011 US 201161442896 P; 28.02.2011 US 201161447401 P; 07.04.2011 US 201161472915 P; 15.04.2011 US 201161476162 P; 21.04.2011 US 201161477870 P; 25.04.2011 US 201113093682; 15.06.2011 US 201161497140 P; 05.07.2011 US 201161504435 P
(62) Divisional of application: 11751562.7
(71) Applicant: Sigram Schindler Beteiligungsgesellschaft mbH, 10587 Berlin (DE)
(72) Inventor: Schindler, Sigram, 14129 Berlin (DE)
(74) Representative: Müller, Wolfram Hubertus

(57) **Abstract**

Be TT.p the "technique teaching" of a patent or venture, RS a "reference set" of prior art "technique teachings TT.i", any "element" of any TT described by its properties, and all this information be presented as meaningful items. Then the FSTP Expert System supports managing an analysis of TT.p over RS such that it is able to reply automatically and instantly to any query for any item in this information. These answers may describe any interrelation between any items or properties/facts or comment on such interrelations or on some insights into them achieved while generating these items by or interactively with the FSTP Expert System.

By formalization of these properties it also supports determining the value of q dependably indicating TT.p as trivial/obvious over RS iff q=0 and for q>0 showing the "creative height of TT.p over RS" and quantifying the undeniable "power" of this indication. I.e.: It then
i) determines by q the minimal factual creativity of a patent (or of an "ordinary"/"green"/"health"/"trademark"/ "copyright"-venture) over prior art and
ii) allows instantly to reply to any queries concerning i).

## Description

### I. SPECIFICATION OF THE FSTP EXPERT SYSTEM

The FSTP Expert System is capable of analyzing an emerging or already done "classical MoT"/green/health/ business/... invention and documents pertinent to it - patent(application)/prior art/skill/prosecution/litigation documents of a national patent system and its Highest Court's precedents, ... - for facts **INDICATING** its nonobviousness (incl. novelty) over this prior art, i.e.: **NOT DECIDING** on these problems. For determining such indications, it supports using all meaningful interrelations between all fundamental information items disclosed by these documents. I.e., it firstly supports noticing all disclosed fundamental technical facts and secondly transforms them into the totally innovative technical secondary **basic/semantic/creative(pragmatic)** facts. It thereby determines all interrelations between these disclosures, the pertinent Highest Courts precedents, and their impacts on these indications. Thus, the FSTP Expert System enables to instantly reply to any query concerning these technical indications and their dependencies on fundamental disclosures (and vice versa). I.e., it focuses on these innovative technical secondary facts indicating an invention's (non)obviousness - i.e. it ignores the nontechnical secondary facts, which are completely independent of the former and not considered here.

It discloses the functionality of the FSTP Expert System and its technical architecture in an enabling way.

Dealing with patents is discussed in e.g. US 2008/0148143, US 2008/0178114, US 2010/0332285. Scientifically evaluating patents has been around for a long time. Sections I.F-G show that they all are only very remote to the FSTP - none of them mentions a patent/venture expert system of the above outlined capabilities.

Section I.J discloses how the FSTP resolves this technical problem of raw information acquiring, thereby facts' tachymetric screening/transforming, these facts relating to this raw information for instant query replies by combining existing systems - data base/communications/document indexing and mark-up/logic reasoning/document management/document presentation systems - in particular queries regarding an invention's "creative height" over prior art. Section I.K outlines the FSTP's potential to massively simplify the work of national PTOs. Section I.L hints at the FSTP's suitability for application to "business"/"green"/"health"/... inventions/ventures. Section I.M discusses the automations needed, of the FSTP, to enable it to suggest chains of purely legal arguments, too.

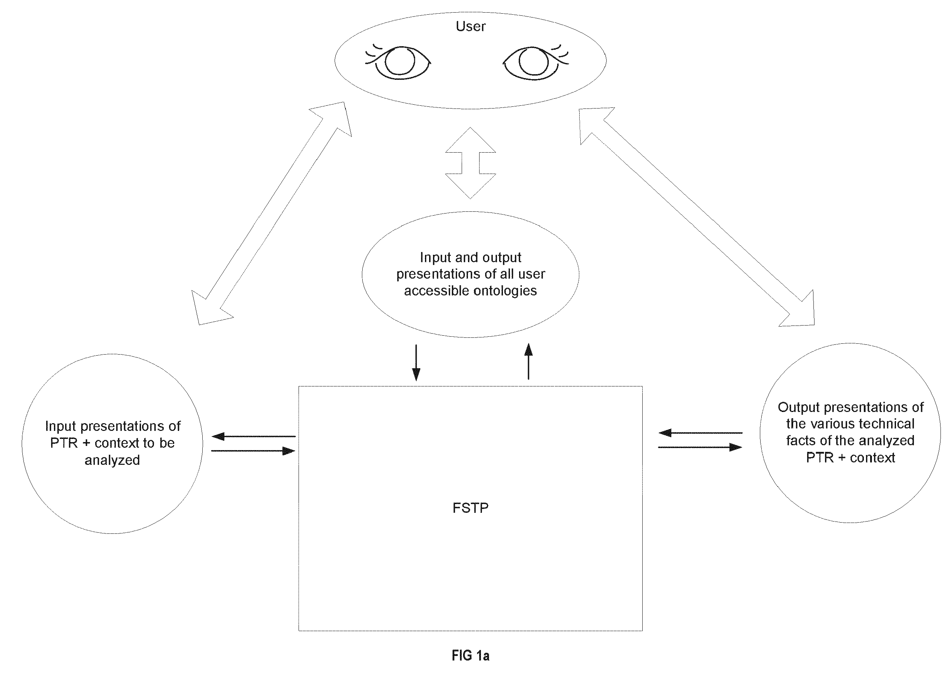

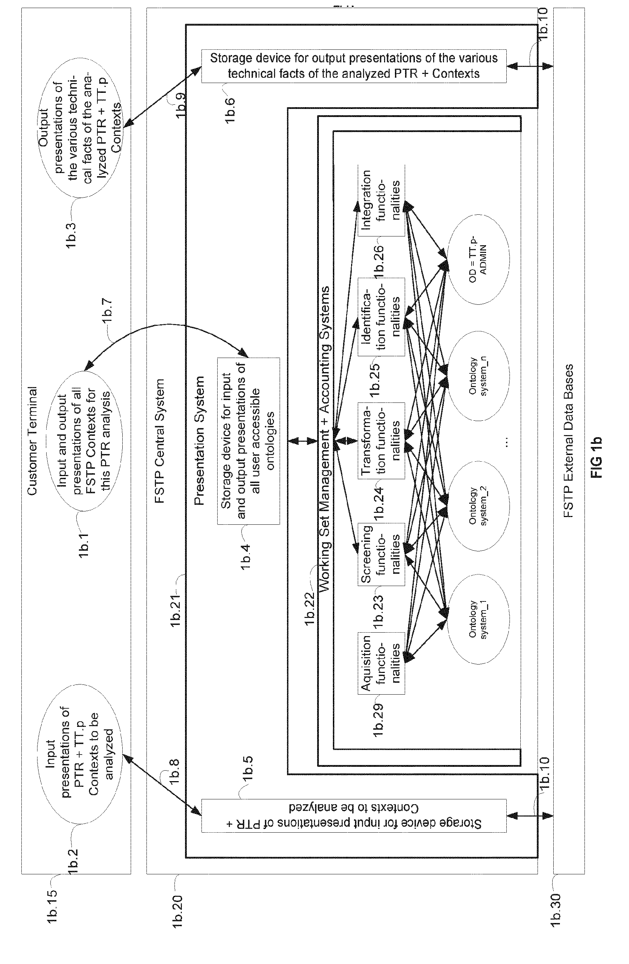

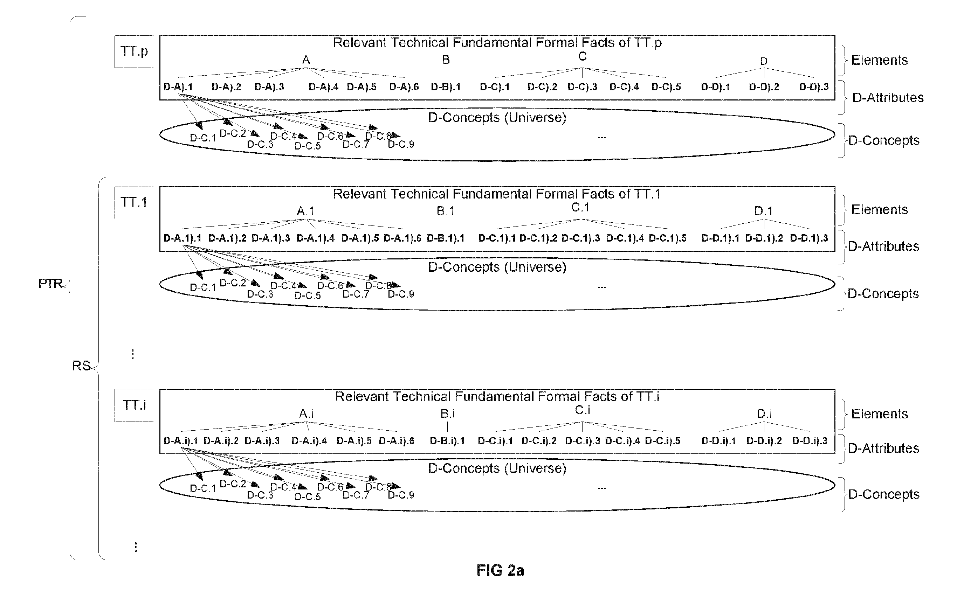

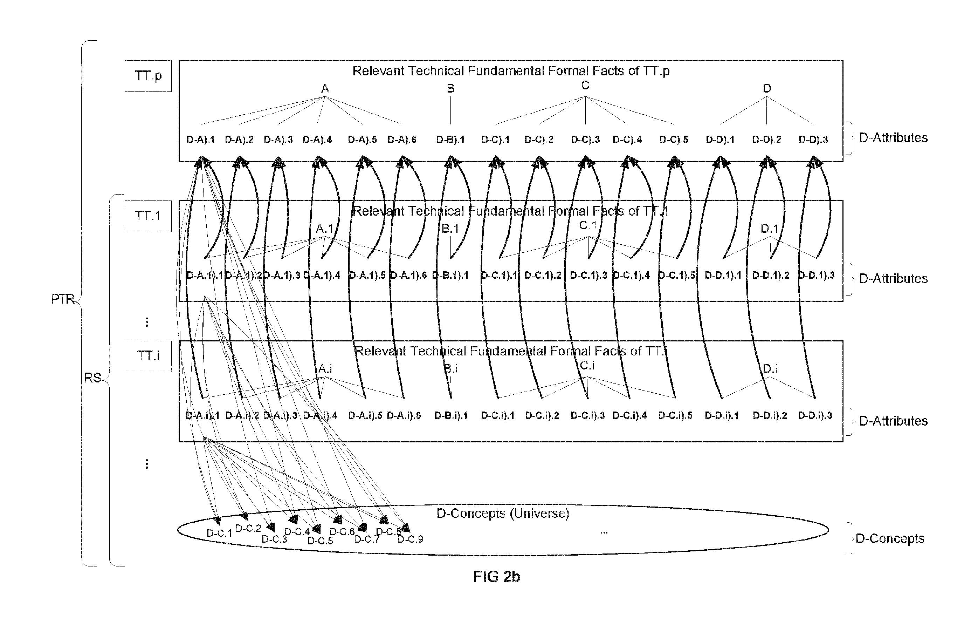

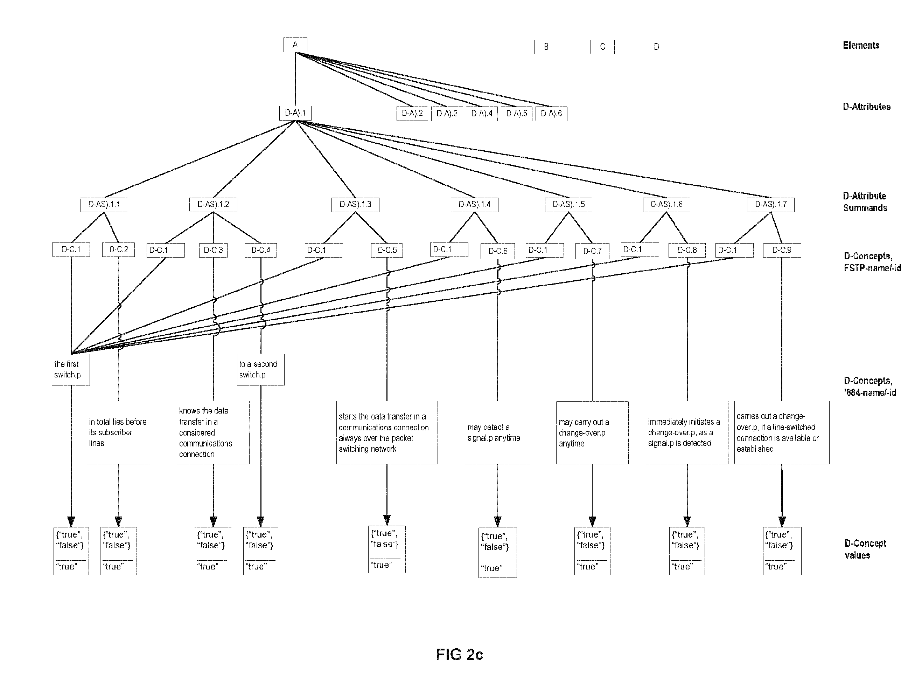

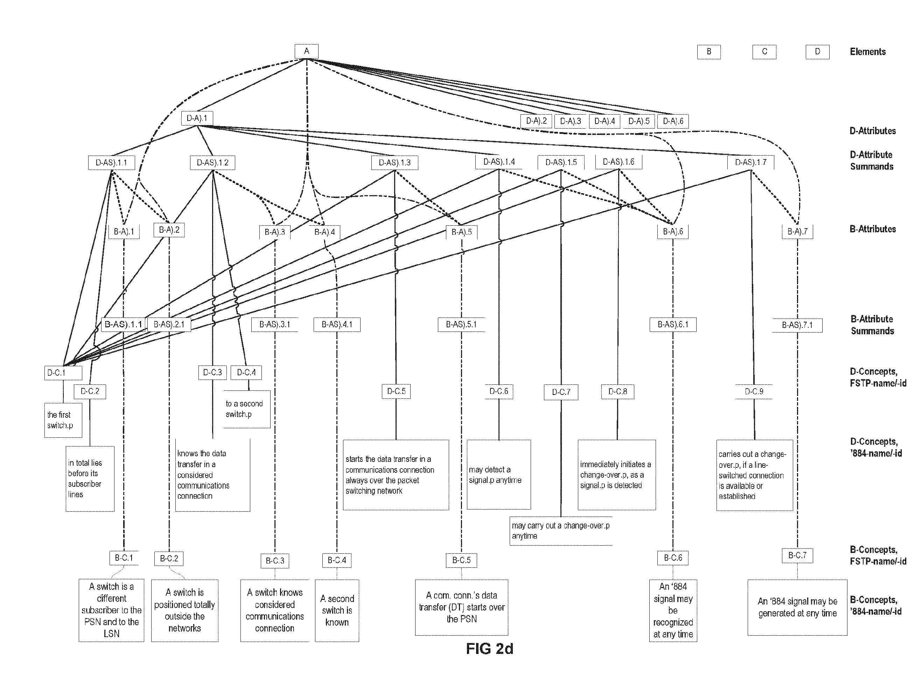

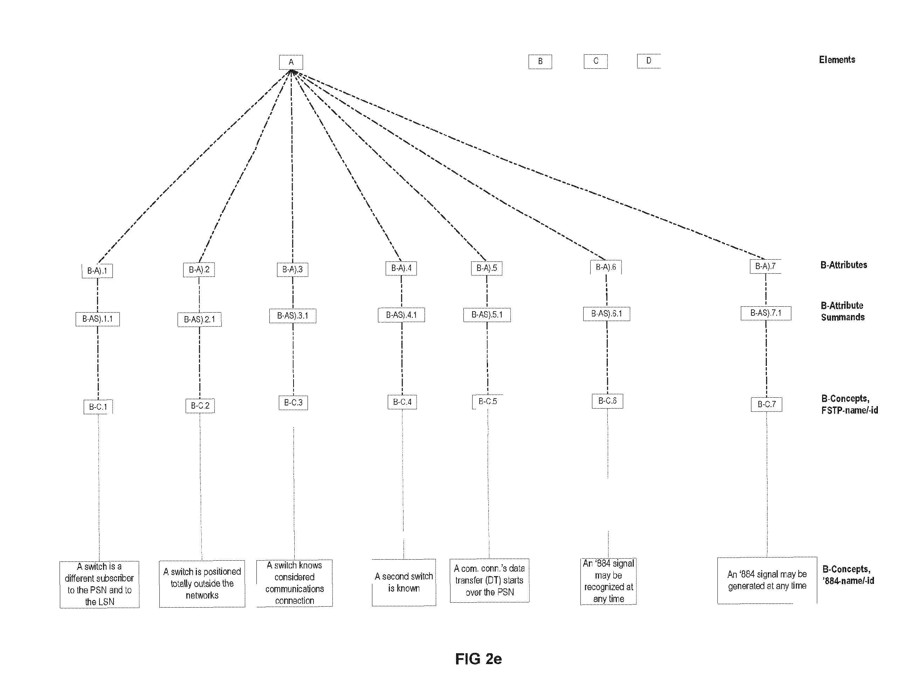

FIG 1a outlines the overall structure of the FSTP, while the FIGs 1b-e elaborate on the technical architecture of an exemplary HW/SW embodiment of these technical FSTP functions (see Section I.J). Its user communicates with it - as frequently as and whenever needed by him or the FSTP prior to and during performing an FSTP analysis - via 3 kinds of interfaces: those shown left, right, and on top of the FSTP for inputting/outputting, in a variety of presentations as specified by the HW/SW/communication/presentation technologies of existing systems, e.g. the technical facts derived by means of it and/or to be taken into account by it in this analysis resp. the context ontologies of this analysis and/or for specifying/modifying all that. An ontology denotes given knowledge about some whatsoever - here e.g. about patent law, pertinent precedents, an invention's person of ordinary skill - possibly including other ontologies of various kinds of contextual knowledge presentations, as explained below. An ontology always belongs to a named "ontology domain, OD" (see the "OD = name of ontology domain" in an ellipse or another curve representing it in FIGs). The FSTP presents its intermediary and final outcomes of its analysis - e.g. of its two main kinds of ontologies (pertinent subject matter and context ontologies, see FIGs 2-4, in particular regarding "green/health ventures") input to it - through the right interface.

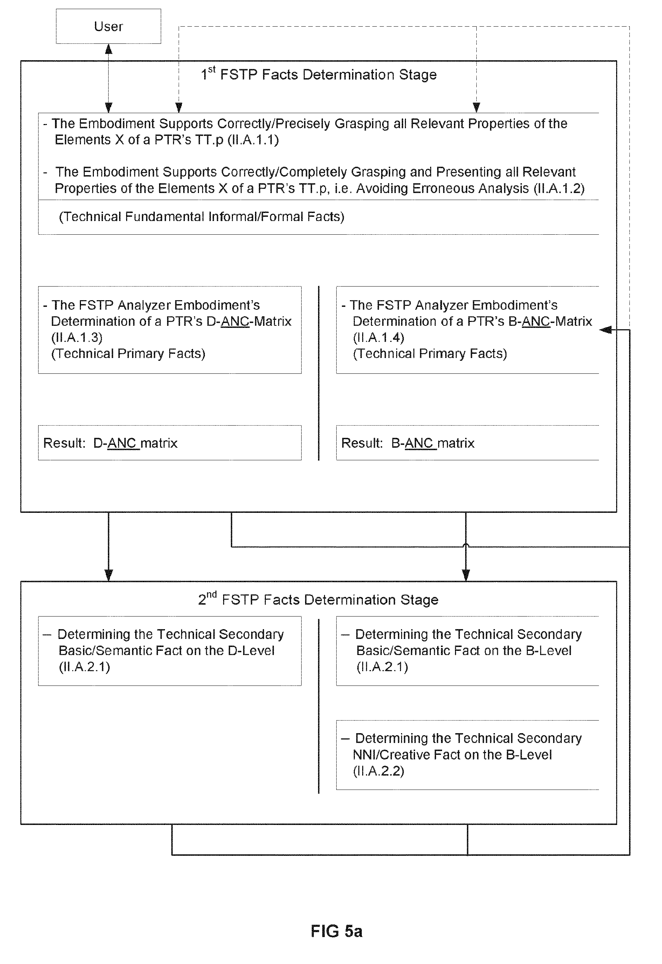

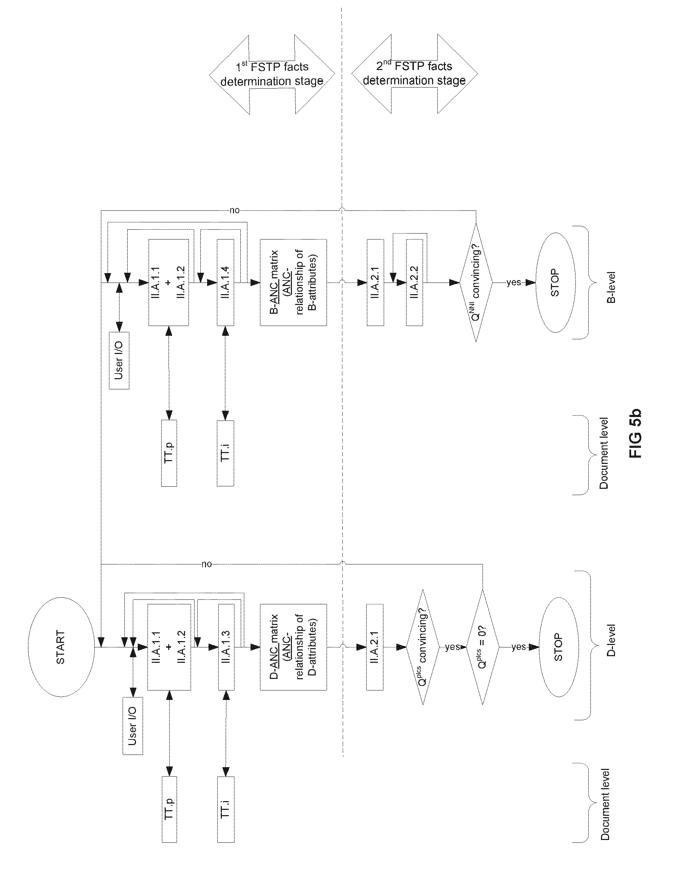

The functionalities to be executed during performing an FSTP analysis are identified by FIG 5a, while FIG 5b elaborates on the sequences of steps of these executions (see Sections II and III).

### I.A The FSTP Expert System's Epistemological and Practical Technical Facts of a PTR

**I.A.1 - Fundamentals of the FSTP** The FSTP needs informal and formal descriptions of the technique teaching ("**TT.p**") to be analyzed and its alleged prior art technique teachings ("**TT.i**'s"). Here and below, this "formal" is not implying a mathematical notation (see Section I.A.3), but a TT description is called formal if it identifies
▪ A, B, C, D, ... as the elements of the TT.p of document.p,
▪ A.i, B.i, C.i, D.i, ... as the peer elements in the TT.i's (of document.i, i=1,2,3,...) to these TT.p elements, and
▪ **X**).**n**, **X.i).n** as the properties/attributes**¹⁴⁾** of these elements **X/X.i**=A/A.i, B/B.i, C/C.i,..., n=1,2,3,...,
whereby determining these multiple descriptions**¹²⁾** is al I but trivial and therefore carefully discussed below - in particular as noticing that TT.p not having a property may be as important as noticing that it has another property.

While the term "**technique teaching, TT**.**p**" of a patent (application) is well-known as being the functional description of the solution of this patent's problem to be solved, it here is used to denote also the functional description of any procedure solving a given venture's problem of whatsoever type.

Let us focus on a patent's TT.p - for similarly well-definable ventures see Section I.L - and denote by the:
▪ **"reference set, RS"** a set of TT.i's resp. of document.i's disclosing them, representing the prior art for this TT.p.
▪ **"technical fundamental informal facts"** natural language descriptions of any TT and its relevant properties.
▪ **"technical fundamental formal facts"** their formal descriptions by the above X/X.i's and **X).n/X.i).n**'s.
**▪ "technical primary facts"** the "**anticipates**/**not**-**anticipates-and-not-contradicts**/**contradicts**, **ANC**" relation between these **X**.**i**).**n**'s and **X**).**n**'s (the well-known "Graham technical factors" in the US, less precise than here) or between "conceptualized refinements of these **X**.**i**).**n**'s and **X**).**n**'s" (see Sections I.A.4-E, II.A.1.3-4).
▪ "technical secondary **basic/semantic/creative facts"** of a **"PTR"** (= "pair of <TT.p, RS>") one of either:
   - The well-known technical secondary **"basic"** fact as a simple implication of these Graham technical facts.
• The innovative technical secondary "**semantic**" alias "**plcs**" fact as the pair of two components, namely:
   **1.)** The "**semantic**- alias **plcs**-**height**, **Q^{plcs}"** (plcs = patent law carrying semantics) of TT.p**¹⁶⁾** over RS.
      The measurement unit of plcs-height is **"plcs-independent thought^{10),14)}**": At least Q**^{plcs}** such thoughts are needed for finding**¹⁴⁾** TT.p starting from RS⁺. I.e.: For no q<Q**^{plcs}** there is a plcs-independent "**anticipation**-**combination**, **AC"¹⁴⁾** and q **"conceptual-modification, 1-cM"¹⁴⁾** with "AC/mod(q-cM) ants TT.p".
   **2.)** The **"Q^{plcs}-paths-set, Q^{plcs}-PS",** being the set of all **"Q^{plcs}-AC-sets",** each Q**^{plcs}**-AC-set being the set of all pairs <x,y>, with x being a Q**^{plcs}**-AC and y being the set of all Q**^{plcs}**-cMs for this very Q**^{plcs}**-AC**¹⁴⁾**.
• The innovative technical secondary "**creative**" alias "**pragmatic**" alias **"pmgp"** fact as the similar pair of:
   **1.)** The **"creative-** alias **pmgp-height, Q^{pmgp}"** (pmgp = patent monopoly granting pragmatics) of its TT.p**¹⁶⁾** over its RS. The measurement unit of pmgp-height is the same as above, but Q**^{plcs}**-cMs now are subject to pmgp, which may make Q**^{pmgp}** become < or ≥ Q**^{plcs}** (see Sections I.A.5 and I.B.2).
   **2.)** The **"Q^{pmgp}-paths-set, Q^{pmgp}-PS",** being the **Q^{plcs}-PS** analogon with all elements pmgp**¹⁴⁾** approved,
   whereby these secondary technical facts are derivable on both **"D-/B-levels"** of facts presentation.

The relevant elements/attributes of a PTR describe of its TTs only those properties needed in its FSTP analysis for discriminating between the TT.p and TT.i combinations**¹⁴⁾**. Otherwise the number of properties to be described runs out of comprehensibility/manageability. The rule of thumb for a PTR analysis is to initially omit as many properties as possible - without making this PTR meaningless - and then to increase their number as such properties are noticed and recognized by the FSTP user to be relevant for the FSTP analysis. The selecting and refining of such relevant properties is elaborated on until Section I.E and in the FSTP Expert System Tutorial.

The first 4 of the preceding 5 square points and their notional structures are visualized by the FIGs 2a-d. These structures underlie the knowledge presentation of the **"PTR ontology",** which includes the D/B-ANC matrices (see below, the Section I.B, and FIG 2b), built up as a main part of the content of the **"working set, WS"** during analyzing a PTR by the FSTP Expert System (see Sections I.J and II.A.1.3/4). The left margin in the first two FIGs 2 identifies this PTR's pair <TT.p, RS>, and the right margin its respective D/B-attributes on the **"D/B- levels of facts presentation**" defined below. The sets of horizontal rectangles identify the resp. technical funda-mental formal facts and the horizontal ellipses the universes of **"concepts"** explained below, referred to by them (see fine arrows). FIG 2b shows by bold arrows the technical primary facts of the D/B-ANC matrices, an arrow standing for one of the 3 component relations "**a**nticipates"/"**n**ot-ants"/"**c**ontradicts", in total **"ANC**" between attri-butes (the contradicts being a side issue, here). FIG 2b's **D-X.i).n'**s/**D-X).n'**s lead to the D-ANC matrix, and FIGs 2c-e show the transformation**¹⁰⁾** of the D-ANC matrix into the B-ANC matrix (see Sections I.A.4-I.E and II.A.1.3-4).

The fifth square point, the innovative technical secondary facts, is too complex for visualization. For a nontrivial PTR, determining "by hand" the technical secondary basic fact in full may already be error prone, extremely tedious, and incomplete - determining its technical secondary plcs-fact by hand is practically impossible (see Sections I.A.4-E). The FSTP is of significant help by supporting correctly and completely determining this PTR's technical secondary plcs- and pmgp-facts - including checking/achieving "plcs- and pmgp-independencies" (see Sections I.A.5). Both facts are a resp. pair "<Q^{xxxx}, Q^{xxxx}-PS >", xxxx = plcs or = pmgp (see Section I.B.2), with):
▪ Q^{xxxx} is a number 0,1,2,3, .... called the xxxx-height of this PTR's TT.p over its RS, and
▪ Q^{xxxx}-PS is the set of all pairs <Q^{xxxx}-AC, set of all Q^{xxxx}-cMs such that Q^{xxxx}-AC/mod(Q^{xxxx}-cMs) ants TT.p >.

The technical secondary plcs-/pmgp-facts of a PTR are innovative indicators of (non)obviousness of much better indicativeness of this quality of its TT.p over its RS than this PTR's well-known Graham facts. They are independent of this TT.p's subject matter being technical or nontechnical (whatever meaning the term "technical" should have). A **"PTR problem"** is the problem of deriving them from this PTR.

The indicative power of these indicators increases with increasing values of Q**^{pmgp}** (resp. already of Q**^{plcs}**), but is also substantial for Q**^{pmgp}**=0 and/or Q**^{plcs}**=0 (see Sections I.B.2 and I.M).

I.o.w.: A value of Q**^{pmgp}** ≥1 of a PTR's pmgp-fact is an indication of its TT.p's patentability due to its "pushing back frontiers in some useful art by the distance of Q**^{pmgp}** creative thoughts" - if patenting inventions is foreseen in this art. I.e.: The value of Q**^{pmgp}** (≥ or ≤ Q**^{plcs}**) quantifies the creative- alias pmgp-height of this TT.p over this RS and thus determines also the indicative power of this indication (as justified in detail by the Q**^{pmgp}**-PS).

**I.A.2 - The Need of the FSTP Expert System** Already here it is clear: This patent application's innovation uses cutting edge knowledge engineering, linguistic, logics, and IT technology sciences for resolving PTR problems, i.e. for determining the innovative technical facts indicating a patent's (non)obviousness. These sophisticated facts are due to the notional/mental complexity inherent to the (non)obviousness problem even in "simple" cases**¹⁴⁾**, though this intriguing complexity so far is not really being recognized. Mastering this challenge dependably today is impossible, also for the skilled person in the art of the PTR analyzed - unless the FSTP technology is used.

A nice example of this so far unavoidable naivety in dealing with the problem of determining facts indicating a TT.p's (non)obviousness is provided by the USPTO's MPEP, Section 2141. There the USPTO just recapitulates, what the Supreme Court had determined in its 1966 direction-pointing Graham vs. John Deere decision - without becoming aware that performing a (non)obviousness analysis correctly and completely this way, i.e. without additional technique and by using only natural language (of the skilled person), is epistemologically/linguistically/logically/IT-technologically impossible**^{5),14),15)}**. A recent update of this MPEP directive, its new Section 2141, has not reduced this problem (but eliminated the other important question as to the MoT test's exclusivity, see Section I.A.6).

**I.A.3 - The New Fundamental Terms/Notions of the FSTP Technology** Using the FSTP Expert System requires reconsidering a whole series of key terms/notions known a long time, such as "TTs", attributes "**X**).**n**" of the elements "X", their "disclosures" in documents, and "concepts" referred to by attributes - even the notion of their "independencies" is known rudimentarily. The remainder of this Section I.A goes beyond that reconsideration and introduces additional terms/notions. As it often refers to notional elaborations in later sections, it is not fully comprehendible at first reading - though it provides a first survey about some of these fundamental new ideas.

The **"analytic"** alias **"epistemological"** ground laying terms/notions/functions of the FSTP Expert System - its **"1. Center of knowledge transformation**" - are disclosed/discussed/defined defined by the 6 Sections I.A-I.F.

Its **"2. Center of knowledge transformation**" deals with its "**practical**" ground laying terms/notions/functions, as disclosed by the 6 Sections I.G-M. Leveraging on the 1. Center, the 2. one embodies the FSTP's capabilities of instantly answering all reasonable queries about a PTR and all its contexts input to it, i.e. not only about its TTs but also about all their contextual interrelations. The 2. Center of knowledge transformation thus discloses a very specific integrated use of a variety of pre-existing and not-compatible but jointly to be used technical information/communications/storage/retrieval/presentation systems via their pre-existing technical interfaces.

Thus, the knowledge transformations of both centers are totally different from each other, and both are based on functionalities invented for this patent application, nowhere else presented or only considered until now.

The above said implies that the 1. Center of knowledge transformation of the FSTP Expert System deals, in its FSTP analysis of a PTR, with at least two kinds of descriptions of relevant properties of this PTR's TTs: The technical fundamental **"informal"** facts and the technical fundamental **"formal"** facts derived from the former ones and having the same meaning (see Sections I.C-E). While the informal facts are just quotations of disclosures of elements' properties (as required by precedents), the formal facts describe these properties as attributes being logic sums of simpler properties and thus deviate from the disclosures' wordings without changing their meanings - which is to be approved by the person of skill. The above attributes **X**).**n**/**X**.**i**).**n** are such formal expressions (not necessarily in mathematical notation) referring to "concepts"/"values" (see, see Sections I.A.4-5). Thus, in a PTR's FSTP analysis, one describes at least twice, namely informally and formally, the same relevant properties of all its relevant peer elements **X/X.i.** From epistemology**⁵⁾**, often reconfirmed by IT system design**¹⁵⁾**, it has been known for a long time: The indispensable preciseness of the description of all the properties of all the **"relevant"** functionalities "**noticed**" and being **"independent"** may dependably be achieved only iteratively.

Note: For the FSTP analysis of a PTR it is its TT.p that provides the basis for identifying all relevant X and their properties **X**).**n**, i.e. the terminological/notional "coordinate system" for this analysis. Thus, its TT.p prescribes the terms and notions to be used also when searching for and determining their peers in its TT.i's.

**I.A.4 - A PTR's Concepts and its D-/B-Levels of Facts Presentation of the FSTP Technology.** A **"concept"** may represent anything, i.e. "xxxxx", whatever "xxxxx" stands for - e.g. an attribute **X.i).n⁵⁾** or a **"thought"⁵⁾** - if there is only agreement that it is commonly understood**⁵⁾** (hence: "sufficiently simple"). A concept anytime has resp. evaluates to an "**instantiation**" alias "value", has a set of values called its **"universe",** and is called "**binary**" if this universe consists of T and F. Let **"TT.0"** denote TT.p and **"universe, U(X.i).n)"** the set of all values of concepts C.k to which **X.i).n** refers. Then any **X.i).n** may be viewed as a binary concept over **U(X.i).n).** The **"truth set of X.i).n, TS(X.i).n)"** is defined to be the subset of **U(X.i).n)** referred to by **X.i).n** in TT.i.

The FSTP analysis is based on this notion of concept**^{10),14)}** (elaborated on below and in Sections I.B-E).

Just for clarification: Concepts may represent**^{10),14)}** - here and later often omitting D/B-prefixes -
▪ "physics-intrinsic" issues, such as "time" or "space" or "scale" or "spectrum" or "point in time" or "location in some space" or "degree on a scale" or "colour in a spectrum" or "location of somewhat in some space" or ....
   In physics TS(**X.i).n)** is called the **"state diagram"** of any embodiment of **"system" X.i).n** over the **"coordinate system",** which is defined by the set of concepts referred to by this system. Any point in TS(**X.i).n)** then represents the resp. state of an embodiment of **X.i).n.**
▪ "physics-extrinsic" issues, i.e. "logic-/application-/objectives-/user-/invention-/...-intrinsic" issues, such as "attribute" or "quality" or "feeling" or "tolerance" or "invented feature" or "prior art feature" or ....
   In this context of TS(**X.i).n)** it is unusual to call it "state diagram" of "system" **X.i).n** presented over the "coordinate system" being is set of concepts. We do use these notions**⁵⁾**, though denoting them by other terms.
   As the subsequent paragraphs first outline and Section I.B.1 shows in detail, our system is a PTR implying a tupel of TS**(X.i).n)**'s**¹⁴⁾**, and we use two different coordinate systems for presenting its TT.p resp. its prior art RS over them, namely the D- and B-level coordinate systems, which are defined by the two sets of D- and B-level concepts. Then any point in TS(PTR) represents either a state of an embodiment of TT.p or e.g. of a "plcs-closest" anticipation combination of TT.i's, Q**^{plcs}**-AC, i.e. such that its Q**^{plcs}** is minimal.

For a PTR, its concepts are identified by the FSTP user for his description of all properties of its TT.p's **X'**s by their attributes i.e. **X**).**n**'s - other concepts are inadmissible - i.e. are prerequisites of stating PTR's **X**.**i**).**n**'s. Prior to stating these **X**.**i**).**n**'s these properties are disclosed in natural language and/or graphics of the resp. document.i**¹⁾**.

The terms/notions used by these original disclosures are called the **"disclosure level, D-level"** of facts presentation and define the **"D-attributes, D-X.i).n"** referring to **"D-concepts, D-C.k"** values. The user has some flexibility in determining the D-level of facts presentation. We focus on PTRs, the **D-X.i).n**'s of which are definable as conjunctions of simple attributes, i.e. any such summand refers to just one D-C.k (see Sections II.B and III).

Solving a PTR problem often requires an additional level of its facts presentation, called **"B-level"¹⁰⁾.** It presents the TT.p's properties as binary attributes referring to only a single B-concept. I.e., solving the PTR problem often requires transforming "D-attributes, **D-X.i).n"** (referring to **"D-concepts, D-C.k")** into **"B-attributes, B-X.i).n",** being conjunctions of binary attributes, each referring to only one binary concept **"B-concept, B**-**C**.**k**', and any **B-C.k** being referred to by only one such binary attribute. This then is called **"B-summand"** and equates **B**-**C**.**k**.

This transformation is here prescribed by the D-level presentation of the PTR, namely: Take as **B**-**C**.**k**'s the summands of its **D-X).n**'s¹⁰⁾. It may leave some **D-X.i).n** and **D-C.k** unchanged and would just rename them**¹⁰⁾**.

Any B-concept gets two names alias id's, as shown by FIGs 2c-e: Its **"FSTP-name/-id"** being a uniform string **B**-**C**.**k**, k=1,2,3,... (as just used), while its **"TT.p-name/-id"** is a short-self-description of its meaning.k**¹⁰⁾**. These meanings ought to be agreed-on, too, as any **D-X).n** is made up - using elementary logics only - from agreed-on **D-C.k**'s and document.p's disclosures (as interpreted by the skilled person, whereby disagreeing is unlikely, if the summands of **D-X).n** are very simple, what seems to be the case with many TT.p's).

The epistemological difference between both levels is: The unavoidable D-level of a PTR is totally focused on first grasping correctly its TT.p (see Sect. II.A.1.1-2), while the B-level strives for the simplest and clearest presentation of all technical distinctions between fundamental facts of the TT.p's and of RS. I.e., **the D-level focuses on matters, while the B-level focuses on the relations between these matters⁵⁾.**

The D- as well as the B-level lead to the notions of (D/B-) "plcs/pmgp-height of TT.p over RS" - though Section I.A.5 explains that the D-notions may come with several mental problems hidden in their natural language disclosures**⁵⁾** of **D-X.i).n**'s, rendering its D-Q**^{plcs}**/-Q**^{pmgp}** questionable. I.e.: The B-level is superfluous, if it can be proven on the D-level already that these D-level problems don't exist there - in hindsight often possible.

Today only the D-level of facts presentation exists in a PTR's (non)obviousness analysis. Thus the Graham facts' informal presentations often are interpreted only very rudimentarily - which often is unavoidable if only the natural language is used**^{5),15),16)}**, notwithstanding its interpretation by pertinent skill (see Sections I.C-I.E). Namely: The mental intricacies of PTR's D-level presentation may remain not noticed, implying judicial defaults. These may be avoided by the FSTP's B-level of a PTR's facts presentation. It namely presents the PTR problem - instead over its D-level's plain natural language - over its B-level, where the natural language is extended by the just explained agreed-on TT.p specific terms/notions. Hence, these now can be chosen as the coordinate system for the PTR presentation, and additionally the attributes over them of the PTR's X's are conjunctions of B-summands - which dramatically simplifies this PTR's analysis (as shown in Section I.A.5).

**I.A.5** - **Reducing a PTR Problem's Complexity and Further Key Terms/Notions of the FSTP Technology** For most PTRs, its attributes **X.i).n -** specifying only **RELEVANT** distinctions between its TT.p and TT.i combinations - are simple, as they describe these distinctions only. Thus **X**.**i**).**n**'s need not describe the complete functionalities of machines realizing the TTs, but only those functionalities being distinct in the TT.p from TT.i combinations.

If the abstraction from this bulk of properties of the TTs irrelevant for the FSTP analysis is not performed - i.e. if one does not resist everybody's temptation to specify all elements/attributes of the TTs, which were necessary for building functioning TT.p-/TT.i-machines based on these **X.i).n**'s, a here not existing objective - one is inevitably trapped by the sheer endless process (vastly being based on skill**¹⁾**, and not at all on the PTR documents' explicit disclosures**²⁾**) of determining such **X.i).n**'s. This is dependably not manageable in plain natural language, as known from HW/SW system specification and also more fundamentally**⁵⁾** - and in the end often irrelevant anyway.

Therefore, these formal fundamental attributes **MUST** ignore the bulk of these TT-realizing machines' elements/properties/concepts - namely all those elements/attributes/concepts of the TTs of a PTR, which do not contribute to the minimal total number (over all ACs**¹⁴⁾**) of its plcs-based (D/B-) "not-anticipates" relations of its **X**.**i**).**n**'s to peer **X).n**'s: As they are irrelevant for the value of its (D/B-) Q^{p}**^{lcs}.** This is explained in the following paragraphs.

Up-front: The outcomes of applying these plcs-based notions to a PTR may depend on the
▪ interpretation of its patents, i.e. the determination of the meanings of the **X**.**i**).**n**'s disclosures in the resp. specifications**^{1),2),14)}** (which, in the EPC, must not contradict the meanings of their terms in their resp. claims) and/or
▪ definition of the ants relation (e.g. in an NPS, which is independent of the above particular PTR's analysis).

For a PTR, a TT.p's property/**X).n** is called **"potentially relevant" -** up to plcs - iff its RS contains a TT.i
▪ which ex- or implicitly**¹⁾** discloses an **X'.i).n'** which ants **X').n',** and
▪ for another **X).n** this TT.i ex- or implicitly**¹⁾**
   ∘ either does not disclose a peer **X.i).n** at all (or even excludes it),
   ∘ or discloses a (sole**¹²⁾**) peer **X.i).n** which not-ants **X**).**n**,
   whereby this property/**X.i).n** must be defined only so far as to guarantee this relation (see Section II.C).
Otherwise **X).n** is called **"irrelevant"** and excluded from PTR's further analysis.

Six remarks as to the notion of relevance of an X).n (alias **X.0).n)** of TT.p (alias TT.0) in a PTR analysis:
**i)** In the EPC an ex- and/or implicitly**¹⁾** disclosed **X.i).n** must not contradict a main claim.i (see Section I.B.1).
**ii)** By this definition, a TT.i is irrelevant for a PTR's FSTP analysis, iff no **X.i).n** anticipates its peer **X).n.**
**iii)** The notion of "potential relevance" of an **X).n** is plcs-based, hence deals with only a necessary precondition for **X**).**n**'s increase of the value of Q**^{pmgp}**, which need not be sufficient (see Section I.B.2). The same applies already as to Q**^{plcs}**, if the plcs-independency of **X).n** is not assessed (see below).
**iv)** If some **X).n** is a conjunction of an **X).n'** and an **X).n",** and the latter are anticipated only by **X.k').n'** and **X.k").n"** of TT.k' and TT.k", with 0<k'≠k", then **X).n** is potentially relevant**^{14).B}**.
**v)** The question of potential relevance of an **X).n** is decidable by the FSTP test either interactively with the FSTP user or automatically on its own - the latter iff all **X**.**i**).**n**'s are logically processable automatically by it.
**vi)** Which **X**).**n**'s are potentially relevant in a PTR analysis is not derivable from its TT.p alone, but is depending on its TT.i's. I.e., with any document.i added to RS an additional TT.p property/**X).n** may become potentially relevant. Thereby it may turn out that this ex- or implicitly^{1**)**} disclosed property/**X).n** of TT.p
   o has been already a potentially relevant but not yet noticed property of TT.p within the original PTR, and/or
   o limits TT.p as to one TT.i (of its original or expanded PTR) by TT.i not disclosing or even contradicting it. Thus, the number of potentially relevant properties of the PTR may increase iteratively, as a document is added to RS as well as by recognizing an additional distinction between the TT.p and the prior art of RS (e.g. due to rewording the **X).n** and thereby detecting this distinction, i.e. improving the understanding of the PTR problem).

For a PTR, a TT.p's property/**X).n** is called **"noticed" -** independent of its disclosure being ex- or implicit, i.e. of its being spoken out in the wording of document.p or not - as soon as the person of pertinent ordinary skill recognizes it to possibly be potentially relevant. Whether any one of TT.p's potentially relevant **X**).**n**'s is noticed, in the FSTP analysis of a PTR, is decided by the FSTP user. Today the probably best way to assess this decision is to try out alternative wordings describing the distinctions between the TT.p and TT.i's, for discovering by this redundancy not yet noticed and possibly potentially relevant **X).n**'s.

A potentially relevant **X).n** is called **"actually relevant"** - for short just **"relevant" -** iff X).n is not plcs-implied by at least one **X**').**n**' (see Section I.B.1). For a PTR, its set of all potentially relevant **X**).**n**'s may contain different maximal sets of relevant **X**).**n**'s (potentially automatically determinable by the FSTP analyzer). The resp. remaining **X**).**n**'s then are irrelevant (see above). Here is of interest only that this plcs-implication problem of **X**).**n**'s often is easily solved if the PTR is presentable on a B-level, as then any **B-X).n** equates to exactly one **B-C.k** (see above) and their independency of each other ought to be easily verifiable by the person of pertinent ordinary skill.

Note: The impact of a PTR's relevant **X).n** on its technical secondary creative fact may be all decisive, as not noticing it may - due to various pmgp reasons (see Section I.B.2) - render its TT.p obvious over its RS**^{14).F}** and hence void its patent. Thus, if challenged, this patent's owner must strive for identifying and presenting the complete set of all its relevant facts. On the other side: A court's refusal to consider a relevant **X).n** would, in many countries, violate this owner's constitutional rights.

For a PTR its ANC matrix - just as an AC**¹⁴⁾** over the TT.i's of its RS - is called **"plcs-independent",** iff all **X**).**n**'s of its TT.p are relevant. I.e.: The plcs-independency of the ANC matrix and of any AC is here defined over the set of TT.p attributes - no attempt is made here to define their plcs-independency "as such". As mentioned above, already, a PTR's plcs-independent ANC matrix need not be unique, neither on the D- nor on the B-level. Yet, over its finite number of plcs-independent ANC matrices, the value of Q**^{plcs}** is by definition minimal**¹⁴⁾**.

A PTR's B-level facilitates its analysis dramatically, in particular for very innovative TT.p's. It namely
▪ guarantees simplicity, correctness, and completeness (as to all noticed properties of its TT.p) of its determination of the PTR's Q**^{plcs}**-value, and
▪ provides, by its Q**^{plcs}**-PS, the only paths to be checked for the existence of pmgp⁻, i.e. for Q**^{pmgp}** < Q**^{plcs}**. As for a very innovative TT.p there is no pmgp⁻ yet**^{14).E}**, it holds for any of its PTRs: Q**^{pmgp}** >= Q**^{plcs}** (see Section I.B.2).

I.o.w.: Ignoring pmgp and determining for a PTR first its technical plcs-fact provides an until now unknown insight into the structure of its obviousness problem: It namely exposes clearly that plcs identifies the necessary conditions for thoughts to indicate its (non)obviousness, and - on top of this indication - pmgp determines sufficient conditions for them to this end. The patent law literature until today does not know the so prescribed way of structuring the set of all reasonable arguments about a PTR, which enables the FSTP Expert System's functionality.

Five remarks to the above terms/notions, in particular to "plcs"/"pmgp" and "D-/B-level", end Section I.A.5:
**vii)** Here the pmgp-comprises only skill, science, precedents (see Section I.B.2), plcs comprises "absolutely elementary pragmatics", such as common and elementary knowledge of sciences/engineering/mathematics/... - and pmgp⁻ may be varied to apply only to certain q-cMs, which would affect pmgp⁻-independency.
**viii)** One might be tempted to view plcs as being technical and pmgp as being nontechnical, as pmgp does not contribute the plcs-fact, but just qualifies 1-cMs. This view were wrong, as 1-cMs (i.e. the basics of the plcs-fact) need not be technical (see Section I.A.6), while pmgp may be technical (see Sections I.B.2.).
**ix)** On top of plcs and pmgp there are other kinds of patent pragmatics currently developing rapidly, e.g. the "patent securitization" and the "TT.p inducement" pragmatics. Also their potential contributions to a PTR's analysis would depend on its large Q**^{pmgp}** value and may complement each other, whereby for a patent portfolio
   o patent securitization pragmatics defines a measurement function of the patents' profit generation potential and integrates these potential values over the portfolio's patents, and
   o patent inducement pragmatics implies on their securitization pragmatics a positive impact (as making them topical within their lifetimes) as well as a negative impact (as making them noncreative due to the ordinary course of technical development) - which in return affects the above securitization measurement function.
**x)** The transformation of a PTR problem to its B-level is scientifically virgin soil: Hitherto, transformations of a problem from a coordinate system to another one, e.g. in physics, took place to commonly known, pre-existing coordinate systems (see Section I.E) - not to a coordinate system, which only is defined by the problem itself.
**xi)** Most of the above notions are unknown or left unclear in the patent law literature, although each of them is crucial for having a chance to understand the intricacies of the (non)obviousness problem: Eliminating one of them from a discussion of this problem fences it into the plain natural language and deprives it of precedents based structure inherent to it - and hence renders it back to obscurity**^{5),15)}**. Putting this the other way around: These terms/notions belong to the fundaments of the emerging "patent law technology", two supporting columns of which are outlined here, taken care of by the 1. and 2. center of knowledge transformation (see Sec's I.A.3/I.H).

**I.A.6** - **The FSTP Expert System in the Light of Recent EU/US Precedents** Identifying pmgp⁻ and plcs-independency of a PTR's ANC matrix must not be misunderstood as the FSTP Expert System's test of this PTR were
**i)** practicing the **"*contribution approach*"** to patent interpretation - see EPO's "OPINION of the Enlarged Board of Appeal", case G 03/08, 12.05.2010, Sections 10.4-10.13 - for determining the "principle of the invention" or
**ii)** delivering just "... ***an abstract theory, described by** a* ***mathematical equation*",** as discussed by the US Supreme Court in its Bilski decision, 28.06.2010, rejecting the exclusivity of the "machine or transformation, MoT" test as indicator of eligibility for patenting of an invention.

The contrary is true for the FSTP Expert System as to both decisions, the EU and the US one.

**As to i):** The FSTP Expert System practices a priori in its analysis of a (plcs-independent) PTR the "holistic approach" as understood by this opinion of the EPO - the FSTP's potential reduction of a PTR's plcs-fact to its pmgp-fact is explicitly confirming this holistic view, not the "contribution approach" view. The FSTP analyzer namely recognizes any plcs-independent whatsoever property of the TT.p, including an **X).n** being a conjunction of attributes **X**).**n**' and **X**).**n**", also if both are anted by prior art document.k' and document.k" (see Section I.A.5.ii)). As opposed to that, the contribution approach to analyzing a TT.p over its RS may omit, right from the beginning, this **X).n** (as being anted by RS), and then fail to identify **X**).**n**'s both properties of TT.p as being relevant in this PTR.

The reason for this notional deficiency of the contribution approach to patent interpretation is that it mixes up the notions of plcs and (negative) pragmatics, pmgp⁻. It thus ends up with considering as legal to remove - right at the beginning of its patent interpretation - at least one of **X**).**n**'s properties from its PTR's plcs-fact without any rational justification for this consideration. I.e., it falls back to before rationality took over control in arguing, by using (questionable) feelings concerning the creative values of isolated contributions to an invention, those by **X).n** being some of them. Admitting a priori feelings as to such isolated contributions is something definitively different from the clearly definable/defined pragmatics, which the patent law generates resp. is based on (see Section I.B.2).

I.e.: The contribution approach's not determining all relevant plcs properties of a TT.p over the prior art, first, invites the flaw to simply skip the necessity imposed by rationality of proving the existence of pmgp⁻, i.e. to abstain from deciding by vague feelings - which the FSTP test bars by its insisting in the holistic view of a problem.

**As to ii):** The FSTP Expert System's 2. center of knowledge transformation namely "... *instructs the* use of *this* <FSTP> *analysis technique to help establish some of the inputs into the equation* (see page 3 and pp. 12-15)", whereby this "*abstract theory, described by* a *mathematical equation"* is underlying the FSTP ES's 1. center of knowledge transformation. I.e.: It is impossible to reduce its functionality to only this *"abstract theory",* as the functionality of its 2. center of knowledge transformation is brand-new and in no way related to pmgp.

But these reductions would be indispensable in the argument that the remaining functionality of the FSTP Expert System is just that of its 1. center of knowledge transformation. Its impossibility excludes stating that the FSTP ES is just an abstract theory, a mathematical *"equation",* its TT.p's technical secondary creative fact. I.e.: The FSTP ES is eligible for patentability - not meaning, the functionality of the 1. center, as such, were not patentable.

This 1. center namely is a "tachymetric survey instrument (epistemologically comprising even some kind of creation processes)", i.e. applicable not only to determining some point's elevation over its surrounding, as usual. But it is an HW/SW tachymetric survey instrument determining for a PTR's TT.p the semantic and creative elevation over its surrounding RS (see the middle of Section I.E), in that it transforms the verbal disclosures of the elevations of this PTR's TT.p over its RS's verbal disclosures of height into the values Q**^{plcs}** and Q**^{pmgp}** (describing the TT.p's semantic/pragmatic elevation over RS). It thus is a truly innovative tachymetric survey instrument, in that it also transforms these disclosures into all shortest paths leading from this PTR's RS⁺ to its TT.p, i.e. into all the Q**^{plcs}**/Q**^{pmgp}**-path-sets leading to the TT.p's semantic/pragmatic elevations - automatically resp. interactively.

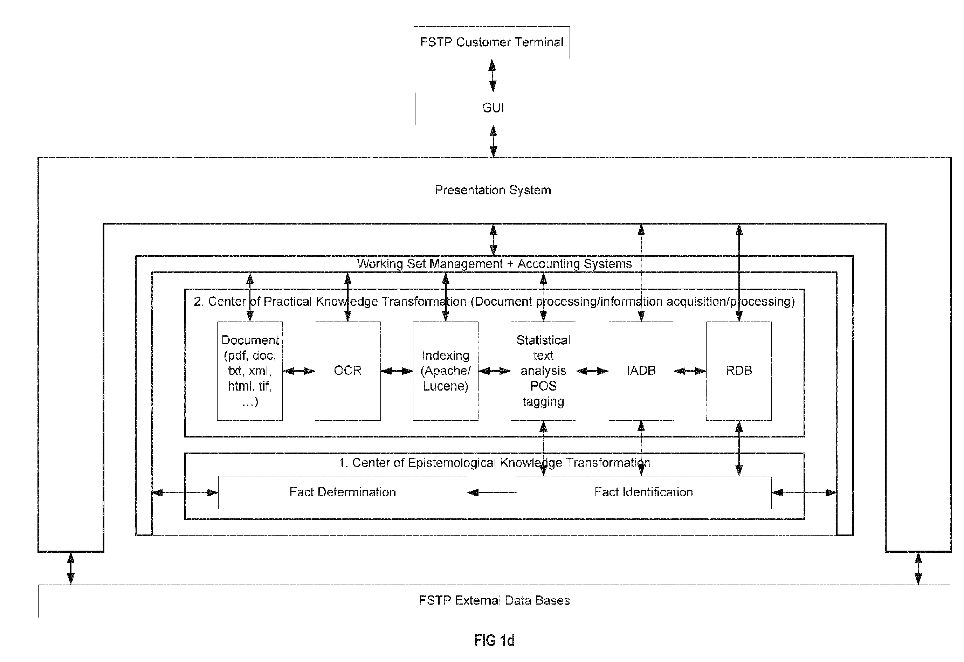

I.e., as shown by FIGs 1d-e, the FSTP Expert System contains two HW/SW machines: On top of its 1. tachymetric machine, a 2. machine is built, which transforms any of the former's knowledge instantly into user comprehensible information. Both these machines never were mentioned in pertinent prior art.

### I.B A PTR's and Its ACs' plcs-/Logics-based ANC Relation - and Classes of pmgp

### I.B.1 - Mathematically Formalizing the D/B-ANC-Relation presented as D/B-ANC Matrix

In any NPS the basic notion is the "anticipates"-relation of the properties of a PTR's TT.i's to the properties of its TT.p, subsequently sometimes abbreviated by **"ants-relation".** The not-ants- and contradicts-relations are evident logical consequences of the former relation, the latter being an amplification of the former one.

Fully leveraging on this **"ants"** notion requires two levels of information in a PTR presentation: The
▪ D-level, necessary for describing its patent's problem to be solved, it's invention actually solving this problem, and the elements of this solution TT.p**^{1),14)}** and their properties - which is given a priori by the wording of TT.p's patent, i.e. by its claims' and specification's terms and notions, though potentially needing some elaborations and expansions by the pertinent skill (and potentially by patent law and its precedents), case depending being more or less unique - and the
▪ B-level, appropriate for determining the plcs- and/or pmgp-heights of its TT.p over its RS, which therefore must *explicitly* state all properties of the TT.p, frequently left *implicit* on the D-level - which must be defined by the FSTP user, normally by a straightforward transformation of the D-level terms/notions as described in Section I.A.4.

Section I.B.1 defines the ants-relation mathematically for the D/B-level, i.e. models solely the elementary semantic construct the patent law is based on, hence called "patent-law-carrying-semantics, plcs", by determining, for a PTR, specific relations
▪ firstly, of its original **X**.**i**).**n**'s to its **X**).**n**'s - this part of the of the ants-relation is presented as ANC-matrix - and
▪ secondly, of some elementary modifications (by 1-cMs) of these original **X**.**i**).**n**'s to the same **X).n**'s,
whereby this construct's components, in turn, are based on commonsense and elementary knowledge of sciences**^{14).D}** only.

Thus, the ants-relation considers solely PTR-intrinsic**¹⁾** properties (comprising prior art properties modified by sequences of 1-cMs), as understood by the person of ordinary skill. On top of the ants-relation, the Section I.B.2 then ads further considerations which are totally PTR-extrinsic**¹⁾**: It evaluates these sequences (of 0,1,2,3,... 1-cMs of prior art properties) by patent-monopoly-granting pragmatics, pmgp, definable on top of this semantic construct.

In terms of the "use-hierarchy" well-known in system design, determining the technical facts indicating the (non)obviousness of a TT.p over some prior art deals with three notional layers: The notions of "patent-monopoly-granting pragmatics, pmgp", which are not interpretable without the plc-semantic notions of the "ants-relation", which are not interpretable without the notions of "commonsense and elementary knowledge of sciences, ceks". I.e.: The pmgp layer uses the plcs layer, which uses the ceks layer.

A PTR's pmgp is legally as important as its plcs, as it is the socio/economic restriction, under which inventing of its TT.p is legally considered creative. Nevertheless, the invention of this TT.p must have been achieved first. Hence, the mathematical definition of the ANC-relation is given first - also as today dealing with solely plcs is a plainly mathematical activity, which does not yet apply to dealing with pmgp today.

Upfront two remarks/reminders (as to the D-/B-presentation levels of facts) are important:
▪ Reliably checking for and exactly removing from a PTR's D-presentation any plcs-dependencies may be difficult due to the inappropriate facts presentation on the D-level, e.g. due to D-attributes referring to several D-concepts (as frequently is the case in the natural language disclosures of a TT.p's properties in document.p). The B-level shall "refine" the D-attribute presentation of TT.p as explained in Section I.A.4 - using only commonsense/elementary-science. I.e.: It is not this transformation of **D-X).n/-X.i).n** into **B-X).n/-X.i).n,** which requires a person of pertinent skill, but this skill is ultimately required, first of all, for getting TT.p correctly (see**^{14).F}** and Sections II.A.1.1-2). Thereby the B-level supports assessing that this very first step of a PTR's FSTP analysis is executed correctly and completely, by enabling and requiring a redundant description at least of the TT.p based on a different set of TT.p-based concepts (see Section I.A.4).
▪ Already initially translating the original natural language disclosures of TT.p into a restricted natural language, such as ACE (see Sections I.C and I.E), should also support this assessment by providing redundancy of a quite different kind (than that of the above transformation of the D-ANC into the B-ANC matrix) - but this initial translation of the D-disclosures to e.g. ACE is currently not considered as a necessary step (see Section III).

The below definitions apply to the D- just as to the B-level (where they are particularly simple). They are based on a series of assumptions generally accepted in a (non)obvious analysis (though sometimes being problematic), such as: not considering time (i.e. a TS(**X.i).n**) does not change by itself in time) and/or limitations unavoidable in any embodiment of an AC (and hence making this limitation void as being part of skill). Not making them may require a more complex definition of the ANC relation, than the following simple one (see Section III):
▪ **X.i).n** ants **X**).**n** iff TS(**X.i).n)** is non-disjoint to TS(**X).n).**
▪ **X.i).n** not-ants **X**).**n** iff TS(**X.i).n**) is disjoint to TS(**X).n).**
▪ **X.i).n** contradicts **X**).**n** iff **X.i).n** not-ants **X**).**n** and if there is a q-cM of **X.i).n**
   such that **X**.**i**).**n**/mod(q-cM)) ants **X).n** then holds TS(**X**.**i**).**n**/mod(q-cM))=0.

These simple mathematical definitions may be straightforwardly expanded to apply also to TT.p and AC**¹⁴⁾**, both taken as the resp. tupels of their attributes - AC being an element of RS⁺, i.e. comprising **X**.**i**).**n**'s from one or several TT.i's - by the definitions**¹⁴⁾**:
▪ AC ants TT.p iff TS(AC) is non-disjoint to TS(TT.p).
▪ AC not-ants TT.p iff TS(AC) is disjoint to TS(TT.p).
▪ AC contradicts TT.p iff **X.i).n** not-ants **X**).**n** for one **X.i).n** in AC and if there is a q-cM of **X.i).n**
   such that **X**.**i**).**n**/mod(q-cM)) ants **X**).**n** then holds TS(TT.i/mod(q-cM))=0.

These mathematical definitions of the elements of the ANC matrix may look complicated only at the first glance: This is namely just elementary logics and set theory. Nevertheless, these formal definitions precisely represent the meaning, which anybody intuitively associates with the ANC relation between a PTR's prior art RS and its TT.p as determined by patent law and precedents. So far it seemingly was never stated that precisely**¹⁴⁾**, but only in natural language, i.e. loaded by its intricacies**^{5),15)}**.

Next, the lingering question is clarified, whether the technique of FSTP analyzing a PTR might be put into jeopardy by pmg pragmatics, as it may "devaluate" Q**^{plcs}** by pmgp⁻ - an exemplary reason being that today pmgp and in particular pmgp⁻ it is not yet definable mathematically as the plc semantics above, i.e. the ANC relation. After having stated already that for very innovative inventions there is no pmgp⁻ at all, Section I.B.2 goes further in eliminating such concerns by showing that pmgp is nothing obscure but materially clearly structured. Section I.M finally outlines that determining the impacts of pmgp as a whole should eventually become definable mathematically and even automatable.

### I.B.2 - FSTP Support for Dealing with Potential pmgp-/pmgp⁻-Impacts on a PTR's plcs-Fact

Continuing the above: As to the US Supreme Court's Graham/Deere decision, and more explicitly articulated in a whole series of more recent German BGH decisions**²⁾**, for a PTR the number Q**^{plcs}** of not-ants or even contradicts plcs-relations between its prior art and its TT.p must be >=2, thus being a necessary indication for its TT.p's (non)obviousness over its RS**^{1),14)}**. Thus, Q**^{plcs}** has been named, here, the **"patent-law-carrying-semantic height**" alias **"plcs-height"** of the PTR's TT.p over its RS, whereby the indicativeness (of this value of Q**^{plcs}**) increases with increasing values of Q^{p}**^{lcs}.**

But, this necessary (non)obviousness indication of a patent's TT.p is frequently not sufficient for granting it protection by patent law: There may be also **"patent monopoly granting pragmatics, pmgp"** indispensably to be taken into account. pmgp represents in any NPS the national socio/economic principles underlying the idea of "patent monopoly granting" to inventions/TT.p's - here assumed to be known. By recognizing pmgp, the resulting Q**^{pmgp}** may become smaller than, equal to, or larger than the Q^{p}**^{lcs}.**

The even further reaching jurisprudence aspects of pmgp are outlined in Section I.M, while this Section I.B.2 deals solely with the possible impacts of pmgp on a PTR's Q^{p}**^{lcs}.** Its Sections I.B.2.a-d briefly elaborate on the 4 potential kinds **a)-d)** of pmgp, before Section I.B.2.e describes the FSTP Expert System's functionality enabling its user to get rid of any uncertainty as to any potential pmgp impacts in a PTR's FSTP analysis, though it does not show a kings' way out (as currently none exists).

One result of this Section I.B.2 will be: In a PTR's FSTP analysis pmgp always comes along with one or several 1-cMs, and hence any potential reason for a pmgp impact on its plcs-fact is detectable automatically by the FSTP and then may interactively be reduced or increased, depending on whether it is negative or favorable for the inventor of its TT.p (see Section III). This implies that - while still developing a PTR's TT.p - in its FSTP analysis any pmgp impact on its plcs-fact may be managed interactively by the FSTP user by creating additional plcs-properties of its TT.p potentially achieving an effect intended by him (see Section I.A.6.**i)**). Thus, the FSTP Expert System supports hedging patents at issue to a degree unthinkable so far, e.g. by making use of a copyright. In addition, potentially applicable items of negative pragmatics may be disguised as a further document.i expanding RS, thus making**¹⁴⁾** its impacts traceable automatically.

Section I.B.2 talks only about the potential pmgp impact on a PTR's technical secondary plcs fact. Yet this implies that this impact affects the technical secondary basic fact the same way - making extra comments obsolete.

The below wording "Potential Q**^{plcs}** devaluation" is just another way of putting the above said as to the potential reduction of the indicativeness of a PTR's plcs-fact by pmgp⁻.

Finally: In the following the "NPS" or similar (see Section I.M) would often be boring and then is omitted.

**I.B.2.a) - Potential Q^{plcs} Reduction by Elementary Engineering/Natural-Law** Fact(s) - No True pmgp There may be engineering and/or natural-law facts inherent to the problem to be solved by a PTR's TT.p and/or to the TT.p, which are neither TT.p-pertinent skill nor commonly known, but yet create plcs-dependencies between the properties/limitations disclosed for TT.p - e.g. implied by any one of TT.p's implementations or by limiting the use of the TT.p such that some natural law enforces at least one plcs-dependency between the properties/limitations disclosed for this TT.p.

A simple example of this kind of pmgp affecting a PTR's plcs-fact reads as follows: Its TT.p discloses a testing apparatus for drilling holes into the walls of old oak barrels for getting probes from their contents, the apparatus being heated externally - by some electro technical ad-on feature to its drill - such as to assure that the holes' borders are totally sterilized, while a barrel's external surface may be organically dangerously contaminated in a way making disinfection by a chemical substance unreliable. Though no similar electro technical ad-on feature to the drill of a testing device is known from testing devices of contents of old oak barrels, an attack on this invention could maintain that it is not new and the electro technical ad-on feature to the drill is just gimmick: Due to physics any drilling oak walls namely implies the drill would be heated up externally, and due to chemistry this would achieve the same sterilization of the hole's border.

Such trivial common-sense/engineering/natural-law insights here is part of determining the PTR's plcs-fact, i.e. establishes no risk by pmgp - hence it is not considered as pmgp, at all, i.e. not as "true pmgp".

**I.B.2.b) - Potential Q^{plcs} Reduction by the NPS - Being True pmgp** The regulations of an NPS (comprising a nation's patent laws and its Highest Courts' precedents) may be provided to the FSTP Expert System logically modeled as NPS ontology and then automatically control - under the supervision of the FSTP user - all decisions of the FSTP analyzer (see Section I.M). But national courts need not approve the FSTP's way of applying their resp. laws and/or their precedents (as modeled by this NPS ontology) and then deviate either from what this NPS ontology has modeled or from how the modeled NPS has been applied to the PTR at issue.

Initial NPS ontologies would model only few and simply to describe situations in a PTR's analysis. Therein this NPS-pmgp would enable the FSTP to automatically detect the risk of any pmgp-caused dependency between any of its ACs' ANC relation to its TT.p, i.e. the NPS-pmgp's potential impact on its Q^{p}**^{lcs}.**

A simple example is that of an invented medical drink, as TT.p, which allows for the values of its "application temperature" common concept* only a tighter range, namely "substantially the applicant's body temperature", than prior pertinent medical art's limitations of the truth set of this concept*, which is e.g. just "more than 10 and less than 50 °C". Thus, in terms of plcs, the "TT.p's truth set of the concept*", TS<TT.p-concept*>, is a subset its prior art truth set, i.e. "TS<prior-art-concept*> and TS<TT.p-concept*> are disjoint", i.e. prior-art-concept* not-ants TT.p-concept*. This prior-art-range-attribute must be modified by a 1-cM (of its "application temperature"-concept) such as to change the just quoted N-relation into an A-relation, and therefore this TT.p-limitation on the "application temperature"-concept contributes to increasing this TT.p's Q**^{plcs}** over prior art.

For this example any NPS precedents have set already the following: This pmgp says for the general case that just narrowing down a prior art's range to a therein included TT.p's smaller range, as such, represents a triviality but not a substantial innovation and consequently does not contribute to increasing this TT.p's Q**^{pmgp}** over prior art. But if that document.p discloses together with TT.p a substantial advantage (occurring as a consequence of taking its drink at this application temperature), which does not occur when taking it outside this narrow interval, then TT.p's above N-relation may nevertheless contribute to increasing this TT.p's Q**^{pmgp}** over prior art - in this case this 1-cM is pmgp-independent.

**I.B.2.c) - Potential Q^{plcs} Devaluation by Pertinent Skill - Being True pmgp** Modeling documented skill pertinent to a PTR is quite similar to modeling prior art, i.e. is not a technical problem, just a mass problem. Hereby any NPS considers skill (of the resp. skilled person and/or of PTOs' examiners) as irrelevant if it is nonpertinent (i.e. non-TT.p-enabling) or nondocumented or nonpublic.

But problems arise from the uncertainty, whether pertinent and documented and enabling skill actually ants a TT.p, i.e. whether such an allegation is not only caused by language intricacies (see Section I.C).

An exemplary case of this problem is that some nontechnical source of information - e.g. the press releases database of some company (see Section II.C.3) - contains a marketing leaflet announcing in a layman's language a new product for the future, which would solve some problem in a fashion seemingly working similarly to the TT.p, whereby this announced solution were based on allegedly existing skill. This announcement in a layman's language may be taken by a lawyer of an attacker of the TT.p to alleging this marketing document proves the existence of pertinent technical skill anticipating the PTR's TT.p or at least makes it obvious - which then may be shared by a court, as it also uses this layman's language and thus refuses to notice the PTR's TT.p, as technically disclosed by document.p in the pertinent skilled person's language (see Sections I.D and II.A.1.2).

**I.B.2.d) - Potential Q^{plcs} Devaluation by Lack of TT.p Enabling Disclosure - No Additional True pmgp** With this phenomenon of pmgp two quite different aspects have to be distinguished from each other.
▪ The technical expert may come to the unquestionable conclusion that the allegedly enabling disclosures of the TT.p in document.p in reality are only thoughts about its properties, without explaining how they are achievable although this is the fundamental question - then there is no uncertainty.
▪ Otherwise, qualifying a TT.p's plcs-disclosure as being "nonenabling" heavily depends on the pertinent technical qualification of the supposed reader of the disclosures of the TT.p in document.p. While this qualification has to comprise the ordinary TT.p-pertinent technical skill, the particularities of the presentation of these disclosures - such as the engineering principles required for understanding the TT.p (e.g. inventing features of complex system's controlling international communications via telecommunications networks vs. inventing features of screws) and/or the novelty and/or the width of the technical area addressed by the TT.p - may require that this skilled reader has the resp. industrial professional career of several years vs. some handcraft experience. This would imply quite different language levels of those of resp. skill (see Sections I.D-E, I.M, and II.A.1.2) - which would be known by the technical expert, hence required for determining who is to be considered as the supposed reader of the disclosures of the TT.p.
As this type of pmgp seems to allow only a "yes/no" option of confirming the TT.p were disclosed in an enabling way - i.e. not to allow the above mentioned gradual "devaluation plcs-independency" - it is not further discussed, here, for the time being.

**I.B.2.e) - FSTP Support for Eliminating pmgp-Impacts during TT.p Creation or Analysis** Assuming for a moment, all the 4 kinds of pmgp were clearly and completely defined - see below and Section I.M for elaborations on this limitation - it is technically trivial to care for a potential lack of pmgp-independency of a PTR, i.e. to detect and overcome any one of its TT.p's attributes/relations/concepts pmgp-dependencies over its RS. Detecting and overcoming it namely may be postponed until having completed determining the PTR's plcs-fact by its FSTP analysis, which is to a large extent automatically performed**^{10),14)}**, i.e. occasionally perhaps needing the FSTP user's support. Then detecting for this plcs-fact all its potential pmgp-dependencies may again be automatically performed, potentially completely controlled by some appropriate NLS ontology and/or supervised by the FSTP user interactively (see below and Section I.M). And then, potentially again controlled by this NLS ontology and/or supervised by the FSTP user's interaction, the plcs-fact would be "upgraded" and become the PTR's pmgp-fact (by appropriately linking to the former's Q**^{plcs}**-cMs - i.e. to the Q**^{plcs}**-paths of the former's Q**^{plcs}**-PS - the resp. applicable pmgp). I.e.: Deriving from a PTR's automatically determined plcs-fact its pmgp-fact may be automatable, too - if in an NLS there is agreement concerning its pmgp (see Section I.M).

The FSTP Expert System's user interface would model in a straightforward way this just disclosed checking a PTR's plcs-fact for and applying to it, on the basis of an underlying NLS, therein existing and agreed on pmgp. But, this user interface would also enable the FSTP user to intentionally/tentatively ignore and/or exaggerate to arbitrary degrees such agreed on pmgp allegedly being applicable to the PTR. As today it is, by and large, an examiner/expert and eventually a judicial question, which 1-cM paths of its Q**^{plcs}**-PS are impacted by pmgp, this uncertainty will be reduced stepwise (see Section I.M). But, for figuring out what are the consequences of making what assumption on what part of some pmgp allegedly applicable to a PTR, and/or for respective training purposes of the FSTP user in handling the resulting situations, he is enabled to try out all possibilities at his discretion.

If the TT.p is still being created, this flexibility provides to its inventor all the guidance he needs to optimally hedge it against attacks by creating for it additional features, increasing its plcs- and pmgp-heights as needed.

A remark on this Section I.B.2 may be of interest: None of the practical PTRs analyzed so far (in particular all the precedents of the Highest Courts of the USA and of Germany of the last years for (non)obviousness decisions) shows a plcs-fact, which cannot immediately be qualified as pmgp-(in)dependent. All these inventions are by far too simple for complicating the FSTP analysis, as disclosed here. This holds, in particular, for the relatively complex '884 PTR analyzed in Sections II, underlying the cases Cisco vs. Teles (BGH, X. Panel**^{1),2),3)}**, Germany) and Teles vs. Cisco (Distr. Court of Delaware, 24.07.2010, US). In both cases holds: '884-plcs-fact = '884-pmgp-fact, implying a large value of Q**^{pmgp}** - this presently still being ignored by both courts' decisions.

### I.C Remarks on Determining Relevant Attributes D/B-X).n and their Concepts D/B-C.k

Going back, to prior to the above said about identifying/defining a PTR's plcs- and pmgp-facts, the process of determining its TT.p's relevant D/B-attributes **X).n** and D/B-concepts **C.k** requires clarifications.

In a PTR any relevant disclosure/property/attribute **X).n** (see Section I.A.5),
**(1)** assumes in any of its disclosures in document.p some premises underlying it, i.e. this disclosure is based on some underlying notional system it refers to - provided by the D/B-concepts this **D/B-X).n** refers to - the nature of which may be (here still avoiding addressing the D/B-level issue, see Section I.E)
   ▪ either "technical" alias "domain specific", as e.g. a disclosure: "A data transfer technique is suitable for Internet telephony if its delays between caller and callee don't exceed 0.5 sec". Here the underlying reference system alias D/B-concepts is/are provided by the pertinent clear telecommunications-technical skill, saying that such delays are measurable and in a telephone call must not exceed 0.5 sec.
   ▪ or "non-technical"/"non-domain-specific", as e.g. a disclosure: "Cost saving Internet telephony is unsuitable for conveying congratulations as it may hurt the callees' feelings and thus may affect the caller's reputation". Here the underlying reference system alias D/B-concepts is/are not provided by technical skill but by common social knowledge.
   While no doubts can arise with the two preceding examples, in other cases it may be nontrivial qualifying as technical or non-technical the premises alias D/B-concepts underlying some disclosure/property/attribute - and accordingly qualifying the latter. To interpret the significance of technical premises for a TT.p at issue would be delegated, by national Highest Courts, to the competence of their trustworthy, governmentally approved technical experts (as e.g. until recently in Germany) or to their lower level courts (as e.g. in the US and today in Germany, too). I.e., the Highest Courts' judges would decide on their own only on legal issues and on technical issues solely of their proven technical competence.
   This issue gets touchy, if a court does not even recognize that terms of a patent's disclosures - colloquially used elsewhere - therein have precise technical meanings: It then interprets them colloquially, i.e. illegally**³⁾**.
**(2)** must not be optional in TT.p - then it is ignored here (as taking into account options is trivial, see Section III).
**(3)** must not depend on another **X').n'** of TT.p, i.e. must be (plcs) independent in the PTR (see Section I.A.5).

Already this shows: Determining by the FSTP user for a PTR all relevant **D/B-X).n**'s and their underlying D/B-concepts may be an activity all but trivial**¹⁴⁾** - and yet the FSTP thereby must often leave him on his own, as he must make use of the skill pertinent to a PTR (see Sections I.D-E for more explanations).

But: While currently no generally applicable user guidance is possible for performing this activity of identifying all pertinent technical skill based D-attributes **X).n** within the PTR's natural language documents - when starting to interpret a patent - an appropriate DSNL (= domain specific natural language) may support performing this task.

A critical side remark, first, on current such domain specifics: Any NPS has partitioned the total area being subject to its patent law by some categorization system, which identifies its various technical domains of application. This attempt to provide some overview of and orientation in this huge area is by today vastly outdated, misused, and confused. Consequently it has only little to do with the desirable features of any just mentioned advanced DSNL. Thus, the FSTP may operate completely independently of this attempt, though it also can provide the generally known terms matching between this categorization system and a PTR analyzed by it.

More important, as to this aspect, is: For a PTR in an appropriately limited natural language presentation, the FSTP Expert System has the optional capability of automatically translating the PTR's informal into formal attributes, and then semi-automatically stating the plcs-(ir)relevance and -(in)dependence of attributes X).n. See:
▪ "The D/B-levels in the '884 PTR-Problem", Technical Report #1, the FSTP-Project, and
▪ "Aspects of Formalizing a Patent's Independent Facts", in preparation by the FSTP-Project.

These papers discuss the translation of true natural language ex- and implicit skill based informal disclosures/properties/attributes - i.e. of informal fundamental facts, written in true natural language and relying on the readers' familiarity with pertinent skill (and then being rewritten in the restricted natural language ACE, "Attempt to Control English", still being pertinent skill based) - into formal D/B-attributes **X).n/X.i).n** and their underlying D/B-concepts, i.e. logically absolutely equivalent fundamental formal facts, enabling the FSTP to automatically determine the **ants-/not-ants-**(/**contradicts**-)relations between TT.i's and the TT.p (see Section I.B.1). These ACE attributes are as close to their PTR's true natural language disclosures as today only possible, if their automatic translation into the formal **X.).n**'s**/X..i).n**'s is required. This automatic translation may enable the FSTP to determine automatically (at least much of) its above D/B-plcs-facts and potentially also its D/B-pmgp-facts determinations - thereby interactively cooperating with the FSTP user, if requested by him or by the FSTP, on any issue and at any time. This need arises unavoidably as even in a single PTR analysis, which concepts are controversial or not may change on both D/B-levels - in particular when starting to establish them both.

### I.D The "Layman-"/" School Class-"/"Skilled Person-"Levels versus D-/B-Levels in any Language

The preceding sections outlined already for a patent's disclosures, that their
▪ impreciseness due to their "informal natural language use" may be reduced by transforming them into a "formal natural language use", and their
▪ lack of focus on the actual PTR analysis being performed, due to being restricted to PTR independent terms/ notions, may be improved by transforming them from the formal D-level presentation to their formal B-level presentation, where "PTR analysis specific terms/notions" are available,
whereby both transformations are vastly independent of each other - and all this thinking is based on pertinent skill.

In particular the latter transformation requires further clarification, as touched on already in Section I.C.(1): While there only the question has been addressed, what the implications are of disclosures being technical or non-technical, this Section I.D elaborates on the legally equally far reaching notional distinctions between the D- and B-presentation-levels of disclosures in patent descriptions, that were emphasized in Sections I.A.4-5, I.B-C and above - namely that the D-level notions are blurring as being PTR analysis non-specific, while the B-level notions are much sharper as being totally focused on analyzing the PTR problem at issue, all presentations being skill based.

The need of this clarification has nothing to do with any specifics of the FSTP, but belongs to specific fundamentals of patent interpretation. These are reiterated, here, as patent court cases sometimes
▪ are confused by the fact that these notional D/B-distinctions may enforce substantially different meanings alias notions of terms in any nontrivial patent (see the final paragraph of this Section I.D and Section II.A.1.2),
▪ in particular if therein a third notion presentation level - on the D- or on the B-level - is addressed.

Understanding/overcoming properly this absolutely fundamental patent interpretation problem has nothing to do with using the FSTP for a PTR's analysis, but first of all with grasping correctly the PTR's TT.p and its TT.i's-before stating facts about the technical distinctions between the TT.p and prior art.

This problem is due to the fact that there are 3 different terminological/notional "levels of pertinent professionalism" inherent to any (true/restricted) natural language - enumerated by the subsequent 3 bullet points-whereby any NPS**^{1),2)}** assumes any patent's disclosures are located on the skilled person's level: This language's
▪ "layman's" level of pertinent professionalism (i.e. none, as the terms' notions are those provided by an ordinary dictionary, e.g. by the Webster), the
▪ "skilled person's" level of pertinent professionalism (i.e. all there is, as the terms' notions are provided by the documents used by these skilled persons when doing their every day's work, e.g. in telecommunications technology being the international standards issued by the UN's pertinent consensus making bodies, such as the ISO and/or ITU-T and/or IEC and/or IEEE and/or IETF and/or their national members/companies/..., whereby these technical standards in some cases are totally identical and other cases complementing each other, but notionally worldwide uniquely understood by the persons of pertinent telecommunications skill) - no need to emphasize that, in any language, a skilled person's level of pertinent professionalism must not be mixed-up with the (not needed here) technical expert's language level, as the expert is supposed to know and to be able to asses all such levels of pertinent professionalism of the various kinds of pertinently skilled persons - and the
▪ "school class's" level of pertinent professionalism, on which the authors of textbooks attempt to pick-up their readers/students where they are - with their initial layman's understanding of the pertinent terms and notions - and get/guide them closer to the pertinent skilled persons' terms and notions, e.g. in telecommunications technology one of Stallings' pertinent textbooks (e.g. "ISDN and Broadband ISDN with Frame Relay and ATM"). I.e.: On any such textbook level terminological/notional discrepancies must arise - which, for simplicity, frequently are not clarified in detail, if addressed at all, as on this level they are often considered to be dull subtleties.

According to Highest Courts' precedents in any NPS the professionalism level of the natural language used in a patent is the one of the skill in the art pertinent to the patent's TT.p (e.g. in the USA recently reconfirmed by the CAFC in the case Telcordia vs. Cisco, 20.06.2010, and by the Supreme Courts Bilski decision, quoted above). Consequently, when interpreting the specification and/or claims' wordings of a patent, the terms' notions of the skilled person's language level must be chosen, otherwise nonsense may arise - as shown by Section II.A.1.2.

I.e.: This precedent - emphasizing the need of understanding this distinction in patent interpretation and to use in it the skilled person's language - is sometimes ignored by a court in favor of using, in a patent interpretation, its own level of professionalism in interpreting the patent's natural language, i.e. the layman's natural language level. In other words, a court may feel so uncomfortable with the alleged artificiality of the "pertinent skilled person's natural language" that it simply ignores this legal problem - if it does not even explicitly claim that there were nothing technical with some term/notion of this patent's natural language, and hence no technical skill is needed for determining this term's notion/meaning (see Section I.C (1)). This court then interprets this patent's claims/specification on the layman's professionalism level of this patent's natural language, or at best on some textbook's professsionalism level of this natural language. And it sometimes proceeds this way even against its own certified technical expert's affidavit, which the court had requested from him by asking for his technical facts statements concerning terms' skill-based notions - which then indeed are based on the pertinent skill and hence explicitly state the contrary of the court's layman's opinion as to these technical facts (see Section II.A.1.2).

In telecommunications technology, there are well known examples of this alleged artificiality in the pertinent skilled person's natural language: E.g. a patent's natural language notional D-level term
▪ "connection" is on the skilled person's notional B-level**²⁰⁾** *"An association for the transfer of data ...*" (ISO 7498-1, Section 5.3.1.2, just as IEC/IEEE/ITU-T/US-GSA - being the standardization giants in telecommunications technology - all use the same ISO-OSI-Reference-Model document and hence the same skill-based definition of the meaning of the term "connection"),
▪ "communications connection" is for the skilled person the "application connection" of ISO/... (as for this person, in a "telephone call" application, its "communications connection" is defined to be its "application connection"),
▪ "telephone call" or "Internet telephone call", is on the skilled person's notional B-level**²⁰⁾** defined as "*A call consists of all participants in a conference* <potentially being two only> ..." (IETF RFC 2543, Abstract and Section 1.3, whereby this 1998 definition of a 2543-call reconfirms the above earlier 7498-definition of a connection, holding in 1996 already - meaning a call exists as soon as its participants are defined, i.e. prior to the point in time when its technical realization is actually established (which happens during "call set-up").

While the layman might consider these meanings of the terms "connection"/"communications connection"/"call" to create an unnecessarily broad notion, many years of technical discussions in the above quoted international consensus making bodies have proven that these notions of these terms represent what is required by the skilled person in telecommunications. And as a matter of fact this notion of a "connection"/"communications connection"/"call" is not questioned by any person skilled in telecommunications technology - in particular not its sub-notions of a connection/call first coming into existence before "initiating it"/"establishing it"/"setting it up"**²⁰⁾**.

This proves that, for a patent on some subject area, the pertinent technical skill and its terms/notions are absolutely indispensable**²⁰⁾** for the derivation from its gross/amorphous D-level terms/notions much sharper - as focused on the PTR analysis at issue - its B-level terms/notions according to Sections I.A.4-I.E. Note in particular that these B-level terms/notions focused on the PTR analysis actually considered - here of skill in telecommunications technology (see Section II) - make them implicitly disclose**¹⁾** a whole bunch of "patent extrinsic" B-attributes and B-concepts, as the preceding 3 bullet points just exemplified.

If in a court case on a patent's/claim's meaning and/or scope the court refuses to use the terms/notions of the "pertinent skilled person's natural language", the court is likely to determine this patent's/claim's meaning and/or scope to be significantly different from its meaning/scope as described by the patent's inventor(s) by means of using the pertinent skill level of this patent's/claim's natural language. Impressive examples of the then resulting disaster are the cases Cisco vs. Teles, BGH, X. Panel, 15.04.2010 in Germany and/or Teles vs. Cisco, Distr. Court of Delaware, 24.07.2010 in the USA, as elaborated on in Section II.A.1.2.

### I.E Further Reasons for Formalizing and Transforming a PTR Problem Presentation

Firstly, there is still another epistemological reason for repeated transforming and formalizing a PTR's presentation: Namely the hope to be able to identify and derive more insights into this PTR problem - i.e. its TT.p's (non)obviousness indication over its RS - than known before. This hope is due to an analogous beneficial phenomenon so achievable e.g. in many natural sciences: There it turned out repeatedly that analyzing a problem may be greatly fertilized by formalizing and transforming it to a presentation suitable for this analysis. This Section I.E explains this expectation concerning a PTR's FSTP analysis, as announced above (e.g. in Section I.A.5).

Achieving such new insights into the PTR's (non)obviousness indication problem - by transforming all potentially relevant PTR disclosures in plain natural language presentation (of the skilled person) into logically equivalent but more precise formal meanings (as confirmed by the skilled person) and eventually even from its presentation on this D-level to its B-level - is absolutely new in the sphere of patent law. As said already: In natural sciences and engineering their similar coordinate system transformations alias presentation transformations (see Section I.A.5.x)) are practiced ever since and lead to additional fundamental insights, e.g. in many
▪ celestial mechanics problems: by the many transformations from their original geocentric Euclidean coordinate system presentations (Ptolemaic ... pre Brahe et al.) into solarcentric Euclidean coordinate systems (Kopernikus, Galileo, Kepler et al.) to a non-Euclidean relativistic coordinate system presentation (Einstein et al.),
▪ theory of electricity problems: by transforming their original "real numbers/functions" presentation (pre Gauß) into a "complex numbers/functions" presentation (post Gauß),
▪ elementary particle physics problems: by transforming their original "deterministic" presentation (e.g. Bohr et al.) into a "probabilistic" presentation (Schrödinger, Planck, Heisenberg, Hilbert et al.),
▪ signaling problems: by their Fourier or DCT transformations between "space" and "frequency" presentations.

Here, too, fundamental advantages emanate from transforming the presentation of a PTR's (non)obviousness problem from its original informal plain natural language disclosures/description/presentation into its epistemologically equivalent formal plain natural language D-level presentation into its epistemologically equivalent formal "extended" natural language B-level presentation, whereby all presentations are assuming that their resp. terms/notions are used/interpreted by the skilled person (see Section I.D). Six examples are:
**1.)** Most importantly and all overarching: The Highest Courts' precedents**^{1),2)}** as to PTR problems may be formalized, as these precedents' impacts on a PTR problem's technical facts, determined by its FSTP analysis - indicating its TT.p's (non)obviousness over its prior art RS - correspond 1-to-1 to appropriate 1-cMs of the formal attributes of resp. ACs over its prior art RS**¹⁴⁾**, whereby
**2.)** its D-level attributes focus on assessing that they correctly and precisely present the PTR's informal disclosures, as the person of pertinent ordinary skill grasps the "philosophy" of the PTR's TT.p,
**3.)** its B-level attributes focus on assessing that its disclosures are correctly and precisely taken into account, by the person of pertinent skill for dependably determining its TT.p's properties distinguishing it from its TT.i's (for an improved determination and interpretation of the Graham facts,
**4.)** which requires that these B-level attributes/concepts allow assessing the plcs- and pmgp-independencies of the thoughts underlying these preciser and more dependable facts resp. the 1-cMs**^{10),14)}** they are based on,
**5.)** as they namely are derived by absolutely consequential repeated application of these precedents to a PTR in its FSTP analysis - whereby one such application may be viewed as representing one "plcs-unit" (subject to its plcs-independence) - and thus achieves the substantial improvement of the expressiveness of its classical technical secondary basic fact to the expressiveness of its technical secondary plcs- resp. pmgp-facts, and eventually to its "prefinal/nonaudited" fact (see Section I.M),
**6.)** whereby performing all these transformations today is substantially supported by the FSTP Expert System, may eventually be automatable for most PTRs**^{10),14)}** (see Section I.M).

Grossly oversimplifying these fundamental advantages achievable by these coordinate transformations of the PTR problem, the former may be depicted by using the "tachymetric surveying instrument" metaphor once more (see the end of Section I.A). From the Webster dictionary follows that a tachymetric surveying instrument at some point enables its user to determine the elevation over this point of any other point visible to this system, e.g. of a mountain top surmounting them all. In a PTR's FSTP analysis, one may take - as analogon to all these various reachable points - the combinatorial hull of its prior art, RS⁺. The FSTP analyzer then enables its user to determine by the value of Q**^{pmgp}** the creative elevation of its TT.p over this RS⁺ (and even better, by Q**^{pmgp}**-PS also all the shortest paths leading from potentially different points of this PTR's RS⁺ to its TT.p). The various presentation levels in this FSTP's PTR analysis correspond, in a classic tachymetric surveying instrument, to its use of different lenses, stepwise zooming-in on analyzing the viability of the plcs- resp. pmgp-facts, which increasingly improve the "path sets" from RS**^{+free}** to the TT.p**¹⁴⁾** (see Section I.M).

Finally: The FSTP's PTR analysis leverages, via the above transformations, on two fundamental and long-known insights from IT sciences, in particular from IT system design, namely:
▪ For determining the meaning of a claim's wording (= sentence) - i.e. interpreting it - its "association base" of plcs/pmgp (= skill) is indispensable, as it determines this sentence's meaning^{1**),2)**}. In other words: It has been known for dozens of years by all linguists, language translation technicians, knowledge engineers, ... that the only way of determining the meaning of (= interpreting) a sentence of some known syntax - e.g. an English claim's sentence in correct English syntax (i.e. in the vocabulary and grammar of English language) - is to derive this meaning from this sentence's semantics/pragmatics association base. A claim's legally prescribed association base is its patent's specification/figures (as understood by a person of pertinent ordinary skill).
▪ For a PTR's analysis its properties must be described by as formal attributes as reasonably possible, whereby this transformation must allow a variety of highly redundant interactive checks. Only meeting by the FSTP Expert System this requirement enables it to determine for the total set of reasonable queries - any one questioning some nexus between the technical facts of a PTR being FSTP analyzed - correctly and completely all resp. answers, storing them in the WS of this PTR analysis, and presenting them instantly as needed. The size of this set of queries and all their answers is huge if its TT.p is located on a high level of abstraction/non-visuability/specificity, e.g. integrates a large number of allegedly independent properties concerning **1.)** its technical features, **2.)** making/implementing it, **3.)** using its service by the market as competition to POTS, **4.)** integrating it into a company's/user's networking environment, **5.)** its cost, **6.)** its robustness, ....

### I.F Other Research vs. the FSTP's Integration of Highest Courts' Precedents into its Analysis of a PTR

Section I.F summarizes several decisive differences between the FSTP's "Highest Courts' precedents integrating" innovations as to a PTR's obviousness analysis versus other "no Highest Courts' precedents integrating" research on obviousness. It shows that none of these other academic researches only even recognizes a need of something similar to the FSTP innovations, not to speak of one of them having actually disclosed anything similar - see also Section I.G for further related research. None of all of these efforts aims at achieving an epistemology based real-time patent expert system, as is the FSTP Expert System disclosed in detail in Sections I.A-M. See e.g.:
▪ "Recherche und Prüfung einer Erfindung auf Patentfähigkeit", H. Beyer, GRUR 1986.
▪ "Psychologists' Views on Nonobviousness - Are They Obvious?", J. Davidson and N. Greenberg, 2008.
▪ "The Inducement Standard of Patentability", M. Abramowicz and J.D. Duffy, 2010.

The FSTP analysis takes a different approach to the PTR problem and elaborates on the Highest Court's vague hints at "the number q≥0 of independent**¹⁰⁾** thoughts indispensably required for getting to the TT.p, starting from prior art". It thus creates the innovative notion of a **"q-cM for counting such thoughts",** which leads to the innovative **"technical secondary basic/semantic/creative facts" -** comprising the innovative notions of "basic/ **semantic/creative height q≥0 of TT.p over a prior art RS"** and of "**Q^{basic}**/**Q^{semantic}**/**Q^{pmgp}**-**path**-**sets**" - which provide this (non)obviousness indication in a convincingly quantified and qualified manner (see Sections I.A-E).

I.e.: None of any other scientific efforts ever tried to invent for the PTR problem, what a creative idea could be for it, and hence could not become aware of the possibility of repeatedly applying the notion of a "creative idea" (alias "pmgp independent thought") for determining PTR's "technical secondary creative fact", such that its:
▪ Q**^{pmgp}** = 0 / >0 indicates this TT.p's obviousness / nonobviousness over its RS, whereby the "power" of this indication increases with the value of Q**^{pmgp}** increasing, and
▪ Q**^{pmgp}**-path-set identifies the total set of all Q**^{pmgp}**-cMs for any Q**^{pmgp}**-AC from RS⁺, such that this TT.p is found starting from its prior art RS - i.e. such that there is no other way of arriving at TT.p starting from RS⁺.

Hence, none of them had the faintest idea of the need or existence, for any PTR, of its FSTP B-level for presenting PTR's information (see Section I.A.5), as indispensably needed for making this fact unquestionable^{1),2)}.

### I.G The Use of Ontology resp. Knowledge Engineering Research by the FSTP Technology

In addition to the differences between the other scientific research explained in Section I.F and the "FSTP technology" explained in Sections I.A-I.E - characterized by the FSTP Expert System's innovative epistemological properties, i.e. by its 1. center of knowledge transformation - also a fundamental difference exists between this new FSTP technology and another kind of scientific research, which deals with patent issues as understood by knowledge engineering. The FSTP technology namely aims at solving the epistemological problems arising in determining specific semantical/creative facts within documented knowledge, while these other new technologies of academic research don't care for semantics/pragmatics whatsoever and deal with syntax driven ideas supposedly helping managing knowledge - modeled by ontologies - also if it is focused on the subject area of patents.

Outstanding surveys/papers from this ontology area and the management of their knowledge are:
▪ US Patent 5,694,523, Wical, 1995: Oracle Corp., shows the patentability of such patent oriented inventions,
▪ Patent Application US 2008/0021700 A1, Moitra, 2006: Lockheed Martin Corp.,
▪ "A ... Platform for Invention Based on Ontology and Patent Document Analysis", V.W. Soo, 2005: 9th ICCSCWD,
▪ "Automatic Patent Document Summarization ...", A.J.C. Trappey, 2009: J Syst Sci Syst Eng.

All 4 surveys/papers indicate that the FSTP's epistemological approach to the nonobviousness problem of a PTR accessible/usable in real-time is not even touched elsewhere: None of these ontology research activities would only have considered the specific type of problems arising on the "FSTP Expert System way of enabling the real-time use of all knowledge about a PTR's nonobviousness problem" -whereby this knowledge includes all epistemological insights into the PTR's facts as well as all the specific kinds of contexts providing support needed for resolving this problem dependably and internationally as well as all the interrelations between these epistemological insights and these contexts from which they are derived by the FSTP analyzer - not to speak of thinking about an actual technical resolution of this problem, as provided by the "FSTP Expert System" disclosed by Section I.

Notwithstanding the just explained fundamental differences between the functionalities known from other research and those of the FSTP Expert System, the results from ontology research are related to some practical problems arising also in the FSTP Expert System, which are dealt with by the functionalities of its 2. center of knowledge transformation. The state of ontology research makes it useful for recognizing the relevant disclosures in the PTR and all contexts by automatic textual analysis of all related documents. I.e.: The strong point of "ontology technology" is that it allows providing the global contexts to the FSTP needed by it, e.g. by automatically screening the huge amounts of potential/alleged prior art documents for informal fundamental facts. This allows reliably excluding the relevance of most of them in a patent case, resp. reliably assessing that within the maintained such documents any informal fundamental fact has been detected and properly taken into account. This research may long-term be developed so far that it eventually may make obsolete a good deal of the input the FSTP Expert System today requires to be provided by its user (see Section I.M).

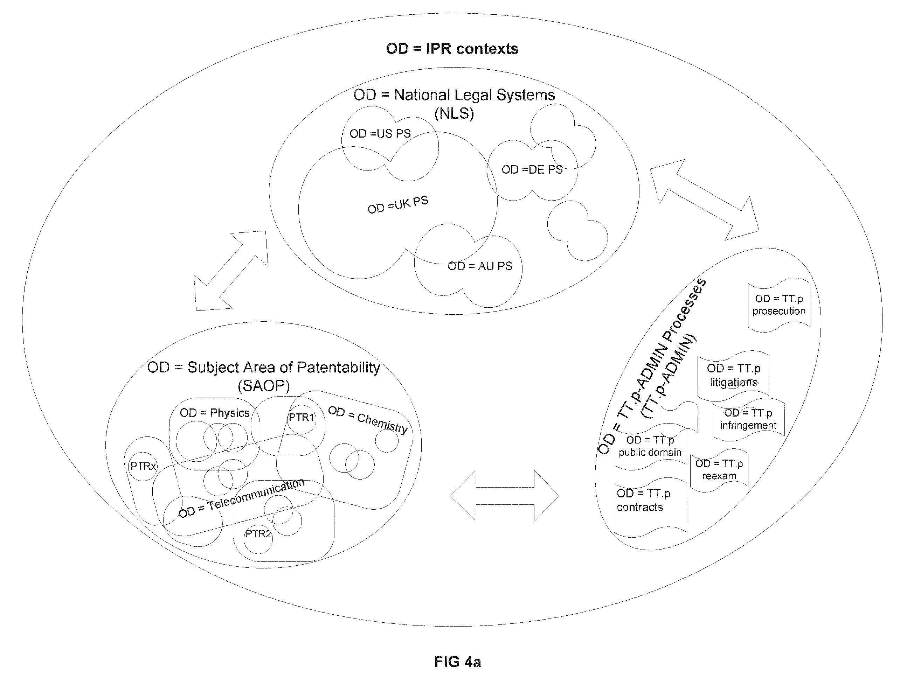

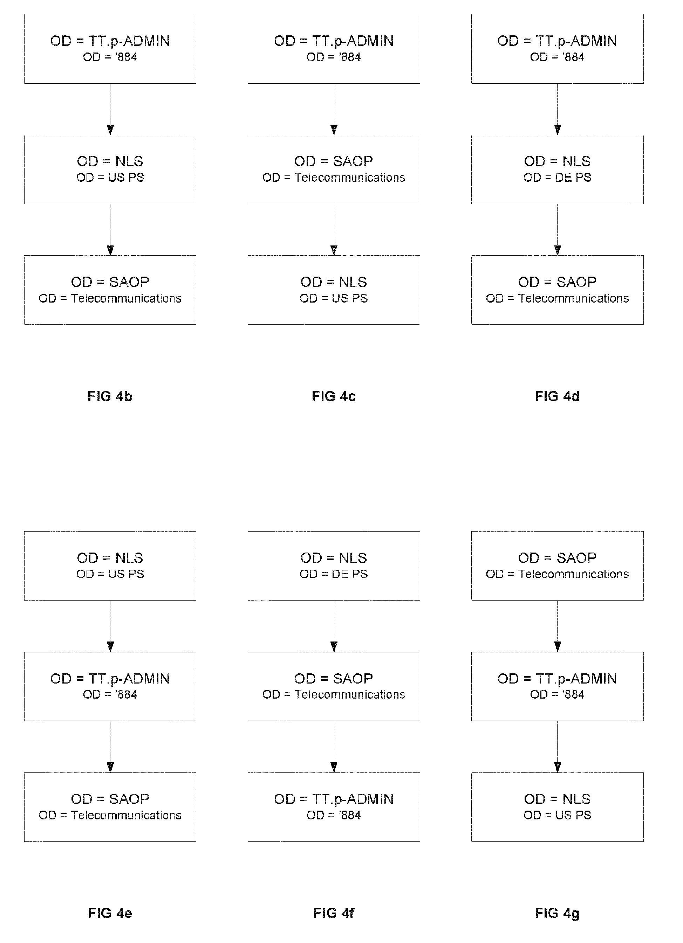

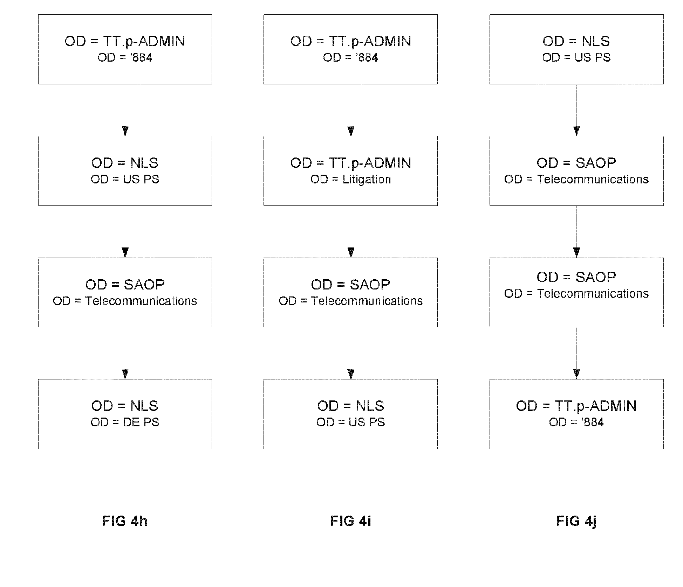

Aspects of using ontologies by the FSTP Expert System are visualized primarily by the FIGs 4.

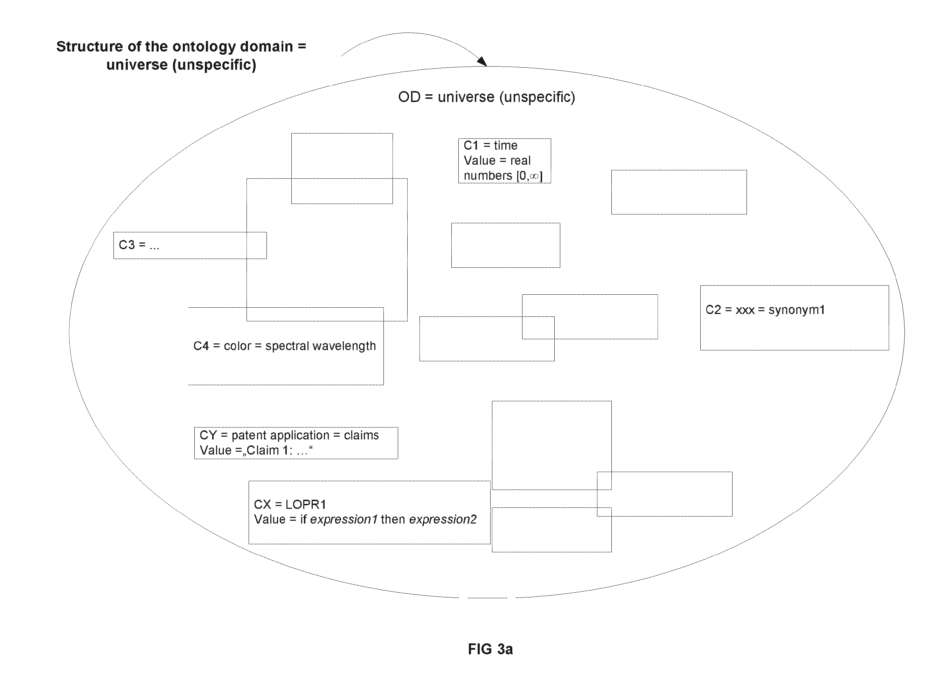

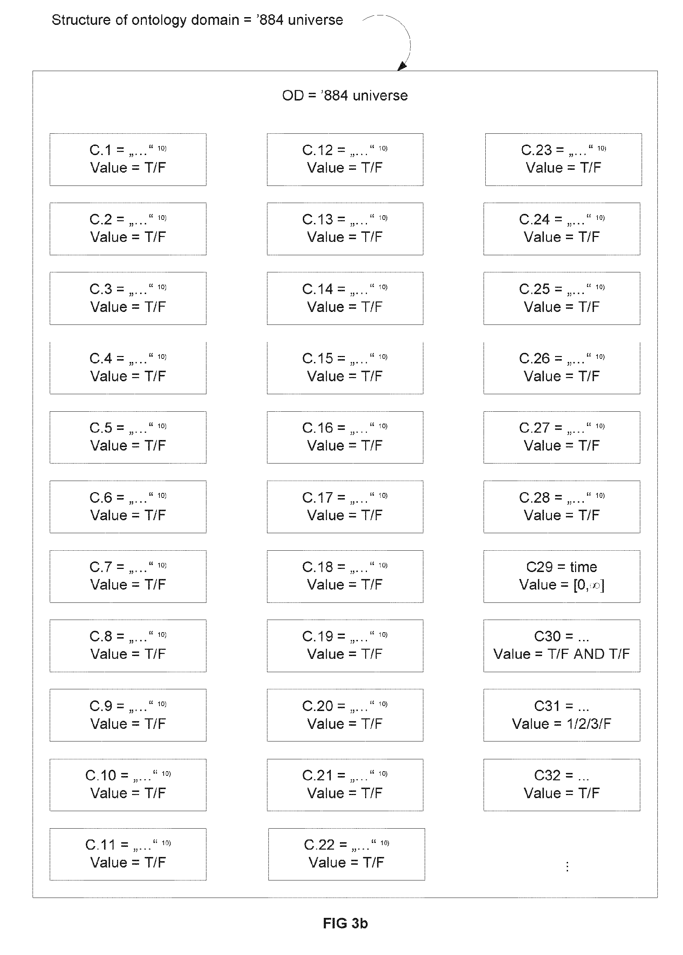

FIG 4a is supposed to show that the FSTP - whenever using it in creating/developing/analyzing/ administrating/managing/... a TT.p resp. its PTR at issue - semi-automatically permanently supports taking into account the impacts on this activity by in particular three contexts: The current global **"national legal systems, NLS"** context (consisting of their Highest Courts' precedents ontologies, including the resp. laws it is based on), the current global **"subject areas of patentability, SAOP"** context (consisting of models of the various subject matters, organized according to the FIGs 2 and 3, comprising their resp. ontologies), and the TT.p-specific **"TT.p administration processes, TT.p-ADMIN"** context (consisting of all TT.p specific documents, including its prosecution and litigation histories ontologies and all related documents) - each establishing an **"ontology domain,** OD" with sub-ontology domains, named/identifiable as shown in FIG 4a. I.e.: Any function of the FSTP Expert System - of its 1. as well as its 2. center of knowledge transformation - on any TT.p-ADMIN may be used in conjunction within one or several NLS and SAOP contexts (see below), unless some management/security function of the FSTP Expert System imposes some restriction.

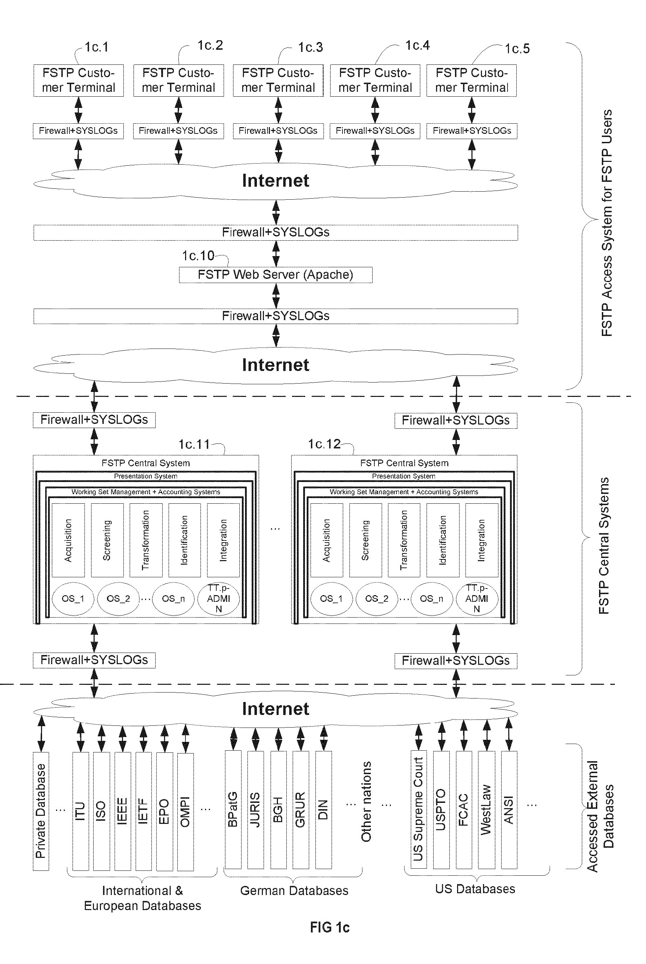

This presentation of context ontologies as separate entities should not be misunderstood as limiting their implementation structures: Their technical embodiments - obviously being database systems or subsystems thereof - may be vastly overlapping each other (i.e. be implemented as one single database) or may be split into even smaller functional entities, whereby each entity may contain only a certain type of ontologies as included in its "mother ontology" and may be implemented as separate database for any one of them. And this conglomeration or decomposition of functional entities respectively their "database engines" again does not imply any particular physically centralized or distributed implementation, as indicated by FIG 1c.

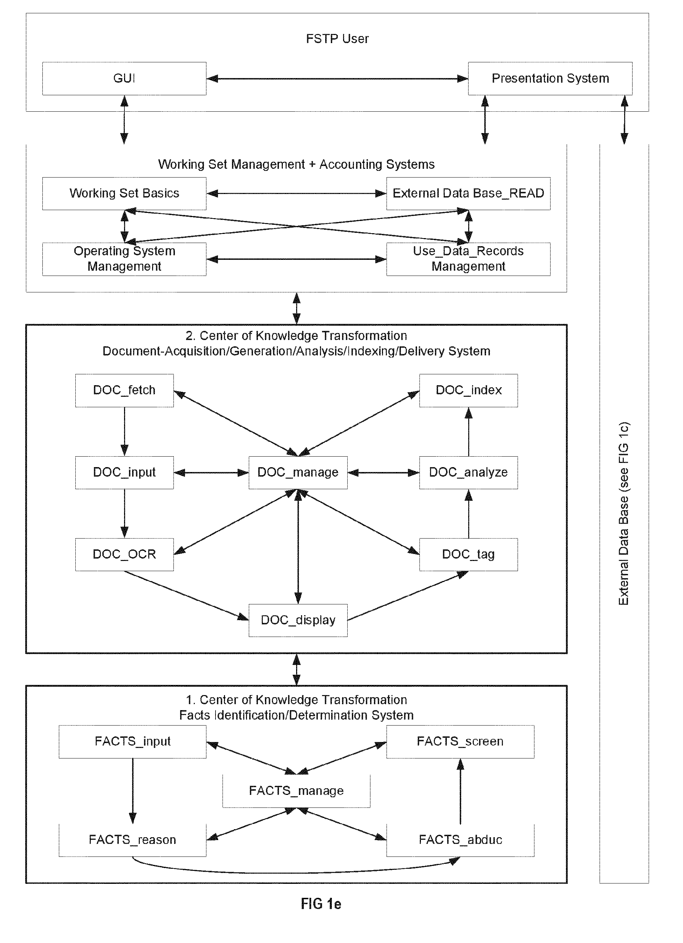

Initially the global context ontologies of an FSTP Expert System would be incomplete, and would be built up stepwise over a period of several years. As opposed to that right at its beginning a specific PTR being FSTP-analyzed may be input completely by its user into its individual TT.p-ADMIN ontology within days, together with all the contextual knowledge about it. In any case, an FSTP embodiment would enable its user to browse through all the knowledge available to it as needed by him. All these activities would use the FSTP's various technical knowledge presentation functions as outlined by the FIGs 1.

The current global context ontologies provide the determinants of the so defined creative height problem of a PTR at issue. The FSTP resolves it by deriving from them the above explained epistemological and practical results in facts screening and transforming processes, as visualized by the FIGs 5, identifying these processes' functionalities and sequences of steps of evoking them (see Section I.J).

There is no static use hierarchy between the ontologies. But, any use of the FSTP would stack them according to their sequence of evocation, thus implying dynamic hierarchies between them. E.g.: After initiating the work on e.g. a specific functional module in a specific TT.p-ADMIN, the FSTP user would be able to select at least one of the NLS's and at least one of the SAOPs module - if meaningful - which then would control the execution of the user's at least one immediately following or later occurring evocation of at least one function of this TT.p-ADMIN module (see FIGs 4b-d). And the corresponding holds when he starts with initiating an NLS module, e.g. for updating in it one of its "green laws" first before applying it - with instant or deferred or selective (in whatever way) effect - to some TT.p-ADMIN function or some SAOP function (see FIGs 4e-f), or when he starts with initiating some SAOP module, e.g. for modifying in it one of its "green TT models" as required by some new green TT.p-ADMIN function or some new green NLS function (see FIG 4g).

The corresponding also holds for all other invocation sequences performed by the FSTP user. Examples of such invocation sequences are further discussed in Section I.J: The user may arbitrarily toggle between arbitrary contexts anytime and work on them as needed, supported by "activity logs" and "resulting states" ontologies, keeping him informed about the current total status of a PTR's analysis and how it was derived - again by using the FSTP's appropriate presentation functions, specifically designed for "tracking reports" of their kinds.

One of the purposes of this overall specification of the functionality of the FSTP TT.p by the end of this Section I.G is to show, that the FSTP Expert System as such is designed/defined to be a "finite state automaton". This implies: Its embodiment by an HW/SW system is straightforward for the person skilled in IT system design.

### I.H The FSTP Expert System and its Two Centers of Knowledge Transformation

An intermediary summary of Section I thus would state that the FSTP Expert System is made up from two quite different finite state automata alias processors alias machines of knowledge transformation **functionalites,** which both may work highly interleaving with each other: Namely, its
▪ **"PTR to basic/semantic/creative fact"** knowledge transforming machine. This is the FSTP Expert System's 1. center of epistemological knowledge transformation (see FIG 1d). It is disclosed primarily by Sections I.A-I.G and exemplified by all of Section II, and elaborated on by parts of Section I.M, and its
▪ **"PTR and its basic/semantic/creative fact to all the first fact's contextual details and vice versa"** knowledge transforming machine. This is the FSTP Expert System's 2. center of practical knowledge transformation (see FIG 1d). It is disclosed primarily by Sections I.J-M.

The FSTP thus is a unique "patent/endeavor expert system", in that it
▪ always and instantly (= in real-time) is capable - after having analyzed a PTR resp. an endeavor - to
▪ determine for the FSTP user the patent's/endeavor's technical secondary basic/semantic/creative fact, and
▪ all other information related to it (wherever from in the PTR's WS the former may be derived in whatever contexts and why and when and by whom, but preserving also this information), as well as
▪ all the interrelations between such information.

To this end all these functionalities constituting the fundament of the FSTP - of its two centers and its presentation and WS management functionality - are indispensably required and highly interleavingly executable for enabling the FSTP to simply and efficiently manage all the knowledge related to a PTR problem.

Thus, the FSTP Expert System is unique, as until now
▪ neither the epistemological knowledge about a PTR's/endeavor's often complex (but finite) internal web of technical facts and of interrelations between them and this web's conditioning by many external contexts - as disclosed by the PTR's/endeavor's technical facts, in particular its technical secondary facts - has been known
▪ nor the technical instrument for generating and for presenting for a PTR/endeavor all this vastly new knowledge and for using it in a real-time answering system of all possible (but only finitely many practically required) queries referring to all this (including the little originally available) knowledge.

FIG 1d and its preceding short description should not be misunderstood as limiting the flow of control while performing a PTR analysis (though its sequence of double arrows hints at frequently occurring such flows of control): But it shows one of many embodiments of grouping/clustering both functional centers of knowledge transformations and the presentation and WS management functionalities into functionally coherent modules of an FSTP Expert System's implementation as hosted by an FSTP Central System - further elaborated on in Section I.J.

### I.J A Potential Technical Architecture of the FSTP's Central System

Elaborating on the disclosures of Sections I.G-H, this Section I.J explains an embodiment of the FSTP's Central System (subsequently for short also only "FSTP") implementing the FSTP TT.p, in particular its practical and epistemological functionalities it provides to the FSTP user by its technical architecture and its modules, as well as which kinds of problems these functionalities resolve for him in a PTR analysis, which includes showing,
▪ why achieving these solutions requires building up, for any PTR analysis, its **"working set, WS"** and therein an **"Internal Access Database, IADB"** to its **"Raw Database, RDB"** (and what these data bases are), and
▪ the indispensable need to support and use a whole range of predetermined sophisticated interfaces to specific pre-existing HW/SW systems the FSTP is based on, as determined by the requirements to be met when resolving the FSTP user's problems. I.e.: It also shows that these specific "non-FSTP" systems - some of them being integrated into the FSTP Central System, some not (in particular the external databases it uses) - and their interfaces interact with each other, and with the working set's IADB and RDB, and with the presentation system (PS) and WS management functions (see e.g. FIGs 1b-1e, 4b-j and 5a-b).

Speaking quite generally, resolving the FSTP users' problems in his PTR analysis and using its results in real-time answering questions related to these problems - e.g. in a court hearing or an examiner interview or a meeting of the TT.p's inventor(s) or attacker(s) with his(their) patent attorney(s) or with potential clients interested in licensing/buying a TT.p conforming product or a public discussion about the TT.p or ... - may require repeatedly
▪ acquiring a broad range of information from all ontologies involved in it and loading part of them into the WS,
▪ screening the WS's information tachymetrically for some specific kind of informal or formal facts,
▪ transforming such informal or formal facts into other informal or formal facts,
▪ checking with the user for the viability of such facts and documenting these checks completely but appropriately for instant versatile uses,
▪ automatically and/or interactively annotating all such facts and/or integrating both into this WS's such
   o information and/or
   o additionally generated documents and or documentations and/or
   o ontologies,
   as determined automatically and/or interactively, possibly prompted and/or guided by the FSTP,
▪ redundantly checking with the user for the viability of such annotations and documenting these checks completely but appropriately for instant versatile uses,
▪ redundantly checking with the user for the completeness of such annotations and documenting appropriately for instant versatile uses that/why further/other annotations are superfluous/wrong,
whereby all these functionalities may be invoked by the FSTP Expert System's user(s) in the months/weeks/days prior to a court hearing or examiner interview or meeting ... (see above) - while setting up, by using also external resources, this PTR's WS and the appropriate presentations of such information and then need not work in real-time - but the need of delivering any such pieces of "augmented information" from the WS to the FSTP user as requested by his queries may also occur anytime in responding to his actual specific queries for them, whereby anticipating such queries or suggesting them may occur automatically or interactively or controlled by the FSTP by tracking the course of some communication related to the WS's information. In particular, all this real-time functionality may be invoked by the FSTP Expert System automatically or by its user also for training and verification purposes of his respective familiarity with the knowledge about the PTR at various qualification levels.

While such a "profile of user needs" would today be considered as futuristic for most complex expert systems, here the formal descriptions of the properties of the PTR's TTs (see Section I.A) and the finite number of finite contexts to be taken into account in any FSTP analysis limit the number of reasonable queries about a PTR to be finite - though these finite sets of reasonable queries may be different for different (groups of) users. I.e., the FSTP Expert System's applicability is restricted to such limitations - which may not be acceptable in analyzing more general endeavors - which guarantee automatically finding, by exhaustive searches, the solution to the finite problem established by a user's query about this finite state automaton established by the FSTP Expert System when analyzing a PTR. Thereby the FSTP user is assumed to be of judicial qualification/back-ground/focus/interest only and his queries to be of legal nature in general, but also technical as far as relevant properties of the PTR's TTs are analyzed - in any way limited to a finite set agreed on between the FSTP and its user (being expandable as specified above).

The subsequent examples of functions - provided by the FSTP to its user for meeting its needs - would be executed on his current WS via its Management + Accounting System. All these and subsequent elaborations refer to preferred embodiments and thus imply no limitations of the scopes of this patent application's claims:
▪ creating/identifying/hedging/... the WS,
▪ inputting/outputting items of its information (see Section IV) into resp. from its RDB in various presentations from/to him and/or from/to other resources, e.g. external databases or the FSTP Central System itself,
▪ creating/identifying/generating/screening/modifying/transforming/hedging/monitoring/... its such RDB items,
▪ determining facts of and verifying RDB items,
▪ determining the current FSTP facts, creating/identifying/generating/screening/modifying/transforming/hedging/ monitoring/... its IADB items, and verifying its IADB items,
▪ setting-up the WS for real-time queries/answers,
▪ issuing real-time queries/answers,
▪ logging, accounting for and reporting any activities,
▪ displaying the actual state of the WS via at least one user-presentation.

Performing these operations by the FSTP requires its specific use of the techniques of existing and commonly known information presentation systems, database systems, communication systems, firewall systems, logging/monitoring/tracing/tracking/accounting/... systems (= "SYSLOGs"), document indexing/marking-up/annotating systems, as well as of other advanced/research based such systems, being part of pertinent skill.

The big box of FIG 1b schematically shows, firstly, the overall functional structure of the Central System. Parts of the Customer Terminal 1b.15 are shown as 1b.1-3. Their interfaces - and also the interfaces of the External Databases 1b.30 - are supported by the Central System's temporary storages 1b.4-6 for information actually input to and/or output by the FSTP Central System 1b.20. These temporary storages are needed by its Presentation System 1b.21 for transforming at least part of the input/output information via these interfaces from/into its
▪ physical presentations in 1b.4-6 - being actually producible/comprehensible by the Customer Terminals 1c.1-5 and therefore being predetermined by the latter - to/from its
▪ physical presentation being actually producible/comprehensible by the WS 1b.22 of the Central System 1b.21.

These interactions between the Central System and the Customer Terminals using it resp. the External Databases used by it take place via the interfaces 1b.7-10 by means of the just identified physical information presentations in the Central System's temporary storages 1b.4-6.

FIG 1b shows schematically also the internal functional structure and its main interfaces (depicted by arrows) of the Central System 1b.20: In addition to its Presentation System 1b.21 - performing the just described transformations between the physical information presentations used by FSTP internally and by its various users and external data bases - the **"working set, WS"** Management + Accounting Systems 1b.22 of a PTR analysis individual WS in a Central System. These systems include managing this WS's access rights to the ontologies usable/used in this analysis (as exemplified in FIGs 4b-j), control any external access - via the PS 1b.21 - to and by this WS and its information items, and keep track of any such access also for accounting purposes.

I.e.: The WS consists of the Central System specific local copies of parts of - in this user's PTR-analysis involved - ontologies, whereby this information is augmented/updated by the FSTP's local processing activities for this analysis. This additional information is due to the two knowledge transformation functionalities performed by the FSTP on the WS on its user's request. Examples of parts of such WS-local transformations are: Performing the functionalities of information acquisition/separation (1b.29), of information screenings (1b.23), of various facts transformations (1b.24), of facts identification/documentation/verification (1b.25) and of facts integration/verification (1b.26), as outlined by the above bullet points.

FIG 1c schematically shows other aspects of an example of the total "use structure" of the FSTP Expert System as a whole and its Central System's access capabilities by/to external systems, both via the Internet, in any PTR analysis. The FSTP users use the FSTP Expert System by FSTP's Customer Terminals 1c.1-5 (being some potentially augmented www browser) via an FSTP's www Server 1c.10 (e.g. on the basis of the Apache system), which acts as a first gatekeeper in accesses to the FSTP's Central Systems 1c.11-12 via their Presentation and WS Management Systems. The latter use external (i.e. non-FSTP) databases and/or knowledge base systems, such as those of the EPO, the BGH, the BPatG, JURIS, GRUR, DIN, BSI, AFNOR, ... in Europe/Germany or of the Supreme Court, the FCAC, the USPTO, ANSI, WestLaw, ... in the USA - all of them having proprietary information presentation systems/interfaces of their own (not elaborated on, here).

While the descriptions of FIGs 1a-c explained primarily the externally visible functional use structure of the FSTP, the FIGs 1d-c elaborate primarily on the functional aspects of the systems integrated within an FSTP Central System and its interfaces - independent of being public or not, being in most cases proprietary anyway - which may be used by an embodiment of the FSTP Expert System for providing its above disclosed functionalities.

FIG 1d exemplifies, by double headed arrows, possible control flows in processing in a WS some documented information (subsequently just "document") by its functional modules and its RDB and IADB. This document - e.g. in PDF, doc, txt, xml, html, tiff or some other presentation - is input by the user via the GUI either directly by him or indirectly fetched by the FSTP on a WS user's request/command from an External Database. If this document presentation doesn't already consist of machine-readable characters as needed by advanced text analysis systems, e.g. if it is in a bitmap-based presentation, the FSTP might carry out optical character recognition (OCR) or something similar on it to generate this machine-processable presentation. Next, the document might be indexed by using e.g. the Apache Lucene or some other indexing tool, for performing e.g. full-text keyword identification/search and thesaurus generation. Next the FSTP might carry out some probabilistic text analysis, potentially being natural language syntax supported and/or potentially supported by a part-of-speech tagging (and analysis) POST(A) system, in order to facilitate the identification of key terms and related annotations - as far as not identified by the WS user - and semantical interrelations between these terms within the document. Next the knowledge about such keywords and interrelations within the document as such (i.e. its original and/or already FSTP-transformed presentation) - their totality in the WS establishing its **"raw data base, RDB" -** and their interrelations with other information in the WS are stored in the WS's **"internal access data base, IADB":** The IADB provides the technical structure for highly organized short-cuts, in a PTR-analysis, in accessing all facts of all kinds, as well as all disclosures justifying them, as well as all steps of transforming all disclosures into formal fundamental facts, as well as all steps of transforming formal facts into other formal facts, as well as all steps of documenting/elaborating/verifying/consistency-checking/annotating/linking/displaying/.... such facts, as well as accessing all facts of all kinds in backward-tracking any such transformation and managing them just as these forward transformations (as disclosed more generally above).

The RDB and the IADB may be seen as separately stored (items of) information or as being stored overlapping each other. Anyway, all these items of information are instantly deliverable to the WS-user at his request.

Finally it should be noted that in FIG 1.d the
▪ totality of these functionalities - exemplifying just some of the respective functionalities quoted above - establishes the (in Section I.A defined) 1. as well as the 2. center of knowledge transformation, and
▪ executions of these functionalities need not be directly invoked by a WS-user, but may be invoked indirectly by him by having invoked some quite different function (e.g. from the 1. center of knowledge transformation, which then invokes some function from the 2. center of knowledge transformation, and vice versa).

FIG 1e provides a survey about the FSTP's SW functional architecture by showing the use hierarchy between the 1. and the 2. center of knowledge transformation. It thus discloses the fundamental architectural arrangement of the FSTP's patent/venture specific technical computer interfaces and their functional modules in the FSTP Expert System. Using these functional modules and their computer interfaces enables it - during analyzing a PTR and later on while using the result of this analysis under real-time conditions, both under its user's control - by
▪ its 2. center of knowledge transformation to input/output all respective documents from/to its user resp. from/to External Databases resp. from/to the 1. center of knowledge transformation and to index and manage (by means of the above RDB and IADB) these documents and their items such as to provide its functionality to its user as requested by him, as well as by
▪ its 1. center of knowledge transformation to determine, possibly under control of one or several context ontologies and/or interactively with the FSTP user, both as provided to it by its 2. center of knowledge transformation, the PTR's informal and formal facts, all needed transformations between them, its basic/semantic/creative facts, all steps performed for these determinations and eventually returning the documents containing all this information to its 2. center of knowledge transformation for integration into the above RDB and IADB.

### I.K The FSTP Expert System's Potentials Concerning National Patent Authorities

This Section outlines the FSTP Expert Systems potential of dramatically simplifying any patent authority's process of (re)examining patents and/or their applications.

Due to the above said, applications for patents for business and similar inventions - i.e. for patents dealing with intangible matter, which also holds for most patents on advanced technologies, as most of them will be model-based - will soon dramatically outnumber applications for MoT patents. This will change the job profile for any patent law pro: Then a sophisticated test becomes indispensable, which delivers for an invention a (non)obviousness indication of absolute trustworthiness. At the time being, only the FSTP test has this quality (see Sections I.A-B).

For a patent authority's process of (re)examining patents, this test (using the FSTP terms/notions):
▪ disburdens the examiner from most of his today's work by enabling the authority to reverse the burden of proving the nonexistence of technical facts indicating the anticipation and obviousness of this patent's TT.p by resp. over its prior art. Proving that (no) such anticipation/obviousness fact exists - being the primary cause of an examiner's backlog of work - then is no longer left to him. Instead, the applicant has to submit, together with his patent application for a TT.p, unquestionable and precise indicative technical facts (e.g. as provided by the FSTP test), enabling the examiner to focus on evaluating these indicative facts presented to him, i.e. on a small but the most important fraction of his today's work. This reversal of proof - together with the below quoted support of an examiner's work - accelerates his patent throughput by about a factor of ten.
▪ enables the examiner of a patent - just as before its inventor and afterwards lawyers/jurors/judges/experts in court cases defending/attacking it - to **instantly** access any relevant information on any TT.p detail, which contributes to its (non)novelty/(non)obviousness indication, thus instantly removing **any factual uncertainty about any such detail,** in spite of the parties' often fogging statements concerning such details.
▪ provides to the examiner (e.g. with the FSTP test) all possible shortest ways of finding this TT.p starting from its RS, i.e. the PTR's plcs-fact, and showing the impacts on it by pmgp, i.e. the PTR's pmgp-fact. This provides insights to the examiner and to the court into all logics and pragmatics details of the TT.p (unknown before).

A PTO's determination of the (non)novelty and/or (non)obviousness of a TT.p thus would
▪ not only be massively simplified/accelerated by this kind of test of this TT.p over some RS, which is set up by the applicant of a patent for it - whereby rerunning this test by the examiner would expose to him precisely and completely all plcs- and pmgp-facts of this TT.p over this RS's prior art, but
▪ even be significantly stabilized as to a later check by a court: The TT.p's FSTP test would work for the court the same way, thus the court would evaluate the same facts as those evaluated by the PTO's examiner.

This change of the mode of operation of a patent authority would be nothing else but making it operate the same way as a building supervisory authority: This authority would not even think of determining on its own, whether a building is solidly constructed over its ground - but a priori leave providing this proof (that this construction is solid) to the future building's owner. I.e.: The building supervisory authority would just check and confirm his proof or not, i.e. grant the right to establish/maintain this building or refuse it.

The aforesaid may be summarized as follows. Until now it was impossible to submit to a PTO, together with an application for patenting a TT.p, a proof of the creative height of this TT.p over prior art, which could easily be rerun and completely understood by its examiner. The FSTP Expert System terminates this unfortunate situation. It enables an inventor to achieve this proof for his TT.p on his own, prior to submitting to the PTO: It does so by supporting the inventor to generate this proof by means .) of its FSTP analysis (requiring several internal semi-automatic checks for the correctness of its reasoning), and :) of its real-time query reply system. This proof then may be delivered to the PTO on a USB stick, executed on any PC, and thus checked and verified/rejected by the examiner, as easily as only imaginable. This check by the examiner only needs to verify the correctness of the inventor's transformation of his patent's disclosures into their presentation needed by the FSTP.

As to business inventions - just as to any model-based, i.e. any future technologies based invention - this reversal of proof of PTOs is without alternative. Due to the explosion of very sophisticated knowledge, on which these inventions leverage, it is absolutely unthinkable that the PTOs' human resources will be able to keep up with it, quantitatively as well as qualitatively. Their backlogs during the last 20 years prove it.

A final remark: For automatically translating patents - as just envisioned by the EU and Google - it is absolutely unavoidable to present them in the "FSTP analysis way". Other fundamental changes in the patent business implied by this "way of FSTP thinking" are elaborated on in Section I.M.

### I.L The FSTP's Potentials Concerning Business/Green/Health/Copyright/Trademark/... Inventions

The preceding sections nowhere were focused on the FSTP analysis of MoT PTRs - though MoT PTRs are the by far simplest formally precisely definable problems potentially being of enormous economical interest. Nevertheless, now the potentials of applying the FSTP analysis to the more complex business/green/health/ copyright/trademark areas of innovation - for short: model-based instead of tangible matter based and consensus-requiring subject areas - of patent law are highlighted.

On top of treasures of the soil and of treasures of the industry, increasingly treasures of the knowledge fuel today's economies, in particular their wealth creation engines: their knowledge-based enterprises. Actually, many formerly industrial enterprises are undergoing a metamorphosis and become more and more knowledge-based enterprises, in car industry just as in chemistry just as in all other industries - their IPRs becoming one of their most significant tangibles, in particular their patent rights.

The consequence is an explosion of the number and of the complexity of patenting activities. The impact on PTOs: Unacceptable long periods of examination - on the average 5 years, by now.

While some claim this explosion were an indication of admitting too easily and quite generally patents as potential resources for wealth creation, others claim this explosion were caused by allowing the hopes behind business patents to fuel this gold rush. The latter concurs with the old and widespread feeling in Europe that running a business always is a triviality (as was always claimed by the yellow press, worldwide, and today is conveyed by many daily soaps). Therefore in Europe the opinion is prevailing, that only matters of "technicity" located beyond such awkwardness, should be patented - thus banning this trend towards alleged triviality and hence mass. In the US recently a somewhat similar attempt was launched by the CAFC: By postulating that inventions were eligible for patenting only if they would pass a "machine" or "transformation" test (MoT test).

But, nobody is able to define what "technicity" means or a "machine" or a "transformation" is. Also, no research is known promising that excluding from patenting "nontechnical" resp. "non-MoT" inventions would increase the quality level and/or the number of the remaining patent applications - already these completely swamp the EPO and USPTO. In the US this superstition has been terminated by the Supreme Court's Bilski decision, while in the EU the refusal of business patents is robustly alive and only occasionally questioned. All that happened there, along this line, was EPO's 2008/03 decision on software inventions, which confirms its earlier position as to that question: They are eligible for patentability, as they always are technicity-related (which the final part of the decision seems to try to put into jeopardy, again, see Section I.A.6) - but do not comprise business inventions.

Thus the US made it clear that its patent law should unfold its innovations stimulating potentials in all areas of the US economy, while in the EU the refusal of business patents prevails - without recognizing, what the impact on its economy may be of abstaining from using this stimulus for boosting its business's regenerations.

One kind of reasons for this resistance to patenting business inventions is that they deal with intangible matter, thus making their visualizations weak, if not empty. The particular problem with this feeling: It is intolerable, as it applies not only to business/green/health inventions, but also to technical inventions no longer dealing with tangible matter but with models of something (telecommunications, brain surgery, ..., all advanced technologies). I.e.: These problems have already existed for a very long time, such as with coding techniques, but by and by e.g. coding and its models became so familiar that our intuition deals with them as if they were tangible matters.

As there are no long-time established business models, descriptions of business inventions cannot be based on them and thus add more uncertainties by remaining diffuse and even obscuring them - see the Bilski patent and in particular its defence. The reason being: Neither examiners nor lawyers nor judges have a really clear understanding of the (non)obviousness problem even with MoT technologies, but with business inventions they don't understand at all, what the substance is of the problem they are struggling with - not knowing that recognizing and describing it in an unquestionable manner is an epistemological challenge, which to clearly master on their own (without a commonly understood model for their thinking, e.g. a tangible embodiment of the invention at issue) they simply are not equipped for - as this requires very fundamental research (see Sections I.D-G).

As mentioned above, "obviousness" is the most crucial issue along this way of correctly qualifying inventtions: In **hindsight namely any innovation on an intangible subject matter inevitably** is **trivial, i.e. obvious. This is a matter of fact.** While this problem often holds already for MoT inventions, it is a nightmare when dealing with a business invention, as likely similar businesses have been around before applying for patenting this one.

Eliminating this nightmare requires solving evergreen problems of patent law, i.e. also with MoT matter:
▪ Patent language schism, namely
   o patent legislature: technical layman's language (see the Supreme Court's rationale in its Bilski decision).
   o patent documents: technical skilled person' language is possible only - which is vastly ignored by courts.
▪ Any natural language's big problem: Lack of technical preciseness - to be overcome only by formalization.

None of the research efforts dealing with patenting is aware of these potentials of confusion, as just shown, due to quite different and ubiquitous language and preciseness problems - their main deficiencies being:
▪ no epistemological basis of an obviousness problem solving technique, and
▪ how to leverage on precedents and on needs of litigations in their "plainly syntax driven" thinking.

I.e., though being scientifically outstanding, they yet are short of thinking in terms of practical help.

Also, the important moves in patent legislation during the last weeks, in the US senate on March 8^{th} 2011 and in the EU on March 9^{th} 2011, though showing some convergence in the WTO's/WIPO's Substantial Patent Law Treaty (SPLT) environment, ignore these quite fundamental problems of patent-laws on both sides of the Atlantic, which require resolution for overcoming this business - and all model-based - patents' dilemma.

Thus, the best source of valuable suggestions for how to fix these key problems, which underlie the controversy about business inventions being patentable or not (only seemingly between the US and the EU, but in truth existing in both camps), are the Highest Courts' precedents and their implied suggestions, such as the KSR decision in the US (Justice Kennedy here is hinting at creativity to be the key issue) or the Spannschrauben (1996)/Gegenstandsträger(2008) decision in Germany (stating correctly that a meaningful patent/claim interpretation is possible only on the basis of absolutely clear terms/notions/technique-teachings, which is common knowledge in the IT sciences since the 70s, at the latest, and there called "lexical/syntactical/semantical/pragmatical" basis). These are the Highest Courts' decisive hints, that and how creativity/ingenuity may and must be made identifiable and measurable - thus asking for a technique also providing to business inventions a firm standing. The hope is that later this year within the G20 an activity may be launched, also taking up these hints.

Following them, the FSTP test (FSTP = Facts Screening and Transforming Processor) overcomes all these stumbling blocks on the way to establishing an unquestionable fact analysis also of a business invention - which applies also to all green/health/... inventions, not just MoT inventions. It determines for an innovation - independently of its subject area - what its **"creative height"** is over its prior art at the time of its invention. Thereby the creative height of an innovation alias invention is defined to be the minimal number of independent ideas to be invested into creating it when starting from prior art, i.e. from any combination of pieces of prior art.

The FSTP method thus enables an indisputable determination of an invention's minimal creative height - measured in independent thoughts - in whatsoever subject area, e.g. in a business or green or health subject area.

I.e.: If a business invention is approved to be of a significant creative height, Q**^{pmgp}**, over its prior art, this establishes for it the same strong indication of its being nonobvious, as if a MoT invention were approved of this Q**^{pmgp}** value. In both cases this value is the number of creative ideas invested into finding the resp. invention. Then still maintaining, this business invention is not patentable as being trivial, is nothing else but a discrimination of the group of business inventors (unless they are violating law) - and hence unconstitutional in many countries.

Other considerations as to these more recently patents are equally important and briefly sketched next.

Setting a "technical" business/green/health/copyright/trademark/political problem to be solved means providing the sufficiently precise description (in natural language) of its business/green/health/copyright/trademark/ political properties and of the TT.p sought for resolving it, such as to allow their transformation into formal attributes (see above). A TT.p of this kind - also being enabling for the person of pertinent ordinary skill - makes it a business/green/health/copy-right/trademark/political TT.p, and a product being an embodiment/implementation of this TT.p is a business/green/health/copyright/trademark/political technical product. And alleged TT.i's from a pertinent business/green/health/copy-right/trademark/political area are subject to the same limitation quoted above.

The purpose of FSTP analyzing a TT.p from one of these areas is not directed towards directly indicating the patentability of this TT.p, but towards trust creation into this TT.p, first of all. It is commonly known that selling highly innovative products of any kind may encounter massive reservations, frequently being fully justified - but also, because of their high degree of innovation they embody, which inevitably is accompanied by a certain feeling of foreignness of such products, which may significantly defer their broad acceptance by their markets. For avoiding such negative impacts on marketing highly innovative products - as they are well known to occur in particular with green/health/copy-right/trademark/political products - or at least for minimizing such impacts, it may be worthwhile to accelerate the trust creation in them that they are actually superior to the pertinent prior art products, namely as becomes possible by using the enlightenment idea of the FSTP Expert System (as outlined below).

Two simple examples of such "patent problem like" green/health/copyright/trademark/political problems show that a conventional smart marketing campaign's "terms dropping" alone cannot establish such trust, as such terms must immediately be linked to resp. supported by superior properties of the marketed product alias TT.p, as compared to the properties of the prior art products (alias TT.i's).
▪ Let "POWER" be the name of a new green product, a new brand of jelly beans claimed to be superior as to avoiding teeth' damages and even reducing sinews vulnerability in some innovative way, as compared to prior jelly bean products - all that due to certain natural ingredients and their interaction with a human body only. These ingredients' names alone on the new jelly beans' bags is of little persuasiveness. More reversal of market reservations is created by instantly available trustworthiness information via an Internet access, designed to be used by an anywhere/anytime usable cell phone or something similar, to the FSTP Expert System of its POWER's analysis, which proves - responding individually to any query of a potential POWER consumer - POWER's respective superiority over any prior art jelly beans by its natural ingredients' compound and/or detailed beneficial impacts on an eater's teeth and sinews, supporting this proof by respective quotations from certified medical analysis and experiment reports, resp. even fixing any such query by abductively changing it into or complementing it by another reasonable one.
▪ Let "EVERON" be the name of a new health product, a new brand of MS antidotes, claimed to be superior as to substantially reduce the well known MS symptoms, as compared to prior anti MS drugs, though avoiding most of their side-effects without generating another one. As just explained, today's usual isolated terms dropping (be they medically decent or just wishful) on EVERON's packaging are of little help to its consumer. Of much more importance would be an instantly and ubiquitously available access to the FSTP Expert System over the Internet to EVERON's FSTP analysis, proving EVERON's creative height - regarding composite impacts on MS symptoms, their reasons, and their interactions - over prior art MS drugs.

It is obvious: There are many such problems, in the green/health/copyright/trademark/political area.

A final remark on the FSTP's capability of "tracking back to the origins of claimed properties and their implications": Providing this capability to querying users - in particular to potential buyers of such green/health/ copyright/trademark/consensus-making products - will be appreciated not only by the latter, but also by the originators of these properties and hence rewarded by them.

Summarizing this: Business/Green/Health/Copyright/Trademark/Political innovations/inventions/TT.p's may be transformed by a publicly (not necessarily for free) accessible FSTP Expert System into this TT.p's promotion-/marketing tool above any doubt by the FSTP Expert System's capability of a) identifying for TT.p b) all c) undeniable/unquestionable facts distinguishing it from all kinds of green/health/copyright/trademark/consensus-making prior art properties/facts by d) meticulously describing this TT.p's superiority of "pushing back by this TT.p's business/green/health/copy-right/trademark/consensus-making technology (i.e. by the TT.p's objective creative height Q^{pmgp}≥1 over prior art) undesired frontiers so far inevitably encountered by society".

This kind of promotion for such ventures is obviously impossible without the FSTP Expert System. Thereby this promotional use of the FSTP Expert System is
▪ capable of significantly accelerating the broad acceptance and hence the pace of innovations in particular in these new kinds of technologies, primarily carrying the hope of future wealth - being the main reason for having the patent system, at all - and is
▪ not restricted to the above quoted technologies, as this FSTP kind of promoting an innovative product by encouraging its potential users to learn about its innovative facts could support conventional techniques, too.

### I.M FSTP's Potentials as to Automating the Application of National Patent Law on a PTR's resp. Facts

This Section I.M elaborates on the question, in which cases even the judicial solution of a PTR problem in an NPS may be determined how far automatically by the FSTP, not just the facts indicating this solution. To achieve at least some such progress, the sections **a.-c.** of the pmgp (see Section I.B.2) - in total denoted as **"national normative judicial interpretation of facts, NNI",** although **a.** and c. are international - must be modeled formally for enabling the FSTP to automatically apply, to facts determined in one step of its PTR's FSTP analysis under this NNI, this NNI also for evaluating these facts up to its **"final/nonaudited fact"** (see below, whereby in one NPS any NNI application is based on the same plcs-option**¹⁴⁾** of anticipation/disclosure).

Up-front the below general remarks/reminders **i)-v)** sketch the principles to be applied for achieving such progress, provide some broad context for it, and hence make aware the "global frame" to be kept in mind when interpreting the below claims of this patent application concerning the FSTP Expert System:
i) The three terms NPS/NLS/NNI - not at all having the same meaning - may subsequently nevertheless be used as synonyms, the meaning of which denotes an ontology formally modeling NNI or part of it.
ii) By its capability to determine a PTR's technical secondary basic and/or semantic (= plcs) and/or NNI (= "pmgp/**a.-c.")** fact, the invented FSTP Analyzer also translates part of the notion "legal certainty" (in evaluating a PTR in an NPS): From its natural language nonprocedural presentation into a (semi-)automatic/formal PTR test and hence procedural presentation (of the notion "legal certainty" in evaluating a PTR in an NPS). This test manages to deliver unquestionable facts indicating its TT.p's (non)obviousness over its RS. Thereby the meaning/notion of "legal certainty" in an NPS stands for the absolute abidance by this NPS's courts, technical experts, and examiners to this NNI (when determining these facts of a PTR problem and evaluating them legally).
   I.e.: Some (part of) NNI - input into the FSTP - is translated by the latter into algorithms which represent/ implement legal certainty as to legally analyzing a PTR problem under this NPS. These algorithms are executable on a PTR and then deliver facts otherwise to be determined by the above quoted NPS abiding legal staff, i.e. deliver legal decisions as to analyzing this PTR problem. This (part of) NNI is input to the FSTP by its user for a specific PTR interpretation, either "PTR individually by hand" or "PTR independently as formal ontology". The application of these NNI controlled algorithms to a PTR is its interpretation under this NNI.
   When distinguishing the below three different kinds of facts determinations during a PTR's interpretation - alias FSTP analysis under some NNI - its dependency on this NNI affects
   **a)** definitively not this PTR's **"plcs/free-fact",** as it is by definition NNI independent**¹⁴⁾**,
   **b)** potentially this PTR's **"NNI-fact"-** then it differs from this PTR's plcs/free-fact**¹⁴⁾** - and
   **c)** most likely its **"final/nonaudited fact",** as this part of NNI (i.e. evaluating its NNI fact) is politics pure.
   I.e.: Such NNI-controlled algorithms may establish, for a PTR, legal certainty in an NPS up to only its plcs/normal-fact**¹⁴⁾** or its whole NNI-fact**¹⁴⁾** or even its prefinal/nonaudited-fact (being NNI dependent or not).
   The dependency of a PTR's FSTP analysis on **a)-c)** will be briefly discussed in Sections I.M.1-3.
iii) For any one of these NNI items within these determinations **a)-c)** of different kinds of facts - any one of these facts is subject to the trivial "free/../../normal" differentiation**¹⁴⁾** - holds: If it is not (yet)
   **1)** formally modelable and/or formally modeled (e.g. because of lack of social/legal sufficiently precise consensus concerning it or unawareness of or disagreement on its need or ...), and/or
   **2)** automatically translatable by the FSTP, and/or
   **3)** applicable by the FSTP to a PTR's precedingly determined facts, and/or
   **4)** input to the FSTP,
   the FSTP user him/herself must make the resp. decision on his/her own, when being prompted for it by the FSTP in its PTR analysis. Otherwise the FSTP Analyzer may be unable to complete determining one of these facts **a)-c)¹⁴⁾.** There are very good reasons, why for probably all PTRs it is eventually possible to avoid the occurrence of one of **1)-4),** as for any PTR the number of potential impacts of NNI on its facts is limited**¹⁴⁾**.
   Alternatively, the FSTP may complete its PTR's analysis as to only those parts of the NNI (parts) not affected by its "missing links" (then delivering a kind of "fragmental FSTP analysis of the PTR under this NNI", which may identify the missing/non-applicable/problematic parts of this NNI and their impact on the PTR's FSTP analysis) and/or automatically add such questionable parts (potentially under the control of the FSTP user and/or highlighting this accordingly), analogously to what is described in Section I.B.2.e.
iv) Each and every decision of the FSTP automaton in its analysis of a PTR must and may be presented to its user completely understandable ad-hoc (whereby he/she need not have the faintest idea of how this task actually is accomplished by it. I.e.: It must be presentable by the FSTP Expert System (i.e. its 2. center of knowledge transformation) to its user in some presentation as requested by him/her - in "combat-mode" even in real-time, which is realizable by means of standard data base technology, in particular via its "inverted files" - including e.g. all the alternatives of needed items by the FSTP analyzer to arrive at its decisions, and vice versa, of sufficient items implying these decisions (to be provided by its 1. center of knowledge transformation).
v) The latter capability includes guaranteeing by the FSTP, if requested by its user, that there is no "fading link" in this PTR's FSTP analysis potentially weakening a decision, e.g. as to its NNI-fact - e.g. in that it shows, for this decision, all the items in the WS and all their combined uses in support of it. This requirement also applies for the FSTP Analyzer's check to what degree any alleged AC actually is right or wrong.

To summarize: If with formalizing an NNI for a PTR all such missing links are eliminated, the FSTP can decide fully autonomously (i.e.: without any user interaction), whether a PTR's TT.p would be patentable over its RS: It then would be able to figure out this legal decision by itself and would insofar establish, in this NPS, legal certainty "by mathematical proof" - being subject to final legal approval by a court. I.e.: The FSTP analyzer then need no longer restrict itself to identifying, determining, and elaborating on only the plcs-/pmgp-facts indicating, for this PTR, its TT.p's (non)obviousness over its RS (and leave to a court's judicial decision the evaluation of these technical formal secondary plcs- and pmgp-fact) - but then the FSTP automaton would also determine, for this PTR problem, the today's precedents to be applied to it and how. It would formally derive, from this PTR's technical formal secondary NNI-fact, by means of the further on to be applied NNI in interpreting it, also the prefinal (as legally not yet audited by a court) fact.

**I.M.1 - No NNI Impact on a PTR's plcs/free-Fact** This is trivially true by definition**¹⁴⁾**. But: Questions may arise about the meanings of the PTR's technical fundamental facts when performing their skill-based translation into formal D/B-attributes/concepts (not about the PTR's technical primary or secondary formal fact(s) based on this translation). I.e.: Disputes may arise out of alleged ambiguities of the documents' disclosures by natural language wordings and/or their figures, as well as out of their precise modeling by means of formal D/B-attributes/-concepts - whereby both steps are to be guided by pertinent skill, see Sections I.A-E.

Such controversies are outside of the scope of this patent application, i.e. must be decided by courts (based on their own or an Expert's technical knowledge, see Section I.M.4). I.e.: For a PTR there may be different plcs/free-facts due to different courts' decisions on these skill-based translations - but not due to different NNI's.

**I.M.2 - Potential NNI Impact on a PTR's plcs/free-fact** There are - for a PTR's FSTP analysis - 3 different ways of how NNI may affect this PTR's plcs/free-fact: by imposing on its ACs i) "plcs-restrictions**¹⁴⁾**", ii) "law restrictions", and/or **iii)** "skill restrictions". In Section I.B.2. the kinds **i)** and ii) of NNI restrictions are denoted as type **"b.** pmgp" restrictions, and the kind iii) as being of type **"c.** pmgp". While determining an impact of type i) is a priori an evidently finite exercise**¹⁴⁾**, determining an impact of type **ii)** and/or iii) may be made a finite exercise**¹⁴⁾** by restricting it to some maximal complexity. Thus, starting from I.M.1, the FSTP can always determine the PTR's NNI-fact**¹⁴⁾** - at least up to some maximally tolerated "NNI complexity**¹⁴⁾**", as indicated by IBM's WATSON project.

And perhaps even more interesting is that for many PTR's (leaving aside the potential and always trivial plcs-restrictions i)) NNI may not have any impact at all on its plcs-fact - whereby also this may often be automatically determined by the FSTP (as explained below) - otherwise this must be figured out by the FSTP user "by hand/head" and input to the FSTP Analyzer (together with an appropriate documentation/justification).

An example of NNI independency of a PTR's TT.p is provided by the '884 patent, i.e. by its '884 TT.p over the '884-PTR's prior art RS. Subsequently the author is justifying this independency first "by hand/head" and then explains how the FSTP Analyzer would determine it automatically.

At the '884 priority date, the '884 TT.p namely has been absolutely unique - as compared to its prior art, and in particular as compared to the absolutely novel '884 problem setting of providing a substantially real-time Internet data transfer suitable for Internet telephony, both as disclosed in the '884 specification underlying its claims**^{1),2)}** - e.g. with its (see Section II.A.1.2)
(1) recognizing the requirement to consider the whole communications connection as established by its data transfer from its source end-terminal to its sink end-terminal in full length - when it comes to deciding whether initiating a PSTN fallback for it is in place - i.e. not just its data transfer through the Internet (as the PSTN fallback in an Internet telephone call may be caused e.g. by the temporary nonavailability of one of the additional resources within the switches needed for an Internet telephone call's data transfer through these switches, while the data transfer through the Internet is perfect),
**(2)** unconditional determination to start this end-terminal-to-end-terminal data transfer (resp. telephone call in the '902 US patent's claims 68 and 69) via the Internet alias packet-switching network,
**(3)** ability to monitor (in some way) solely the communications connection considered and to base its signal generation (for initiating a change-over) exclusively on this in so far very specific monitoring result, whereby this
**(4)** signal generation is subject to the explicitly disclosed limitations (see Section II.A.1.2) that it is generated, when this specific transfer monitored encounters somewhere in it a
   a. falling below a certain bandwidth threshold, thus protecting it against all kinds of "transfer blockages"
   **b.** exceeding of some bandwidth threshold, thus protecting it against all kinds of being "overloaded", or
   **c.** packet forwarding problem, thus protecting it against all kinds of (switch) local problems of communicating with the end-terminal of the communications connection considered,
**(5)** ability to affect in a change-over only the resp. communications connection, and its
**(6)** specific proactive strategy (for initiating this PSTN fallback): It does not wait whether a potentially negligible problem with this (communications connection's) data transfer actually would show an unacceptable impact on this data transfer's qualification for Internet telephony, but its first switch initiates the PSTN fallback as soon as it detects some defined deficiency in this data transfer (e.g. as to forwarding IP packets or falling below/exceeding a bandwidth threshold in it) - thus it would initiate a PSTN fallback also in cases not needing it at all (see Section II.A.1.2),

The precise modeling of these 6 (and some further) new features of the '884 TT.p (see Section II.A.2)
▪ requires at least 28 independent B-concepts**¹⁰⁾**, each standing for an independent creative thought**^{10),14),16)}**, and
▪ shows that none of the 16 prior art document.i's/TT.i's has the faintest chance of anticipating the above innovations of the '884 TT.p**¹⁴⁾** (for details see Sections II.A.1.3-II.A.2).

This '884 specific insight - as to the potential impact of NNI on a PTR's plcs-fact - allows a straightforward generalization: **For a totally new TT.p** its **plcs-fact equals its pmgp-fact,** otherwise the invention were not **totally** new, as then NNI anticipated it already partially. And the invented TT.p is totally new, if its alleged prior art **does not at least KNOW ALL its concepts** - which severalfold applies for both, the '884-TT.p**¹⁰⁾** and this FSTP-TT.p.

**I.M.3 - Potential NNI Impact on a PTR's Final/Nonaudited-Fact** Just as with Section I.M.2, the final/ nonaudited-fact need not be affected by NNI, i.e. need not further reduce the value determined there for Q**^{NNI}**. Thus, this problem - of automatically determining this impact - is different from the I.M.2 problem only in that its transformation of the PTR's technical secondary NNI-fact into its binary final/nonaudited-fact is "logically/technically" much simpler than all preceding transformations, but may be pragmatically delicate (see Section I.M.4).

There are three reasons for this delicateness. The simple reason being that cases may occur, in which the NNI-fact is not really conclusive/enforcing. The fundamental reason being that currently there is no universal national normative judicial interpretation, NNI', of a PTR's NNI-fact, neither in all nations nor - much less - internationally - i.e. there are no broadly coherent rules concerning this particular transformation to be controlled by NNI'. Hence generally applicable NNI'-ontologies may be developed at best NPS- or only court-wise modeling its resp. view on this transformation. And the worst reason is: In any nation its courts might consider an attempt of such a formalization of its view by an NNI'-ontology (e.g. by the FSTP patent technique) as an assault on their independency and thus stimulate their adversarial reaction to accepting/practicing the FSTP technique - notwithstanding that the eventual aim of the science of jurisprudence is the ultimate reduction of courts' occasional vast freedoms as to determining and interpreting clear facts underlying their decisions.

On the long run, the FSTP patent technique aims at exactly this: at replacing or at least reducing in patent jurisdiction - which is to a much higher degree based on easily formalizeable logic and pragmatic insights than any other jurisdiction - the today's almost absolute discretion of courts by unambiguous rules (implied by its logics and pragmatics) of how to derive the facts inherent to any PTR and from them the potential courts' decisions, too.

### I.M.4 - The Roles of Examiners, Experts, and Courts in Such Formalized Decision Processes

Applying patent law this way (as presented in Section I.M) to a PTR problem would have a significant impact on the roles of these three groups of legal staff in any NPS: These roles then would consist primarily in legally checking and verifying the input provided to and the output produced by a PTR Analyzer. This input then would resemble a company's accounting documents, and this output then would resemble a company's profit/loss-statement and balance sheet. All three kinds of documentation - inputting all accounting documents, outputting the commented profit/loss-statement and balance sheet - then would have to be legally verified (and potentially complemented) up to some legal accounting standard (e.g. US GAAP or IFRS) by a legally certified auditor, who finally would testify the lawfulness of the company's operations. I.e.: The roles of these three groups of legal staff in any NPS would thus be changed to roles commonly known/accepted in other legal areas.

Two aspects of such formalized decision processes on a PTR problem are finally emphasized.
▪ **Modeling NNI by ontologies.** Such processes would leverage on, in the area of patent law, research done on logic representation of normative rules in the area of contract law. It therefore seems to be pretty well understood, and thus no major problems should arise in modeling such NNI, as described in
   o "The Description Logic Handbook", Edited by Baader et al., 2010, Cambridge University Press,
   o "Formalizing by Ontologies Patent Precedents for the PTR Problem", A. Paschke, ongoing research
   and also as indicated by IBM's WATSON project (see above).
   The resp. NNI ontology is located on one of two levels of complexity, whereby many - if not even all - of its items may be located on the lower level of complexity, namely of classical ontologies and inference by means of only descriptive logic (a sub logic of first order logic**¹⁰⁾**). Here formal logic deductions are "monotone", i.e. a fact deduced in step n>1 cannot contradict**¹⁴⁾** a fact deduced in a previous step 1≤m<n.
   Achieving consensus on formal and hence precise NNI-ontologies is the indispensable first step towards achieving legal security within an NPS just as between different NPS's - and the more for harmonizing or even standardizing them internationally (as it is likely to occur in resp. between some countries sooner or later).
▪ **FSTP User Control of an NNI-Ontology Controlled FSTP Analysis of a PTR.** The automatic control, in a PTR analysis, of the FSTP Analyzer's reasoner by the NNI-ontology would enable the FSTP user to supervise this control step by step. By means of the resp. functions of the user interface, which allow switching on/off so called "metaguards" of an NNI-ontology's model based on "guarded logic" (still within descriptive logic, see above) allow getting along even with complicated NNIs: The FSTP user thus may activate/deactivate specific constraints of the NNI on the PTR's plcs-fact, as required by him/her for screening all options of a court in applying the patent law in its decision concerning a PTR's TT.p novelty/obviousness over its RS.

Concluding this Section I, the FSTP project is briefly highlighted: It is run by the author, out of Berlin, by currently 15 professors and 22 PhD students from 9 nations, which care for the design and implementation of the FSTP Expert System resp. investigate the FSTP method's use under the resp. NPS and its application to the resp. national landmark decisions of the resp. Highest Courts - 2 professors and 6 PhD students being from India. One of its objectives is to develop a "patent law technology", i.e. to upgrade patent law to a new epistemology of its own, quite similar to the sciences of physics and mathematics, but even more fundamental than both of them.

### II. THE WORKING OF AN FSTP ANALYZER'S EMBODIMENT - EXPLAINED BY ITS APPLICATION

This Section II explains the working of an embodiment of the FSTP described in Section I.J: of this embodiment's 1. center of knowledge transformation - when completing a PTR analysis, here of the '884 claim 2 of the European **"'884 patent"** (EP 0 929 884 B1) over the 16 documents.i**³⁾** as RS - as well as of its 2. center of knowledge transformation starting with performing the initial translations of the disclosures of the PTR's documents into fundamental facts of this PTR analysis (see Section I.H). These very first steps of an FSTP Analyzer embodiment start with determining the technical facts - indispensable for an indication of the (non)obviousness of a PTR's TT.p over its RS - in exactly the same way as the classic judicial procedure: On its
▪ 1^{st} facts determination stage it starts with determining all relevant technical fundamental facts, i.e. informal D-**X**).**n**'s, of the TT.p (concerning all TT.i's), from which it first derives the D-ANC relation between the **X**).**n**'s and their peer X.i).n disclosures in the document.i's (i.e. the PTR's technical primary facts, in US terminology: its "Graham" facts), and then derives from the latter the B-ANC relation**⁴⁾** (see Sections II.A.1.1-4), and on its
▪ 2^{nd} facts determination stage it automatically transforms the PTR's D/B-ANC matrices into their resp. technical secondary facts on these D/B-levels, i.e. into basic resp. plcs/pmgp facts (see Sections II.A.2.1 resp. II.A.2.2).

An embodiment of the FSTP analyzer thus supports avoiding, in a PTR analysis, the use of unthoughtfully determined meanings of a claim's terms when interpreting it by repeatedly checking that these meanings would precisely reflect the TT.p underlying it**¹⁾** and thus make these meanings contradiction-free alias consistent to the patent specification (see Sections II.A.1.1-2). While this sounds simple for a layman, on the D-level indeed difficulties are often unavoidable due to the intricacies of natural language and hence of disclosures of the PTR's documents using it**⁵⁾** (see also Sections I.A-E). An embodiment of the FSTP analyzer, which is aware of them, would support transforming these terms and the meanings/properties/attributes referring to them from the D-level of information presentation of the technical facts to the above B-level of information presentation of these technical facts - and also formalizing these meanings as far as possible**⁵⁾**.

Section II.A describes the working of the embodiment of an FSTP analyzer as a whole. For clarity its document specific facts determinations are set out into Sections II.B and II.C.

### II.A Description of an Embodiment of the FSTP Analyzer as a Whole - Exemplified by the '884 PTR

As just outlined, Section II.A is split into the Sections II.A.1 and II.A.2, which explain the embodiments of the functionalities - by applying them to the '884 PTR - of the 1^{st} resp. 2^{nd} facts determination stages of the FSTP analyzer as a whole, leaving assessing these facts' plcs- and pmgp-independency to the FSTP user, as shown for the '884 case**¹⁰⁾** (though both may also be assessed automatically at least up to some limited pmgp complexity**¹⁴⁾**).
▪ Section II.A.1 is split into parts II.A.1.1-4, which explain 4 steps of the FSTP analyzer embodiment's start from properly identifying/interpreting a patent's natural language disclosures (as understood by the skilled person and in the light of the prior art) and its derivation from them of the PTR's formal D/B-ANC matrices, while
▪ Section II.A.2 is split into parts II.A.2.1-2, which explain how the FSTP analyzer embodiment derives from such D/B-ANC matrices the PTR's technical secondary basic resp. plcs-/pmgp (=semantic/creative) facts.

FIG 5a shows these steps of invocations of functionalities of the 1. center of knowledge transformation in any FSTP analyzer embodiment in any PTR analysis. This embodiment's first steps (on the top in FIG 5a) today must be performed interactively with the FSTP user, as explained in Sections II.A.1.1-2 (as well as the above plcs-/pmgp assessment). All the other steps of this FSTP analyzer embodiment are autonomously executable by it. FIG 5b shows that all these steps are performable in almost arbitrary sequences, as indicated by arrows.

### II.A.1 The 1^{st} Facts Determination Stage - Exemplified by the '884-PTR

Sections II.A.1.1-2 of this description of an FSTP Analyzer embodiment make aware - by means of the '884 patent example - that, also for the person of skill in the pertinent art, it is never trivial to grasp, for a PTR, **correctly and completely all the relevant properties** X).n of its TT.p's elements **X** (see Section I.A.5), i.e. all the meanings X).n of all the technical terms X used and disclosed ex- and implicitly**^{1),2)}** in document.p for its TT.p. This is a crucial activity of greatest importance, if these terms are frequently used with quite differing meanings in a broad range of documents - as typically is the case with PTRs from communications technology (see below). Then it is indispensable to read the disclosures of these elements' properties repeatedly and compare them to each other meticulously: There is no other way of finding out, what precise meanings/properties of these terms alias elements **X** of its TT.p are actually disclosed in the specification of document.p - as compared/opposed to the meanings/properties of their peer elements **X.i** of the TT.i's disclosed in the specification of the resp. prior art document.i. Hence the initial determination of these precise relevant properties **X).n** of the elements **X** takes place on the D-level of notion presentation and is based on the skilled person's understanding of these terms/notions/disclosures (see Sections I.A-E). I.e.: The B-level of notion presentation, with its even sharper attributes and concepts (see Sections I.D-E) is not needed for this initial determination, but would frequently be needed in a (sometimes necessary) refinement of it. Taking the example of the '884-PTR: Its TT.p is based - on both levels of notion presentation - on the 4 technical terms "switch", "network", "change over", and "signal", which therefore are chosen as TT.p's "elements **X"** with properties determined precisely in Section II.B, while the four peer terms/elements **X.i** in any document.i/TT.i have significantly different meanings alias properties, as shown in detail in Section II.C.

Section II.A.1.3 elaborates on the relation between these 4 **X's** D-attributes **X).n** (determined in Section I.B) and **X.i).n -** the result being put together as the '884-D-ANC matrix of yet unclear plcs-/pmgp-dependencies.

Section II.A.1.4 shows refining the D- to its B-ANC matrix and the latter's plcs-/pmgp-independencies**¹⁰⁾**.

### II.A.1.1 The Embodiment Supports Correctly Grasping all Relevant Properties of the Elements X of a PTR's TT.p

The above 16 document.i's are associating (sometimes totally) different from each other meanings to their resp. peer 4 **X.i.** The below '884-D/B-ANC matrices and Sections II.B-C will show that virtually no **X.i).n** comes close to its peer **X).n** of TT.p - nevertheless grasping precisely the many relevant properties of the '884-TT.p is facilitated by comparing them to the peer properties of that many TT.i's, even if they are quite different.

As restated above, grasping the relevant properties of a PTR's TT.p and its **X's X).n's** is a nontrivial activity to be performed by the skilled person in the art by carefully considering all the documents' disclosures concerning the TT.p and the TT.i's (see Sections I.A-E). The FSTP Analyzer would eventually help here by advanced means of automatic textual analysis of all documents (i.e. by indexing them, marking them up accordingly and/or hinting at some possible semantics for the constructs marked-up) - but the final responsibility for this step always remains with the FSTP user.

Frequently, it is not possible to precisely and/or completely terminate this first analytical activity concerning a patent's TT.p before having completed the subsequent application of the FSTP to its PTR, due to two reasons:
▪ Questions concerning the precise technical philosophy of the TT.p may arise only that late, when an exhaustive search for an AC for the TT.p brings them up - as this search by an automatic reasoner/prover may check by formal logic (i.e. completely and precisely) the potentially large number of chances to eventually find an AC, which normally (both) is not possible to a human's mind - and
▪ quite new questions about this TT.p may arise as a document.i is added to the PTR's RS, which provide new chances of the existence of a lesser-/not-at-all-to-be-changed AC for its TT.p**¹⁴⁾**, i.e. potentially bringing up differences to the original prior art RS, simply not noticed so far (as in the case of Section II.C.16).

In total: Correctly grasping the TT.p's technical philosophy normally requires a highly iterative process - which to warrant is no problem for this embodiment of the '884-TT.p underlying the below independent claims. It would be started with a TT.p, which is technically incomplete or even incorrect - but which then would be elaborated on and inevitably fixed, as the iterations eventually arrive at double-checking and maximizing the values of Q**^{plcs}** and Q**^{pmgp}**, and to this end first verifying the plcs- and pmgp-independencies of its plcs-/pmgp-facts. I.e.: The FSTP technique of precisely grasping the PTR's TT.p trusts in the "learning by doing" philosophy - and there is no alternative for performing these repeated steps prolongating the initial phase of a PTR's FSTP analysis in order to get it launched correctly, as implemented by the TT.p's embodiment discussed here.

### II.A.1.2 Two Court's Real Life Examples of Massively Failing in Determining the '884-TT.p Correctly

Going beyond the above discussion of the embodiment of the '884 TT.p, this section demonstrates the absolute need - also for a person skilled in the art (see Section I.D) - not to instantly jump at an alleged technique teaching of a patent at the first feeling of having grasped its working as it may arise from reading solely its claim's wording: Proceeding in this easy way already got two courts of very high reputation into the delicate situation of deciding in the '884 case against their earlier precedents, in Germany the X^{th} Panel of the Bundesgerichtshof**³⁾**, BGH, and in the US the District Court of Delaware**³⁾** (both decisions currently being under review resp. on stay).

For a "claim's wording based TT.p" to be legal in the EU, it must additionally be confirmed for it that it does
i) resolve the problem put by the patent's specification to be solved by its TT.p (implied by EPC Article 69) and
ii) not contradict anywhere this patent's specification (see EPC Article 69),
otherwise this claim's interpretation - and hence this alleged TT.p is illegal and must be disposed of.

Only these confirmations make this alleged TT.p lawful**^{1),2)}** - **and this excludes changing/ignoring this problem and/or some disclosure making this TT.p solve it.**

The absolute need of this measure of precaution in determining a patent's TT.p is subsequently proven by means of the '884 demonstration: It clearly exposes the really dramatic discrepancy between
▪ an initially assumed alleged TT.p, as resulting from imposing only the '884 claim's limitations onto it, and
▪ the lawful '884 TT.p, resulting from additionally imposing onto it the above limitations **i)** and **ii).**
This discrepancy is the predominating reason for most of the controversial arguing in patent court cases - though such arguments technically always may be put that simply as to be immediately graspable by non-technicians.

To begin with showing this dramatic discrepancy: The English wording of claims 1 and 2 of the '884 patent in cols. 20-21 contains the 4 elements/terms "switch", "packet-switching network", "change", and " signal", whereby their meanings are limited at least to: *"... transmitting data from* a *firsf switch to* a *second switch* ...*", "*... *packet-switching transmission of the data packets over the packet-switching network...", "*... *checking whether there is* a *control signal for transfer to* a *line-switching connection to the second switch, whereby this signal is emitted by the user of an end device or a network management...", "*... *changing to* a *line-switching data transmission...".*

From these '884 claim limitations follows that the alleged '884 TT.p is a data transfer**⁶⁾** procedure between two switches over **any pair** of a packet and a line switching network**¹⁸⁾** ("procedure" often omitted for brevity). In addition, the '884 specification clearly states the "'884 problem" to be resolved by the '884 TT.p: It namely has to be *"*... a *data **transfer substantially in real time ... particularly important** for Internet **telephony."*** (col. 3:59-62), as confirmed by the '884 claim 8 and additionally by e.g. cols. 2:7-14, 3:13-14, 3:21-25, 4:1-2, 7:24-25, 8:5-9.

The skilled person instantly recognizes that the few limitations of the '884 claim-1 wording doesn't guarantee the real time**⁷⁾** quality of a data transfer limited only by them: It namely allows "non real time" data transfers, as the claim's wording nowhere enforces its signal being triggered, although e.g. the packet-switching network is jammed totally or one of the two switches detects it became unable of using the Internet**⁸⁾**. Hence, such an **"only** '884 claim limitations enforced/enforcing" alleged '884 TT.p fails to meet the legal requirement to resolve the clearly stated '884 problem as just quoted from the '884 specification**¹⁴⁾**, printed in bold..

This **"only** '884 claim limitations enforced/enforcing" alleged '884 TT.p also violates - due to the same reason - two further '884 disclosures describing in technical detail, how the '884 TRANSFER has to work, namely:
**col. 9:37-41:** "... *change-over control device 711* ... ***(a)** monitor*(s) *the bandwidth* of A *TRANSFER and on* **(b)** *understepping or exceeding* a *certain bandwidth and*/*or in the event***⁸⁾** *of* a *time delay when forwarding IP data packets ... to automatically release a control command to change over ... ",*
   and
**col. 9:43-52:** "To *change from packet switching to line switching, ... **(c)*** a *connection is made via the line-switching unit ... all the incoming data of the communications connection considered are no longer directed through the IP-switch* 72 *but through the line-switching unit 73."***⁸⁾**,

While this "only '884 claim limitations enforced/enforcing" alleged '884 TT.p does not work as required by all these quotations - as explained by the preceding paragraphs - both requirements of the EPC Article 69 are met by the legal**¹⁾** '884 data transfer/TRANSFER (it resolves the '884 problem and works as specified), as it
i) does preserve the real-time**⁷⁾** quality (c) - as required by a telephone call**^{14),20)}** - because this TRANSFER**²⁰⁾**
ii) does generate the real-time quality preserving change-over signal proactively, as soon as its given monitoring of its TRANSFER**²⁰⁾** (a) - occurring end-terminal-to-end-terminal - detects an indication of the risk that this real-time quality may be lost (b).

I.e.: The above **limitations** (a)-(c) - additional to the limitations of solely the '884 claim-1 wording - are **mandatory** for the '884 **TT.p** to be lawful, as to the **EPC^{1),2)}.** Ignoring one of them is **unlawful¹⁴⁾.**

That this lawful TT.p actually is an innovation, compared to the then prior art (being represented by the "only '884 claim limitations enforced/enforcing" and hence unlawful/alleged '884 TT.p) - technically both TTs are dramatically different from each other, anyway - is best explained by an analogy: The lawful '884 TT.p is related to the (unlawful) prior art data alleged TT.p exactly just as an airbag is related to a life vest. The lawful '884 TT.p proactively performs the above steps i)-ii) just as an air bag proactively generates automatically, at the latest 0.5 sec after having detected the risk of a crash, by itself the go-off-signal for inflation - i.e. even if afterwards no crash occurs - while the "only '884 claim limitations based"/unlawful alleged '884 TT.p, just as a life vest, does not automatically generate by itself the go-off-signal for inflation/change-over, but its resp. user must generate it (at his discretion and as considered reasonable by him/her), never at the risk it were not necessary, i.e. only at or even after the emergency case has actually occurred.

Wrapping up Sections II.A.1.1-2: Grasping and presenting correctly and completely all the properties of the TT.p in its PTR analysis - regardless whether they are presented in natural language or formalized (see the final part of Section I.C) - may be a big problem not only in this PTR's FSTP analysis but in any kind of lawful analysis of this PTR, i.e. also in its usual/classical analysis. While it would be a big misunderstanding to assume that the FSTP analysis of the PTR could guarantee to avoid presenting its TT.p incorrectly and/or incompletely, the FSTP yet substantially helps the user to actually avoid any misrepresentation of TT.p: The FSTP method namely forces him/her into that many double-checks of the relevance and completeness of the properties of the TT.p - during the course of the many initial iterations normally being inevitable (see the last paragraphs of Section II.A.1.1), but in particular when developing the redundant B-level presentation of the PTR problem**¹⁴⁾**, introduced for enabling such double checking (among others) - that a non-detected/"residual" misrepresentation of one of these properties is extremely unlikely (provided orderly work is done).

### II.A.1.3 The FSTP Analyzer Embodiment's Determination of a PTR's D-ANC Matrix - Exemplified by the '884 PTR

Starting from the so provided technical fundamental formal/informal facts (see the preceding paragraph) the FSTP automatically resp. its user may determine this PTR's technical formal primary fact, i.e. its D-ANC matrix.

E.g., as shown in Section II.A.1.2, the wording of the '884 independent claims use 4 - in communications technology very frequently used - key terms/elements, A≤**X**≤D. Namely: "switch" **(X=A),** "networks" **(X=B),** "change" **(X=C),** and "control signal" **(X=D).** The precise properties of these 4 '884 elements/terms, as disclosed by the '884 patent - and as understood by the skilled person in the light of prior art (as to their relevance, see Section I.A.5) - are described by 15 informal D-attributes **X).n** defined in Section II.B, A≤**X**≤D, n=1,2,3,....

For providing an initial and quick overview of these meanings of these 15 technical fundamental facts alias '884 D-attributes **X**).**n**, they are outlined very **vaguely**/**incompletely** as follows:
▪ **D-A).1,** as **"Data transfer (DT) always between 2 '884-switches and change at '884 signal"** switch attribute,
▪ **D-A).2,** as **"At potential fault/loss of real time DT quality"** switch attribute,
▪ **D-A).3,** as **"Change only of this communications connection and also during call set-up"** switch attribute,
▪ **D-A).4,** as **"Direct telephone connection possibility"** switch attribute,
▪ **D-A).5,** as **"Anytime start of the call DT by call set-up via packet switching network (PSN)"** switch attribute,
▪ **D-A).6,** as **"Permanent/Different accesses to PSN and line switching network (LSN)**" switch attribute,
▪ **D-B).1,** as **"Comprises any pair of accessible LSN and PSN"** networks attribute**¹⁸⁾**,
▪ **D-C).1,** as **"PSN-independent LSN**-**connection establishment is possible"** change attribute,
▪ **D-C).2,** as **"Retransmission-free user data PSN transfer is possible"** change attribute,
▪ **D-C).3,** as **"Delay time** ≤ **0.5 seconds is possible"** change attribute,
▪ **D-C).4,** as **"No initial consensus for PSN DT required"** change attribute,
▪ **D-C).5,** as **"No later consensus for change to LSN DT required"** change attribute,
▪ **D-D).1,** as **"External origin + 2 causes or internal origin + many causes of generation"** signal attribute,
▪ **D-D).2, as "Trigger of change-over never subject to LSN non-accessibility"** signal attribute and
▪ **D-D).3, as "Trigger of change-over never subject to any user information or confirmation"** signal attribute.

The notions used in these sketches of the precise **D**-**X**).**n**'s show that the properties/meaning, which the skilled person associates with the terms A-D contain much more skill based information than the layman associates with them.

Rearranging the informal/formal results of Sections II.B and II.C leads to the D-ANC matrix**³⁾**:

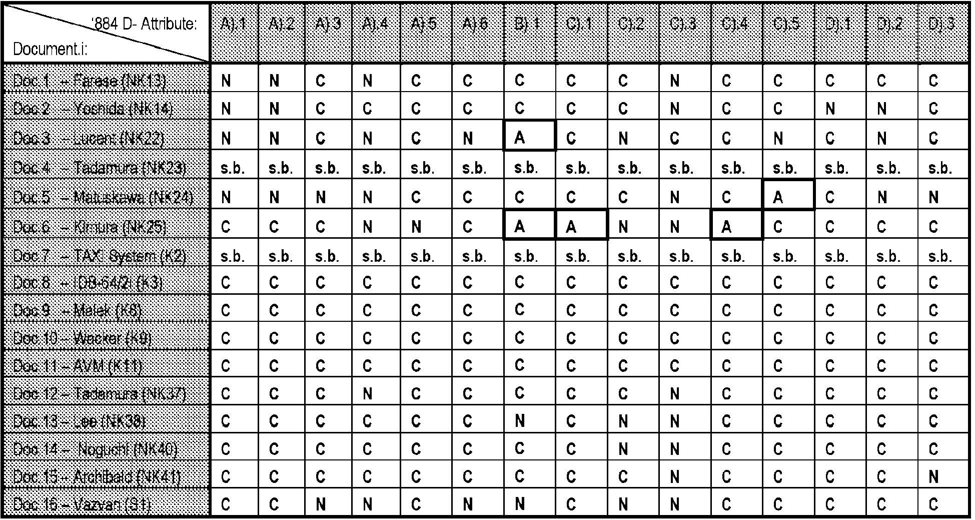

In the '884 case the attributes **X**.**i**).**n**'s of document.i (see Section II.C) need no complete description, as the skilled person in telecommunications can ascertain immediately from the document.i disclosures, which of the D-ANC relations holds for their peer **X**).**n**'s. Otherwise the **X**.**i**).**n**'s may be described completely and formally, just as the **X**).**n**'s - again: both as understood by the skilled person in the light of prior art (as to their relevance, see Section I.A.5) - in order to enable the FSTP to automatically determine the D-ANC matrix.

This D-ANC matrix shows that of the 15 '884 attributes **D-X).n** by the 16 prior art documents
▪ **only 4 are anted by a document.i,** i.e. only for 4 columns there is an i with "**D**-**X**.**i**).**n**'s ants **D**-**X**).**n**'s",
▪ **11 D-X).n's are not anted at all⁹⁾,** i.e. for 11 columns and all i's holds "**D**-**X**.**i**).**n**'s not-ants **D**-**X**).**n**'s",
▪ **at least 7 D-X).n's are contradicted in each document.i,** i.e. for any i at least 7 **"D-X.i).n** contradict **D-X).n".**

Thus, these 3 lines about the '884 technical primary facts on the D-level seem to provide a first indication of the nonobviousness of the '884 TT.p over the prior art (represented by the '884 RS) - but nothing is said so far about the D-concepts' independence. The B-ANC matrix shows that this indication therefore is not yet conclusive.

Finally, a remark is in place on the admissibility of using formal attributes in this context, as practiced by the FSTP technology. Using formal attributes for precisely presenting the PTR's TT.p and its TT.i's, i.e. their terms' meanings - unusual hitherto in patent law contexts, not practising this preciseness in describing the substance of the PTR - is legitimized unrestrictedly by the transitivity law of logic in the form of:
"If holds: *A* = *B* and *C.i relates_somehow_to B,* then also holds: *C.i relates_somehow_to A*".

Here, each of the 15 formal '884 attributes ***B*** is logically equal to its natural language/graphics '884 disclosures, ***A**,* in total being the respective "informal '884 attribute" (see Section II.B). Thus ***A*** = ***B**.*

Let ***C.i*** denote ***A***'s peer "informal document.i attribute" consisting of the respective natural language/graphics disclosures in document.i. Section II.C then determines the D-ANC relation between the informal attribute ***C.i*** and the formal attribute ***B***. Therefore the same D-ANC relation also holds - due to the above transitivity law - between the natural language/graphics document.i disclosure ***C.i*** and the natural language/graphics '884 disclosure ***A***.

In other words: The formal attributes ***B*** are eliminable from the D-ANC relation between the aforementioned peer natural language/graphics disclosures in the document.i, 1≤i≤16 and the '884 patent - i.e. do not affect the D-ANC relation between them. Complementing the D-ANC matrix such that it also showed the underlying original natural language/graphics disclosures of the **D**-**X**).**n**'s and the **D**-**X**.**i**).**n**'s would require only to make it 3-dimensional by adding a tower to each of its entries, i.e. 15 such towers to each line, i.e. by adding to each of the 15 formal '884 attributes **D-X).n** its respective tower of its natural language/graphics '884 disclosure, and applying the same to each of the formal 15 **D-X.i).n** entries of each of the 16 document.i.

The 15 '884-D-attributes ***B*** (and the concepts they refer to) do not only create a more precise understanding of the '884 TT.p (than was possible without them) by compactifying and "pinning down to technical details" the mass of information of its natural language/graphics TT.i disclosures, but they also establish a uniform reference system for all of them: As to the determination of the aforementioned D-ANC relation between the '884 patent's natural language/graphics disclosures and the 16 documents.i, even more important for is B-attributes.

### II.A.1.4 The FSTP Analyzer Embodiment's Determination of a PTR's B-ANC Matrix - Exemplified by the '884 PTR

On the D-level it may be hard to figure out, whether a PTR's D-ANC matrix is complete and plcs-/pmgp-independent or not (see Sections I.A.5 and I.B.1). Therefore its FSTP analysis requires that it is presented on a B-level, thus increasing not only the likelihood of the completeness of the attributes/properties identified for it but also the capability to assessing the plcs- and pmgp-independency of the B-ANC matrix**¹⁴⁾**.

In other words: Although 1-cMs of prior art D-attributes/concepts resp. the inventive thoughts**¹⁰⁾** underlying them exist already on the D-level, there these thoughts' plcs-/pmgp-independencies - as required by precedents - may be hard to prove, as D-attributes often share D-concepts. The B-level is supposed to remove this problem.

Such a set of plcs-/pmgp-independent and even binary B-attributes/concepts is derivable straightforward for the '884-PTR**¹⁰⁾** - in other cases this may be more difficult**¹⁴⁾**. Note that this set of B-attributes/concepts is often not unique, i.e. there may be alternative B-attributes/concepts**¹⁴⁾**.

The conceptualization of the '884 D-ANC matrix replaces the 15 **D-X).n**'s by conjunctions of 28 **B**-**X**).**n**'s. Thereby 4 **D**-**X**).**n**'s - **A).1, A).2, D).2** and **D).3** needing a "conceptual decomposition" - are replaced by conjunctions of 17 **B**-**X**).**n**'s. E.g.: The attribute **D).2** (see Section II.B) is replaced by the conjunction of two B-level-attributes, i.e. **"D).2** = Y iff **C.23=Y** and **C.24=Y".** These 4 **D-X).n**'s are decomposed into several **B**-**C**.**k**'s, as highlighted in the B-ANC matrix by bold horizontal lines. The other 11 **D-X).n**'s are replaced by the resp. single 11 B-attributes/concepts **B-X).12-22.**

This B-ANC matrix shows that of the 28 '884 attributes **B-X).k** by the 16 prior art documents
▪ **only 19 are anted by a document.i,** i.e. in only 19 columns holds for some i **"B-X.i).k** ants **B-X).k",**
▪ **9 B-X).k's are not anted at all**, i.e. for k=1,7,13,14,18,19,22,23,25 and all i **"B-X.i).k** not-ants **B-X).k",**
▪ **each document.i contradicts at least 9 B-X).k's,** i.e. for any i at least 9 **"B-X.i).k** contradicts **B-X).k".**

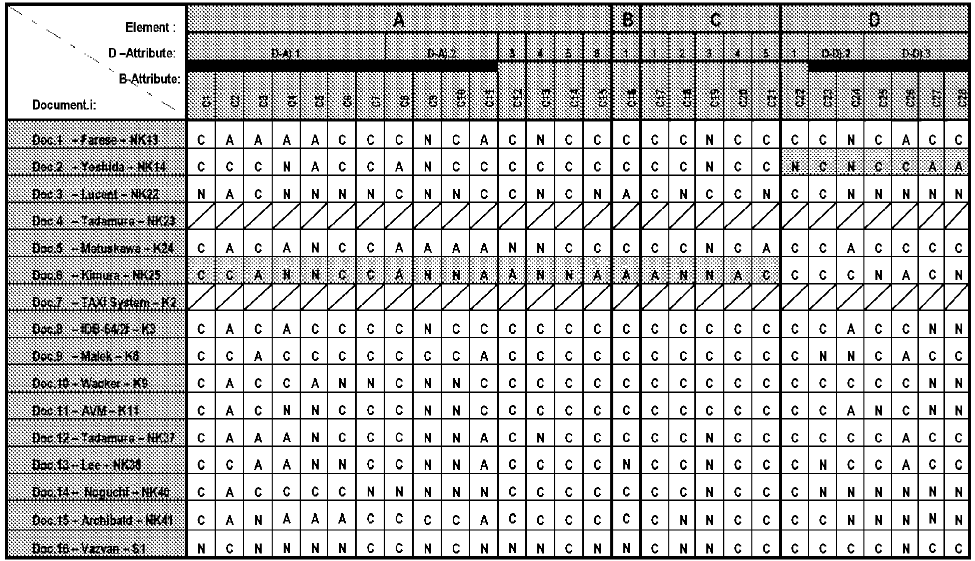

This demonstrates - as explained in detail by the 3 square points at the end of Section II.A.2 - the increased significance of the FSTP analysis if performed by means of the B-ANC matrix, as compared to its performance by means of the D-ANC matrix, which sometimes even is questionable.

### II.A.2 The 2^{nd} FSTP Facts Determination Stage - Exemplified by the '884-PTR

The embodiment of the FSTP analyzer's 2^{nd} facts determination stage is demonstrated for the skilled person by explaining its working when it supports deriving from a PTR's D/B-ANC matrices, its technical secondary basic and plcs D/B-fact.

Not all steps of this derivation are relevant for this FSTP patent application. Just as with the transformation of the PTR problem from its D- to its B-level presentation, Section II.A1.4 emphasized already that on the B-level
■ additional implicit disclosures are stimulated by technical skill of technical facts, which have to be taken into account in the FSTP analyzer's facts determination. I.e.: The above 4 elements' B-notions/meanings are not only refinements of their D-notions/meanings, but - in order to clarify the pending independency questions - the B-notions/meaning also semantically "enrich" (as known ever since from IT system design techniques) these D-notions/meaning by PTR specific implicit skill based disclosures of additional "lower level" technical features. This allows transforming their D-notions/meanings into conjunctions of binary B-attributes/concepts.
■ the assessment of the plcs- and pmgp-independencies¹⁴⁾ of the B-ANC matrix may be performed by the FSTP user**¹⁰⁾** and/or autonomously by the FSTP analyzer - both cases having no implication on this FSTP patent application (and hence need not be considered by an embodiment of the FSTP analyzer).

### II.A.2.1 Determining the Technical Secondary Basic Fact on the D/B-Levels - The Basic FSTP Tests

This fact is determined on the D/B-level by the **"Second Basic FSTP Test"** in the below boxes. I.e.: The **"First Basic FSTP test**" is provided here just for completion. Their wordings are slightly adapted to the '884 case.

| **First Basic FSTP Test:** |
|---|
| *If holds for a document.i, 1≤i≤16, and (at least) one element X, A≤X≤D, and (at least) one n = 1, 2, 3, ...:* |
| ***"X.i).n** not-ants **X).n"** or even **"X.i).n** contradicts **X).n"*** |
| *for the pair***^{*11*)}** *of **<X***).***n***,***X.i).n>,*** |
| *i.e.: if line.i in the ANC matrix contains in its* ***X*)**.***n***-*column an **"N",** or even* a *"**C**", then* |
| *the technical secondary basic fact indicates that the TT.i does not anticipate the '884-TT.p,* as |
| *"document.i not-ants* '*884*-*patent*" *resp. even "document.i contradicts '884-patent", i.e.* |
| *"TT.i not-ants TT.p" resp. even "TT.i contradicts TT.p".* |
| |

| **Second Basic FSTP Test:** |
|---|
| *If holds for all document.i's, 1≤i≤16, and (at least) 2 **X).n**-columns***¹²⁾** |
| ***"X.i).n*** *not*-*ants* ***X)***.***n***" *or even **"X.i).n** contradicts **X).n"*** |
| *for each pair**¹¹⁾** of **<X).n, X.i).n**>,* |
| *i.e.: if each line.i in the ANC matrix contains for these 2 **X).n**-columns an "**N**", or even* a *"**C**", then* |
| *the technical secondary basic fact indicates that the '884-TT.p is nonobvious over the 16 TT.i's,* as *for any 0-AC holds:* |
| *"0-AC not-ants TT.p" resp. even "0-AC contradicts TT.p",* |
| *whereby this technical secondary basic fact is the more indicative the larger the number q of such **X).n-**columns is.* |

Both tests mirror the Highest Courts' precedents (see Section I.F). The Second Basic FSTP test shows at a first glance at the '884 D/B-ANC matrix the non-existence of a free 0-AC, not to speak of an element-wise and/or contradiction-free 0-AC**¹⁴⁾.** I.e.: The determination of the '884 PTR's technical secondary basic D-/B-facts is trivial.

More precisely, applying the Second Basic FSTP test to the '884 D/B-ANC matrices shows for the '884 technical secondary basic fact: q = ∞/∞ for the normal anticipation relation**¹⁴⁾,** as both matrices exclude that any other D-element than B (of the 4 D-elements A-D) - i.e. all its D-attributes resp. B-attribute/concepts - is anticipated by a single D- or B-level 0-AC**¹³⁾**. And even with the free anticipation relation (not allowed by any NPS) the q-value of the '884 PTR's technical secondary basic fact of the still is ∞/∞ on both levels**¹⁴⁾.**

### II.A.2.2 Determining the Technical Secondary Semantic and Creative Facts on the B-Level - The Full FSTP Tests

For the remainder of Section II.A the D-level is less important, due to its various problems explained above. Also, of the technical secondary B-fact of the '884 PTR only its Q**^{plcs}**-/Q**^{pmgp}**-value is derived and discussed - i.e. its semi-automatically determinable set of all shortest Q**^{plcs}**-/Q**^{pmgp}**-paths is left aside - which is a lower bound for the number of independent thoughts needed for inventing the '884 TT.p starting from the '884 RS's combinatorial B-hull**^{14),10)}.** The FSTP analyzer thereby determines this number on the B-level by repeatedly applying the ground laying precedents of the German BGH**²⁾** concerning the notion of independent thoughts (see Section I.F).

Repeating this application precisely is - due to its mental complexity - practically impossible without the precision and formalization of a PTR problem enforced by the terms/notions of its FSTP analysis. Using a natural language only is insufficient**⁵⁾**: Any natural language meets many human requirements but not those of a facts determination problem in a clearly defined but complex legal case**¹⁵⁾**, in particular a PTR problem**¹⁶⁾** - whereas this mental complexity is easily controlled in its FSTP analysis. It namely transforms the PTR problem into the finite exhaustive search problem of determining the minimal number q of independent 1-cMs for which there is a q-AC**¹⁴⁾**.

In the '884 case the finite set of all ACs, RS**⁺**, consists of 16**⁴** (i.e. 65 536) quadruples, due to all combinations of elements**^{14).B}** <A.i, B.j, C.k, D.I> with 1 <= i, j, k, I <= 16, the attributes of which may be combined in an anticipation combination AC. The 4 quadruple components of any quadruple alias AC consist of 6/1/5/3- resp. 15/1/5/7-tupels of the D/B-attributes underlying the entries of the D/B-ANC matrix.

The FSTP analyzer would determine by a finite exhaustive check of all ACs - which may e.g. be organized column-wise in the D/B-ANC matrix and/or check not all combinations or their quadruples or their attributes and/or check at least one combination or quadruple or attribute partially only and/or apply other efficiency increasing shortcuts when traversing RS**⁺** - that
▪ if the normal plcs option**^{14)-A/B/C}** is assumed as pmgp, there is no AC in RS⁺ at all, i.e. Q**^{pmgp}** = ∞.
▪ if only the element-integrity preserving plcs option is assumed as pmgp**^{14).B/C}**, the B-attribute quadruple of the combination <A.6, B.6, C.6, D.2> would lead to the value of Q**^{pmgp}=**17 - verifying that at least 17 independent 1-cMs**¹⁰⁾** of the '884 prior art (i.e. the '884 RS) are unavoidably for reducing "to 0" the RS's deficiency regarding anticipating the '884 TT.p**¹⁰⁾.** I.e. that at least 17 independent conceptual modifications alias 1-cMs of the prior art are minimally necessary to this end, and hence 17 independent thoughts**¹⁰⁾** creating these 17 1-cMs, such that TT.p is anticipated by the resp. RS**⁺**/mod(17-cM)**¹⁴⁾**. Thereby this particular 17-cM is defined to turn - in this specific B-attribute quadruple of (A.6, B.6, C.6, D.2), i.e. in this specific AC over the B-ANC matrix - any Nor C-entry into an A-entry.
▪ if the free plcs option is assumed as pmgp**^{14).C}**, the minimal value of q still amounts to 9 - meaning that at least 9 '884-concepts are not disclosed in any one of the 16 prior art document.i (or even excluded/contradicted by it) - but no pmgp of an NPS allows this flexibility in putting together a Q**^{pmgp}**-AC**¹⁴⁾.**

Note, finally, that this example of the working of an FSTP analyzer embodiment explains an important phenomenon: Why an in hindsight allegedly obvious solution of a technical problem originally was nonobvious by any means over prior art. The PTR's secondary technical creativity fact namely shows that inventing this TT.p in truth then had needed recognizing a whole bunch of technical modifications of the then prior art (here: at least 17 independent 1-cMs**¹⁰⁾**) although these modifications then were totally unappealing, as any single one of them (i.e. of these 17 plcs- and pmgp-independent 1-cMs) seemed to be as such "inconspicuous", "technically unusual", "unimportant", while at the same time also being "in its technical realization pretty complex and expensive". In the '884 case this conglomerate of uncomfortable negligibilities blocked for years recognizing that their technical fixings are indispensable for meeting the market needs of Internet telephony - i.e. these seemingly marginal negligibilities.

### II.B Determining the '884 TT.p's D-Attributes

As announced by the beginning of Section II.A, here the 15 D-attributes X).n of the 4 '884 elements of the '884 TT.p (i.e. of the '884 method claim) are determined by identifying their natural language/graphic '884 disclosures (= technical fundamental informal facts), in the specification and in the claims of the '884 patent, and translating them into these more precise "formal" '884 attributes. For reasons of efficiency, subsequently this identification of the natural language/graphic '884 disclosures takes place only per references, their D-concepts are not commented**¹⁸⁾,** and future intermediary stages of any translation of these informal disclosures into these 15 formal '884 attributes are left out as well. Note that already these formal attributes are the results of many iterations in identifying such relevant disclosures, i.e. reprecising them repeatedly.

All subsequent definitions of the 15 '884 D-attributes, being results of these reiterations - including their references to explicit and implicit D-disclosures**¹⁾** - are presented in a uniform scheme, which comprises recurring sentence fragments and acronyms supposed to mean:
▪ The definition of an '884 D-attribute (in bold) is followed by references to '884 disclosures justifying it.
▪ By **"CsoD-X).n** ...." (Cso = Consequence of) - this acronym means **"D-X.i).n** not-ants **D-X).n**" or even **"D-X.i).n** contradicts **D-X).n**"(= **"naoc",** which both Section II.C.i determines) - at least one condition and/or **D-X.i).n** is given, with the disclosure of which in document.i at least the first of these two relations holds.
▪ The "II.C.i" line identifies documents.i disclosing such "naock"-ing **D-X.i).n**'s, as ascertained in Section II.C.i.

Finally, as to the BGH precedents: The '884 TT.p is to be used for the interpretation of the '884 claims. This implies that for all '884 elements the limitations apply, which are indispensable for achieving the real-time quality of the data transfer for Internet telephony (as disclosed by the '884 specification, see Section II.A.1.2).

### D-A).1 This '884 "switch" attribute states: "The first switch in total lies before <or behind, which is ignored here> its subscriber lines, and knows the data transfer in a considered communications connection to a second switch, and carries out the first change-over always from a packet switching network to a line switching network, but if and only if an '884 signal is detected and a line-switching connection is available or established, whereby this detection may occur anytime."

The '884 "switch"-attribute **D-A).1** is disclosed for example in claims 1 and 2 of the '884 patent and the '884 signal in col. 9:23-41.

CsoD-**A**).**1**, if in document.i "a second switch", "a data transfer in a communications connection considered", "its change-over iff an '884 signal is detected" and/or "a packet switching network" is not-anted or contradicted **(="naoc").**

II.C.i shows: Cso**D-A).1** holds for all document.i, 1≤i≤16.

### D-A).2 "In the event of a threatening loss of real time quality of this data transfer the first switch automatically triggers for just it the change-over from packet-switching to line-switching transfer."

**D-A).2** is disclosed e.g. in claim 8 and in the '884 specification in col. 9:23-52, see Section II.A.1.2.

Cso**D-A).2,** if in document.i is naoc a change triggered by the communications connection considered if it fulfills the condition of Section II.A.1.2, and/or exceeding a certain noise level at the 2^{nd} switch.

II.C.i shows: Cso**D**-**A**).**2** holds for all document.i, 1≤i≤16.

### D-A).3 "The first switch is capable of changing-over right with the beginning of the packet-switched data transfer of its considered communications connection, and with just this data transfer, and without interrupting the communications connection, and only triggered by it alone."

**D-A).3** is disclosed in the '884 claims 1, 2, 8, 10, 11 as well as e.g. in cols. 3:15-19, 3:57-62, 7:18-26, 9:23-52 and 11:33-39 (Fig. 5a).

Cso**D-A).3**, if in document.i is naoc: a packet switching network, and/or that this change-over may take place right with the beginning of its packet-switched data transfer and/or only with this data transfer and/or without interrupting the communications connection and/or only triggered by this alone.

II.C.i shows: Cso**D-A).3** holds for all document.i, 1≤i≤16.

### D-A).4: "The first switch has an interface for connecting at least 1 ISDN or analog or mobile telephone." D-A).4 is disclosed e.g. in Figures 1 and 4, as well as e.g. in cols. 7:40-47, 8:23-30.

Cso**D-A).4**, if in document.i is naoc: a connection possibility of such a telephone.

II.C.i shows: Cso**D-A).4** holds for all document.i, 1≤i≤16.

### D-A).5: "The first switch always starts the considered packet-switched data transfer by starting a telephone call set-up or generally establishing a real-time communications connection¹⁷⁾."

**D-A).5** is disclosed by col. 9:8-10: this disclosure says that an '884 data transfer starts by packet switching. I.e.: There is no packet-switched data transfer for a telephone call prior to starting its establishment, i.e. it starts right with the call set-up or establishment of the communications connection.

Cso**D-A).5**, if document.i has to start the data transfer for a call with something different, e.g. either with first establishing a network connection or a V.120 connection or a request for access**¹⁹⁾** or is naoc: a telephone call and/or a packet switching network.

II.C.i shows: Cso**D-A).5** holds for all document.i, 1≤i≤16.

### D-A).6: "The 1^{st} switch - if it is not part of a network, see D-A).1 above - has permanent access to the line-switching network as well as to the packet-switching network".

**D-A).6** is disclosed by '884 claims 1 and 2 - which both provide for their switches permanent access to a line-switching network and to a packet-switching network, by a dialed switched line over this line switching-network in claim 1 and by a permanent line in claim 2 - as well as the description of Figure 1 in col. 7:49-52 as well as the description of Figure 4 in col. 8:34-52, 9:42-52 (of the IP-switch 72 and of the line-switching device 73, respectively, which both show two separate lines for their two network accesses).

Cso**D-A).6,** if document.i discloses only one network access for accessing both switching functionalities, as in the case of an ISDN and other "integrated" networks, or is naoc: any access details at all and/or a packet-switching network.

II.C.i shows: Cso**D-A).6** holds for all document.i, 1≤i≤16.

### D-B).1: "The '884 TT.p is applicable to any combination of a packet and a line switching network." D-B).1 is unmistakably disclosed¹⁸⁾ by col. 6:43-45.

Cso**D-B).1,** if document.i discloses a single ISDN only (but no two networks, a line and a packet switching one), or only another single integrated network, or does not disclose an arbitrary packet-switching network at all, or does not disclose this broad applicability of its invention to such combinations of networks.

II.C.i shows: Cso**D-B).1** holds for all document.i with i≠3 or 6.

### D-C).1 "The establishment of a line-switched connection is independent of the packet-switching network."

**D-C).1** is disclosed in the '884 specification by the line switching device 73, col. 8:47-50. It comprises a digital coupling 731, as is required for switching telephone channels through a line-switching network, and establishes the line-switching connection for a change either as "new" ISDN/PSTN connection or on an existing ISDN/PSTN connection by multiplexing/demultiplexing it, col. 10:56-63, 11:18-23. In both cases it has no contact with the packet-switching network.

Cso**D-C).1**, if in document.i a total breakdown of the hypothetical packet-switching network makes the establishment of a line-switching connection impossible (as in the ISDN or MUMTS cases), or if this is by design not possible in spite of the problem-free functioning of the packet switching network.

II.C.i shows: Cso**D-C).1** holds for all document.i with i≠6.

### D-C).2: "At least a part of the user data transfer occurs retransmission-free."

**D-C).2** is disclosed e.g. in col. 3:61-62 by stating the '884 data transfer would be suitable for Internet telephony, whereby cols. 7:1 and 8:39 disclose the use of the UDP to this end. Meeting this requirement avoids that a transferred speech signal, containing residual bit errors, is retransmitted - thus additionally garbling it, in particular if it is compressed, cols. 2:9-10, 8:39-46.

Cso**D-C**).**2**, if in document.i each user-data transfer takes place over the packet switching network by X.25 or TCP or another residual bit errors and/or packet loss avoidance protocol (because these unavoidable cases always "retransmit" the packets involved and thus make the data transfer unsuitable for telephony) - which holds e.g. if the UDP is not disclosed for an Internet data transfer (but just TCP), or while only the ISDN-D channel is used for user data, or only "data networks" are envisaged (as these always use such "all residual errors avoiding" protocols).

II.C.i shows: Cso**D-C).2** holds for all document.i with 1≤i≤16.

### D-C).3: "The time delays in the data transfer of the communications connection are ≤ 0.5 seconds"

**D-C).3** is disclosed in col. 2:10 and 7:11-12.

Cso**D-C).3,** if in document.i is naoc: this data transfer or its upper limit of at most 0.5 sec time delay.

II.C.i shows: Cso**D-C).3** holds for all document.i with 1≤i≤16.

### D-C).4 & D-C).5: "No condition requires the 1^{st} switch to achieve a consensus via the packet-switching network with the network or the second switch or its user

### D-C).4 initially for starting sending telephone-call data or

### D-C).5 anytime for starting changing-over to line-switching data transfer, if the '884 signal is present."

**D-C).4** and **D-C).5** are disclosed by claims 1 and 2, which both enable the first switch to unilaterally (i.e. without achieving via the packet-switching network any kind of consensus) start at any time its packet-switching data transfer to the second switch of telephone call specific data to the latter and/or, if only an '884 signal is present, its change-over to line-switched data transfer.

CSo**D-C).4** & **D-C).5,** if in document.i, prior to the start of the telephone call, the first switch has to achieve a consensus via the packet-switching network with the network or with the second switch or its user - as is the case with using the packet-switching function of an ISDN, or with the initial establishment of a V.120 connection, or with the initial request of access to a mobile packet-switching network.

II.C.i shows: Cso**D-C).4** & **D-C).5** holds for all document.i with i≠6 and ≠5.

### D-D).1: "An '884 signal may only have and always has at least 1 of the 3 alternative origins/causes: It is

▪ **either sent to the first switch by**
   o **another switch, triggered by a network management, or**
   o **an end terminal of the considered communications connection, triggered by its user,**
▪ **or automatically generated by the first switch and by only this data transfer¹⁹⁾**
**- otherwise it is no '884 signal."**

**D-D).1** is disclosed as discussed in Section II.A.1.2.

Cso**D-D).1** if in document.i a signal has another than or cannot have one of these origins/causes. As this disclosure represents an exhaustive positive list of pairs <place of origin, cause of generation> capable of generating an '884 signal - consequently any pair <place of origin = host computer, cause of generation = application> is excluded from generating an '884 signal.

II.C.i shows: Cso**D-D).1** holds for all documents.i, 1≤i≤16.

### D-D).2: "A signal initiates a change-over if and only if it has the D-D).1 property, and then never is in vain because of the non-accessibility of a line-switching network - otherwise it is no '884 signal."

**D-D).2** is disclosed e.g. in claim 1 and 2 (see Section II.A.2).

Cso**D-D).2** if in document.i the signal is triggered either by an application/host or by the first switch itself but not according to Section II.A.1.2 and/or if it can be rejected by anyone or anything.

II.C.i shows: Cso**D-D).2** holds for all documents.i, 1≤i≤16.

### D-D).3: "An '884 signal can be generated with the start of the packet-switching data transfer to the second switch (in particular: prior to sending out to this network anything to the latter, by the first switch), and is, at least if generated by a user or the first switch, limited in its effectiveness to the communications connection considered, and needs nobody's confirmation for becoming effective, and need not be brought to the knowledge of a user - otherwise it is no '884 signal."

**D-D).3** is disclosed in claims 1 and 2 (see Section II.A.1.2).

Cso**D-D).3** if in document.i the change-over signal cannot be generated by the first switch immediately after starting the first packet-switching data transfer to the second switch (which means: even prior to its sending out anything to the latter to this network), or cannot be limited - if generated by a user or the first switch - in its effectiveness to the data transfer only of the communications connection considered, or requires somebody's confirmation for becoming effective, or must be brought to the knowledge of a user.

II.C.i shows: Cso**D-D).3** holds for all documents.i, 1≤i≤16.

Note that prior to having invented the '884 TT.p none of these sophisticated 15 D-attributes was known**¹⁰⁾.** This confirms the insight of Section II.A.2.2 why at the priority date the '884 invention was not obvious at all. As namely these 15 D-attributes of the TT.p were not known then, it also was impossible to do what can be done today by hind-sight: namely performing an exhaustive search for the minimal number of 1-cMs of a combination of properties of prior art TT.i's such that this changed combination ants TT.p. Note that even today, this backwards-looking analysis by an exhaustive search for the minimal plcs-height - measured by the number of independent thoughts**¹⁰⁾** for inventing 1-cMs changing the prior art appropriately - of the '884 TT.p over its then prior art RS must be confirmed by the skill in telecommunications technology, in particular as its terms/notions originally had caused that much confusion that international agreements have been established for them^{**20**)}.

These therefore by skill confirmed '884 D-attributes nevertheless had to be refined into even more PTR problem oriented '884 B-attributes - which again are confirmed by the pertinent skill - such as to assess the independency requirement is met by the above determined D/B-Q**^{plcs}** thoughts creating the '884 TT.p**¹⁰⁾.**

### II.C The D/B-ANC Relations for the '884 PTR, i.e. its '884 D/B-ANC Matrices - Determined "By Hand"

The following Sections II.C.i determine**²⁰⁾** "by hand" (i.e. by the author, not the FSTP analyzer) on the D-level for each of the 16 documents.i and for any of its relevant natural language disclosures - i.e. for this document.i's 15 **D**-**X**.**i**).**n**'s being peer to the **D-X).n'**s - whether it not-ants or even contradicts D-X).n (which determines the D-ANC matrix's entries A or N or C). Determining the entries of the B-ANC matrix by hand works the same way, but is even more elaborate, and therefore is omitted here for brevity.

Below these ANC statements are underlined, followed by their brief justifications - unless these are trivial. The abbreviations/acronyms introduced at the beginning of Section II.B apply also below, of which the acronym "see Cso**D-X).n**" is permanently used.

### II.C.1 FARESE - Document.1 / NK13

Farese discloses a dynamic changing of the ISDN *"access path*" - between a *USER TERMINAL 10* (= alleged first switch) via the *ISDN SWITCH* 35 and the *HOST SITE* 80 (alleged second switch), FIGs. 4 and 5 - between a line-switched B-channel and a packet-switching D-channel connection during a "*host session*" running over this access path, controlled by instructions of the *"host computer*" in this session, in order to correspond to the respective "*communication needs of the session*"*,* col. 6:61-7:10. Its single network is an ISDN.

From the document. 1 disclosures follow the 15 "not-ants "/"contradicts" relations:

| | | |
|---|---|---|
| **D-A.1).1** not-ants **D-A).1:** | see Cso**D-A).1** and (Cso**D-D).1** or Cso**D-D).2** or Cso**D-D).3** | **(N)** |
| **D-A.1).2** not-ants **D-A).2:** | see Cso**D-A).2** | **(N)** |
| **D-A.1).3** contradicts **D-A).3:** | Farese discloses that his terminal 10 can only change during an already established host session, i.e. not while establishing it, Figs 4 and 6 or their brief descriptions in col. 8:66-9:2 and 9:7-10. | **(C)** |
| **D-A.1).4** not-ants **D-A).4:** | Terminal 10 discloses no telephone connectability. | **(N)** |
| **D-A.1).5** contradicts **D-A).5:** | see Cso**D-A).5** | **(C)** |
| **D-A.1).6** contradicts **D-A).6:** | see Cso**D-A).6** | **(C)** |
| **D-B.1).1** contradicts **D-B).1:** | see Cso**D-B).1** | **(C)** |
| **D-C.1).1** contradicts **D-C).1:** | see Cso**D-C).1** | **(C)** |
| **D-C.1).2** contradicts **D-C).2:** | see Cso**D-C).2** | **(C)** |
| **D-C.1).3** not-ants **D-C).3:** | see Cso**D-C).3** | **(N)** |
| **D-C.1).4** contradicts **D-C).4:** | see Cso**D-C).4** | **(C)** |
| **D-C.1).5** contradicts **D-C).5:** | see Csob**D-C).5**, since setting up a line-switching "access path" depends on the consensus of the second switch, to use the V.120 protocol (further), see Fig. 6, lines 607-685 | **(C)** |
| **D-D.1).1** contradicts **D-D).1:** | see Cso**D-D).1** | **(C)** |
| **D-D.1).2** contradicts **D-D).2:** | see Cso**D-D).2** | **(C)** |
| **D-D.1).3** contradicts **D-D).3:** | see Cso**D-D).3** | **(C)** |

### II.C.2 YOSHIDA-Document.2/NK14

Yoshida discloses a "*system for access to an ISDN from a packet data handling system",* col.1:11-12 - i.e. an *"ISDN terminal adapter*" (comprising all devices in Figure 1 between the *"LAN NT* 16" and the *"ISDN NT13*")-wherein the former system achieves that the transfer of data packets from the latter system "*to a called party*", as a reaction to a "*channel change signal*" (caused by the increase of the data packet rate generated by the latter system), changes from using a packet-switching "*virtual circuit*" to a line-switched "*virtual circuit*" of an ISDN, without thereby interrupting the transfer of data packets, col. 2:9-14, ABSTRACT. Its sole network: an ISDN.

From the document.2 disclosures follow the 15 "not-ants"/"contradicts" relations:

| | | |
|---|---|---|
| **D-A.2).1** not-ants **D-A).1:** | see Cso**D-A).1** | **(N)** |
| **D-A.2).2** not-ants **D-A).2:** | see Cso**D-A).2** | **(N)** |
| **D-A.2).3** contradicts **D-A).3:** | see Cso**D-A).3**, since Yoshida discloses by means of | **(C)** |

▪ Fig. 3 and col. 5:22-26 that it comprises in a change always all communications connections and their data transfers - implemented by means of a virtual circuit - and moreover
▪ Col.5:27-64 that its change cannot take place during the connection establishment until its CONTROL CHANNEL PROCESSOR 27 has received a "connection acknowledgement signal".

| | | |
|---|---|---|
| **D-A.2).4** contradicts **D-A).4**: | Yoshida excludes any non-IP telephone connectability | **(C)** |
| **D-A.2).5** contradicts D-A).5: | see Cso**D-A.2).5** | **(C)** |
| **D-A.2).6** contradicts **D-A).6:** | see Cso**D-A).6** | **(C)** |
| **D-B.2).1** contradicts **D-B).1:** | see **CsoD-B).1** | **(C)** |
| **D-C.2).1** contradicts **D-C).1:** | see Cso**D-C).1** | **(C)** |
| **D-C.2).2** contradicts **D-C).2:** | see Cso**D-C).2** | **(C)** |
| **D-C.2).3** not-ants **D-C).3:** | see Cso**D-C).3** | **(N)** |
| **D-C.2).4** contradicts **D-C).4:** | see Cso**D-C).4** | **(C)** |
| **D-C.2).5** contradicts **D-C).5:** | see Cso**D-C).5** | **(C)** |
| **D-D.2).1** not-ants **D-D).1:** | see Cso**D-D).1**, since the change signal is only triggered by the CHANNEL CHANGER 29, thus automatically by an unknown reason, col. 6:61-66 | **(N)** |
| **D-D.2).2** not-ants **D-D).2:** | see Cso**D-D).2**, since as in CSo**D-D.2).1** | **(N)** |
| **D-D.2).3** contradicts **D-D).3:** | see Cso**D-D).3**. | **(C)** |

### II.C.3 LUCENT - Document.3/ NK22

The following 14 "not-ants "/"contradicts" relations result from document.3 disclosures:

| | | |
|---|---|---|
| D-**A.3).1** not-ants **D-A).1:** | see Cso**D-A).1** | **(N)** |
| D-**A.3).2** not-ants **D-A).2:** | see Cso**D-A).2** | **(N)** |
| D-**A.3).3** contradicts **D-A).3:** | see Cso**D-A).3** | **(C)** |
| **D-A.3).4** not-ants **D-A).4:** | see Cso**D-A).4** | **(N)** |
| **D-A.3).5** contradicts **D-A).5:** | see Cso**D-A).5** | **(C)** |
| **D-A.3).6** not-ants **D-A).6:** | see Cso**D-A).6** | **(N)** |
| **D-C.3).1** contradicts **D-C).1:** | see Cso**D-C).1** | **(C)** |
| **D-C.3).2** not-ants **D-C).2:** | see Cso**D-C).2** | **(N)** |
| **D-C.3).3** contradicts **D-C).3:** | see Cso**D-C).3** | **(C)** |
| **D-C.3).4** contradicts **D-C).4:** | see Cso**D-C).4** | **(C)** |
| **D-C.3).5** not-ants **D-C).5:** | see Cso**D-C).5** | **(N)** |
| **D-D.3).1** contradicts **D-D).1:** | see Cso**D-D).1** | **(C)** |
| **D-D.3).2** not-ants **D-D).2:** | see Cso**D-D).2** | **(N)** |
| **D-D.3).3** contradicts **D-D).3:** | see Cso**D-D).3** | **(C)** |

### II.C.4 TADAMURA - Document.4 / NK23

Document.4 is content wise identical to document. 12/NK37, analyzed in Section II.C.7.

### II.C.5 MATUSKAWA - Document.5 / NK24a

Matuskawa discloses an *"ISDN terminal adapter 1*" (e.g. Figure 1 or claim 1), which automatically switches a "*data communication*" of the "*transmitting DTE 2*" from packet-switching to line-switching mode, according to the results of its "*timer 14*", (e.g. col. 1: <claim 1> or col. 2: <0013> or col. 3: <0018>, 2^{nd} sentence) stating *"no reply*" and "*data delayed*" with the packet-switching data transfer. Note that timer 14 according to col. 3: <0019> measures the time of the layer-3-data packets DTE-to-DTE delivery confirmation. Such packets are definitively not the '884 end-terminal-to-end-terminal packets of the '884 communications connection considered and therefore do not belong to the '884 data transfer. While they do may generate a "switching request" signal if a predetermined time is exceeded (ABSTRACT), this signal has nothing to do with an '884 signal. In addition: Its single network is an ISDN.

From the document.5 disclosures result 14 "not-ants"/" contradicts" relations.

| | | |
|---|---|---|
| **D-A.5).1** not-ants **D-A).1:** | see Cso**D-A).1** no communications connection/2^{nd} switch | **(N)** |
| **D-A.5).2** not-ants **D-A).2:** | see Cso**D-A).2**, since M does not observe the local forwarding of packets | **(N)** |
| **D-A.5).3** not-ants **D-A).3:** | see Cso**D-A).3**, since M can only change with the expiry of its timer 14 | **(N)** |
| **D-A.5).4** not-ants **D-A).4:** | see Cso**D-A).4** | **(N)** |
| **D-A.5).5** contradicts **D-A).5:** | see Cso**D-A).5** (see footnote 19) | **(C)** |
| **D-A.5).6** contradicts **D-A).6:** | see Cso**D-A).6** | **(C)** |
| **D-B.5).1** contradicts **D-B).1:** | see Cso**D-B).1** | **(C)** |
| **D-C.5).1** contradicts **D-C).1:** | see Cso**D-C).1** | **(C)** |
| **D-C.5).2** contradicts **D-C).2:** | see Cso**D-C).2** | **(C)** |
| **D-C.5).3** not-ants **D-C).3**: | see Cso**D-C).3** | **(N)** |
| **D-C.5).4** contradicts **D-C).4:** | see Cso**D-C).4** | **(C)** |
| **D-D.5).1** contradicts **D-D).1:** | see Cso**D-D).1** | **(C)** |
| **D-D.5).2** not-ants **D-D).2:** | see Cso**D-D).2** | **(N)** |
| **D-D.5).3** not-ants **D-D).3:** | see Cso**D-D).3** | **(N)** |

### II.C.6 KIMURA-Document.6/NK25a

Kimura discloses a "*line* packet selection communication system*" consisting of a "*network control device 18*" *or* "*mesh control device 18*" and "*line terminating device 19*" on the one side of a *"subscriber's line 21*" and on the other side of it a "*communication mode switching device 20*" (Figure 3 and its description on page 281/282: bottom/top). Both these sides' units jointly switch the *"mode to communicate*" of a terminal 17 from packet-switching to line-switching service, by means of a corresponding request by the terminal or the "*exchanger*" (= one of the line-/packet-switching devices in the network, 13 or 14) being a "*control signal*" on 21 - wherein 21 is the sole "*subscriber's line*" on which both network services are accessible (but not the networks as such providing these services). They execute this switch-over of 21 *"per call or during call, according to communication form (conversational form or file transmission form, etc.), quantity of information for communication, and*/*or the other <party> of the communication, sharing the subscriber's line terminating device*.", page 281 last paragraph and page 286 first paragraph, whereby the term "*during call*" has a very specific meaning, as explained next.

Throughout a "*call*" real-time data transfer guarantee is neither required nor disclosed by Kimura - only the possibility of switching-over the "*communication mode"* of the terminal if its "*communication form*" changes. This is confirmed by the last/first lines on pages 285/286 in detail: that namely Kimura's change-over solely"... *has the effect of the user economically materializing the most suitable communication method according to the communication form (conversational form or file transmission form), quantity of information communicated and the other party of fhe communication*, *sharing the subscriber's line terminating device.*"- with which he explicitly rules out that he executes his change during the "*conversational communication form*", which is permanently maintained throughout the duration of a telephone call and in which all its data transfer takes place. I.e.: Kimura has not designed his change over for guaranteeing the real-time data transfer quality throughout a call, and he does not guarantee it.

I.e.: By means of Kimura's change over it is impossible to guarantee the real-time data transfer quality throughout a call, as there is no way of instantly reacting to a threatening and/or actual loss of this quality, e.g. due to fluctuations of service quality of the packet-switched network or detection of the non-availability of some resource within his devices 18/19 required for using the packet-switched network to this end.

Finally, Kimura not discloses/claims that switching-over 21 *"during call*"- while the communications form is not changed, as is the case in a telephone call - the current call can be continued. Rather in the only disclosures referring to switching over *"during call",* in Case 3, absolutely nothing similar is disclosed. Instead, as in Case 1 and Case 2, Kimura assumes also here that the "incoming call" from line-switcher 13 considered in Case 3 (see page 284, right column, last paragraph) is an independent call (as the former call's *"communications form"* is not changed, if it is a telephone call, as in the '884 case), on detection of which - unless its acceptance is refused by the called terminal 17 (page 285, left column, first paragraph) - the ongoing "*communication by packet exchange mode is ended"* (see also page 285, left column, lower part, i.e. the '884 telephone call). I.e.: while the Kimura switching-over of 21 may occur also during an ongoing packet-switched call over it, this would be disrupted if it is due to a non-refused incoming call from line-switcher 13.

This corresponds precisely to the technical problem (economically important at that time), which Kimura wants to solve and explains in detail on page 281/282 last/first paragraphs: namely to offer on only a single subscriber line 21 to a user at terminal 17 at any time access to both the line- and packet-switching functionalities of networks. But this Kimura solution by far does not guarantee a real time data transfer in a telephone call over an arbitrary packet-switching network (e.g. the Internet) and line-switching, not to speak of providing access to two such separate networks. Kimura therefore nowhere claims its solution were suitable for guaranteeing real-time data transfers as required for telephone calls over any packet-switching network, if only also an ISDN/PSTN were accessible - but rules this out quite explicitly (see above) at the aforementioned references.

Kimura has accordingly nothing to do with the '884 change of a data transfer between two separate network accesses - quite the contrary: his sole aim is to replace these separate network accesses by a single access to both their services.

From the document.6 disclosures follow 12 "not-ants"/contradicts" relations:

| | | |
|---|---|---|
| **D-A.6).1** contradicts **D-A).1:** | see Cso**D-A).1**, since K's system lies on both ends of the subscriber line 21 | **(C)** |
| **D-A.6).2** contradicts **D-A).2:** | see Cso**D-A).2**, as K rules out real-time reaction, see above | **(C)** |
| **D-A.6).3** contradicts **D-A).3:** | see Cso**D-A6).3**, as in Cso**D-A).2** | **(C)** |
| **D-A.6).4** not-ants **D-A).4:** | see Cso**D-A).4** | **(N)** |
| **D-A.6).5** not-ants **D-A).5:** | see Cso**D-A).5** | **(N)** |
| **D-A.6).6** contradicts **D-A).6:** | see Cso**D-A).6**, see above | **(C)** |
| **D-C.6).2** not-ants **D-C).2:** | see Cso**D-C).2** | **(N)** |
| **D-C.6).3** not-ants **D-C).3:** | see Cso**D-C).3** | **(N)** |
| **D-C.6).5** contradicts **D-C).5:** | see Cso**D-C).5**, see page 3, right col. 2, 2^{nd} para. | **(C)** |
| **D-D.6).1** contradicts **D-D).1:** | see Cso**D-D).1**, since K's signals do not have all 3 alternative causes | **(C)** |
| **D-D.6).2** contradicts **D-D).2:** | see Cso**D-D).2**, as K's signals can be refused sometimes, see above | **(C)** |
| **D-D.6).3** contradicts **D-D).3:** | see Cso**D-D).3**, as K's signals sometimes need acknowledgement, see above | **(C)** |

### II.C.7 TAXI System - Document.7 / K2

The technical document.7 is equal to document.8/K3, see the next Section.

### II.C.8 IDB-64/2.i- Document.8 / K3

The document.8 discloses an IDB (= **I**SDN **d**ial **b**ackup) system, which has access to an ISDN and thus can substitute network connections via modem-driven leased lines - in the event of the latter's breakdown - but does not consider, at all, substituting network connections via a packet-switching network, the use of which is based on techniques being dramatically different from those for using leased lines and modems. The establishment of a substituting network connection over the ISDN for the '884 communications connection by the IDB system is ruled out also by several other technical reasons. For example: The IDB system definitively is not capable of changing-over only a single telephone call or communications connection (as it does not even know this notion indispensably required by the '884 invention), and its establishing of its ISDN bypass of its modem-driven leased lines lasts 1-4 seconds (destroying the needed real-time quality of an ongoing telephone call or communications connection).

From the document.8 disclosures follow the 15 "not-ants"/"contradicts" relations:

| | | |
|---|---|---|
| **D-A.8).1** contradicts **D-A).1:** | see Cso**D-A).1**, since packet switching data transfer ruled out | **(C)** |
| **D-A.8).2** contradicts **D-A).2:** | see Cso**D-A).2**, see above | **(C)** |
| **D-A.8).3** contradicts **D-A).3:** | see Cso**D-A).3**, see above | **(C)** |
| **D-A.8).4** contradicts **D-A).4:** | see Cso**D-A).4** | **(C)** |
| **D-A.8).5** contradicts **D-A).5:** | see Cso**D-A).5** | **(C)** |
| **D-A.8).6** contradicts **D-A).6:** | see Cso**D-A).6**, see above | **(C)** |
| **D-B.8).1** contradicts **D-B).1:** | see Cso**D-B).1** | **(C)** |
| **D-C.8).1** contradicts **D-C).1:** | see Cso**D-C).1** | **(C)** |
| **D-C.8).2** contradicts **D-C).2:** | see Cso**D-C).2** | **(C)** |
| **D-C.8).3** contradicts **D-C).3:** | see Cso**D-C).3** | **(C)** |
| **D-C.8).4** contradicts **D-C).4:** | see Cso**D-C).4** | **(C)** |
| **D-C.8).5** contradicts **D-C).5:** | see Cso**D-C).5** | **(C)** |
| **D-D.8).1** contradicts **D-D).1:** | see Cso**D-D).1** | **(C)** |
| **D-D.8).2** contradicts **D-D).2:** | see Cso**D-D).2** | **(C)** |
| **D-D.8).3** contradicts **D-D).3:** | see Cso**D-D).3** | **(C)** |

### II.C.9 MALEK - Document.9 / K8

Document.9 discloses only a number of aspects of service-integration in communications networks (always to be achieved within these networks). The quite different idea of an integrated use of separate accesses to a packet- and a line-switching network (not needing any support by these networks) - insofar being technically and organizationally dramatically different to the integrated use of packet- and line switching network services at a single network access - is not even mentioned by it, in particular not in a single communications connection. I.e., Malek clearly excludes the '884 switch with its separate access to each of these two types of separate networks.

From the document.9 disclosures follow 15 "not-ants"/" contradicts" relations:

| | | |
|---|---|---|
| **D-A.9).1** contradicts **D-A).1:** | see Cso**D-A.9).1**, since a network external switch is ruled out | **(C)** |
| **D-A.9).2** contradicts **D-A).2:** | see Cso**D-A.9).2**, see above | **(C)** |
| **D-A.9).3** contradicts **D-A).3:** | see Cso**D-A.9).3** | **(C)** |
| **D-A.9).4** contradicts **D-A).4:** | see Cso**D-A.9).4** | **(C)** |
| **D-A.9).5** contradicts **D-A).5:** | see Cso**D-A.9).5** | **(C)** |
| **D-A.9).6** contradicts **D-A).6:** | see Cso**D-A.9).6** | **(C)** |
| **D-B.9).1** contradicts **D-B).1:** | see Cso**D-B.9).1** | **(C)** |
| **D-C.9).1** contradicts **D-C).1:** | see Cso**D-C.9).1** | **(C)** |
| **D-C.9).2** contradicts **D-C).2:** | see Cso**D-C.9).2** | **(C)** |
| **D-C.9).3** contradicts **D-C).3:** | see Cso**D-C.9).3** | **(C)** |
| **D-C.9).4** contradicts **D-C).4:** | see Cso**D-C.9).4** | **(C)** |
| **D-C.9).5** contradicts **D-C).5:** | see Cso**D-C.9).5** | **(C)** |
| **D-D.9).1** contradicts **D-D).1:** | see Cso**D-D.9).1** | **(C)** |
| **D-D.9).2** contradicts **D-D).2:** | see Cso**D-D.9).2** | **(C)** |
| **D-D.9).3** contradicts **D-D).3:** | see Cso**D-D.9).3** | **(C)** |

### II.C.10 WACKER-Document.10/K9

Document 10 also considers, similar to document.8 and its IDB system, the use of network access integrated packet- and line-switching services of internally somehow interconnected networks, while it completely ignores the question of the integrated use of completely separate networks, as they frequently existed at the priority date and still exist today. The primary difference is: Its focus is on supporting direct LAN/LAN-modem-connections in case of their overload or failure or temporary replacement (as they then may be more expensive than ISDN connections), whereby now the IDB system of document.8 is replaced by a system consisting of an IA (= *"ISDN adapter*") together with a suitable LAN/LAN router.

The document.10 disclosures imply 15 "not-ants"/" contradicts" relations:

| | | |
|---|---|---|
| **D-A.10).1** contradicts **D-A).1:** | see Cso**D-A).1**, | **(C)** |
| **D-A.10).2** contradicts **D-A).2:** | see Cso**D-A).2** | **(C)** |
| **D-A.10).3** contradicts **D-A).3:** | see Cso**D-A).3** | **(C)** |
| **D-A.10).4** contradicts **D-A).4:** | see Cso**D-A).4** | **(C)** |
| **D-A.10).5** contradicts **D-A).5:** | see Cso**D-A).5** | **(C)** |
| **D-A.10).6** contradicts **D-A).6:** | see Cso**D-A).6** | **(C)** |
| **D-B.10).1** contradicts **D-B).1:** | see Cso**D-B).1** | **(C)** |
| **D-C.10).1** contradicts **D-C).1:** | see Cso**D-C).1** | **(C)** |
| **D-C.10).2** contradicts **D-C).2:** | see Cso**D-C).2** | **(C)** |
| **D-C.10).3** contradicts **D-C).3:** | see Cso**D-C).3** | **(C)** |
| **D-C.10).4** contradicts **D-C).4:** | see Cso**D-C).4** | **(C)** |
| **D-C.10).5** contradicts **D-C).5**: | see Cso**D-C).5** | **(C)** |
| **D-D.10).1** contradicts **D-D).1:** | see Cso**D-D).1** | **(C)** |
| **D-D.10).2** contradicts **D-D).2:** | see Cso**D-D).2** | **(C)** |
| **D-D.10).3** contradicts **D-D).3:** | see Cso**D-D).3** | **(C)** |

### II.C.11 AVM- Document.11 / K11

Document. 11 discloses the same technical teaching as document.8 and document. 10, except that now the ISDN adapter and router are integrated and that the replacement alias backup circuits for e.g. modem direct connections are in the background and now remote connections are made primarily via the ISDN, whereby the at the time very popular NetWare MultiProtocolRouter was always used (so that practically all then important LAN and WAN protocols could be routed therewith, particularly IPX, TCP/IP, Apple Talk...). These "network interoperability" aspects of data transfers have however nothing to do with their real-time quality (being an indispensable property in telephone calls). Consequently, the connection of a telephone to this AVM router is again technically ruled out, just as the monitoring of the quality of an individual communications connection and performing therein a dynamic change-over with it.

From the document. 11 disclosures therefore result (as with document.8/10) 15 "contradicts" relations

| | | |
|---|---|---|
| **D-A.11).1** contradicts **D-A).1:** | see Cso**D-A).1** | **(C)** |
| **D-A.11).2** contradicts **D-A).2:** | see Cso**D-A).2** | **(C)** |
| **D-A.11).3** contradicts **D-A).3:** | see Cso**D-A).3** | **(C)** |
| **D-A.11).4** contradicts **D-A).4:** | see Cso**D-A).4** | **(C)** |
| **D-A.11).5** contradicts **D-A).5:** | see Cso**D-A).5** | **(C)** |
| **D-A.11).6** contradicts **D-A).6:** | see Cso**D-A).6** | **(C)** |
| **D-B.11).1** contradicts **D-B).1:** | see Cso**D-B).1** | **(C)** |
| **D-C.11).1** contradicts **D-C).1:** | see Cso**D-C).1** | **(C)** |
| **D-C.11).2** contradicts **D-C).2:** | see Cso**D-C).2** | **(C)** |
| **D-C.11).3** contradicts **D-C).3**: | see Cso**D-C).3** | **(C)** |
| **D-C.11).4** contradicts **D-C).4:** | see Cso**D-C).4** | **(C)** |
| **D-C.11).5** contradicts **D-C).5:** | see Cso**D-C).5** | **(C)** |
| **D-D.11).1** contradicts **D-D).1:** | see Cso**D-D).1** | **(C)** |
| **D-D.11).2** contradicts **D-D).2:** | see Cso**D-D).2** | **(C)** |
| **D-D.11).3** contradicts **D-D).3:** | see Cso**D-D).3** | **(C)** |

### II.C.12 TADAMURA - Document.12 / NK37 & Document.4 / NK23

These elaborations are based on document.7/NK37, with identical content as document.4/NK23.

Tadamura's technique teaching is based on a COMMUNICATION CONTROL APPARATUS 200, a special "ISDN terminal adapter" (Figures 2 and 26), which switches a data communication over an ISDN from packet to line switching mode or vice versa, if the actual mode is proving inadequate, col. 1:11-44. From the description of the technical problem to be solved by it - by means of its target guidelines 1-4 in col. 2:24-62 - and the description of the associated solution alias technique teaching according to the invention in col. 2:63-4:68, it is evident that he has designed his change-over not for the purpose of ensuring the real-time quality of a data transfer, e.g. to make it suitable for Internet telephony. Rather all these 4 problem descriptions and the solution provided by Tadamura - inter alia with its exclusion of change-over decisions by the network management, as is absolutely indispensable to this end - disclose that his technical solution explicitly excludes the real-time guarantee of its data transfer. In addition: It knows only a single network, namely an ISDN.

From the document. 12 disclosures result 15 "not-ants"/"contradicts" relations:

| | | |
|---|---|---|
| **D-A.12).1** contradicts **D-A).1:** | see Cso**D-A).1**, since T. knows no '884 signal | **(C)** |
| **D-A.12).2** contradicts **D-A).2:** | see Cso**D-A).2**, since T. excludes real-time data transfer, see above | **(C)** |
| **D-A.12).3** contradicts **D-A).3:** | see Cso**D-A).3**, in T. a connection cannot trigger a change | **(C)** |
| **D-A.12).4** not-ants **D-A).4:** | see Cso**D-A).4** | **(N)** |
| **D-A.12).5** contradicts **D-A).5:** | see Cso**D-A).5** (see footnote 12) | **(C)** |
| **D-A.12).6** contradicts **D-A).6:** | see Cso**D-A).6**, see above | **(C)** |
| **D-B.12).1** contradicts **D-B).1:** | see Cso**D-B).1** | **(C)** |
| **D-C.12).1** contradicts **D-C).1:** | see Cso**D-C).1** | **(C)** |
| **D-C.12).2** contradicts **D-C).2:** | see Cso**D-C).2** | **(C)** |
| **D-C.12).3** not-ants **D-C).3:** | see Cso**D-C).3** | **(N)** |
| **D-C.12).4** contradicts **D-C).4:** | see Cso**D-C).4** | **(C)** |
| **D-C.12).5** contradicts **D-C).5:** | see Cso**D-C).5** | **(C)** |
| **D-D.12).1** contradicts **D-D).1:** | see Cso**D-D).1** | **(C)** |
| **D-D.12).2** contradicts **D-D).2:** | see Cso**D-D).2** | **(C)** |
| **D-D.12).3** contradicts **D-D).3:** | see Cso**D-D).3** | **(C)** |

### II.C.13 LEE - Dokument.13 / NK38

Lee's technique teaching puts in practice a "dynamic connection management in integrated communication networks" , Abstract and Figure 9 - more precisely: in a single "connection-orientated integrated communication network", col. 1:15-18, 2:52-54, not being ruled out by further developed future ISDNs, but today not yet realizable - which maintains for the duration of a "connection" its acceptable QOS (= quality of service). All its claims are actually pure method claims, worded in such a way that they know no switches at all, neither inside nor outside of this network. It recognizes at this network only two end users and an information transfer between them, col. 1:15-18. I.e.: It even does not disclose how these two users interact with this single communications network, but excludes that they each use 2 network accesses for this.

It states in a beautifully philosophical - but absolutely not-enabling - manner that the information transfer between them is achieved by means of network functions, which select network operating means for same and allocate these along a suitable path for same. The logical association between the communication end users he names "call", the chain of network operating means supporting it at any time - along the above path - he names "connection" and by "connection management he means the network function which sets up, maintains and tears down connections", col. 1:18-27. He supports a call taking place at various times through different connections.

From the document. 13 disclosures result 15 "not-ants"/"contradicts" relations:

| | | |
|---|---|---|
| **D-A.13).1** contradicts **D-A).1:** | see Cso**D-A).1**, as Lee (= L) knows no switch | **(C)** |
| **D-A.13).2** contradicts **D-A).2:** | see Cso**D-A).2**, as above | **(C)** |
| **D-A.13).3** contradicts **D-A).3:** | see Cso**D-A).3**, as above | **(C)** |
| **D-A.13).4** contradicts **D-A).4:** | see Cso**D-A).4**, as above | **(C)** |
| **D-A.13).5** contradicts **D-A).5:** | see Cso**D-A).5**, as above | **(C)** |
| **D-A.13).6** contradicts **D-A).6:** | see Cso**D-A).6**, as above | **(C)** |
| **D-B.13).1** not-ants **D-B).1**: | see Cso**D-B).1** | **(N)** |
| **D-C.13).1** contradicts **D-C).1:** | see Cso**D-C).1**, as L recognizes no line-switching connection | **(C)** |
| **D-C.13).2** not-ants **D-C).2:** | see Cso**D-C).2**, as L ants nothing in this regard | **(N)** |
| **D-C.13).3** not-ants **D-C).3:** | see Cso**D-C).3**, as L ants nothing in this regard | **(N)** |
| **D-C.13).4** contradicts **D-C).4:** | see Cso**D-C).4** | **(C)** |
| **D-C.13).5** contradicts **D-C).5:** | see Cso**D-C).5** | **(C)** |
| **D-D.13).1** contradicts **D-D).1:** | see Cso**D-D).1**, as L knows no switch | **(C)** |
| **D-D.13).2** contradicts **D-D).2:** | see Cso**D-D).2**, as L knows no switch | **(C)** |
| **D-D.13).3** contradicts **D-D).3:** | see Cso**D-D).3**, as L knows no switch | **(C)** |

### II.C.14 NOGUCHI - Document.14 / NK40

Noguchi's technique teaching is focused on the functional design of a "*distributed processing ISDN switch*" (see ABSTRACT or col. 3/4:44/12). The patent outlines the latter's structure, as to the invention, consisting of the switch-internal bus system functional units (60/61/62), and the functional units (10, 11) on the terminal side connected thereto, and the processing/exchanging/transferring side functional units (30, 40, 50) of the "voice/data" information coming in/going out from/to the DTEs, as well as the interactions of these groups of functional units. It thus has absolutely nothing to do with its use in a data transfer from one to another such distributed-operating ISDN switch and/or switching-over of this data transfer from the use of a packet switching network to the use of a line switching network, and therefore cannot address real-time quality features of thus (not existing) data transfers.

From the document.14 disclosures result 15 "not-ants"/contradicts" relations:

| | | |
|---|---|---|
| **D-A.14).1** contradicts **D-A).1:** | see Cso**D-A.14).1**, as Noguchi ants no PSN | **(C)** |
| **D-A.14).2** contradicts **D-A).2:** | see Cso**D-A.14).2**, as N. rules out a PSN | **(C)** |
| **D-A.14).3** contradicts **D-A).3:** | see Cso**D-A.14).3**, as above | **(C)** |
| **D-A.14).5** contradicts **D-A).5:** | see Cso**D-A.14).5**, as above | **(C)** |
| **D-A.14).6** contradicts **D-A).6:** | see Cso**D-A.14).6**, as above | **(C)** |
| **D-B.14).1** contradicts **D-B).1:** | see Cso**D-B.14).1**, as above | **(C)** |
| **D-C.14).1** contradicts **D-C).1:** | see Cso**D-C.14).1**, as above | **(C)** |
| **D-C.14).2** not-ants **D-C).2:** | see Cso**D-C.14).2**, as above | **(N)** |
| **D-C.14).3** not-ants **D-C).3:** | see Cso**D-C.14).3**, as N ants nothing in this regard | **(N)** |
| **D-C.14).4** contradicts **D-C).4:** | see Cso**D-C.14).4**, as N rules out a PSN | **(C)** |
| **D-C.14).5** contradicts **D-C).5:** | see Cso**D-C.14).5**, as above | **(C)** |
| **D-D.14).1** contradicts **D-D).1:** | see Cso**D-D.14).1**, as N excludes a network management | **(C)** |
| **D-D.14).2** contradicts **D-D).2:** | see Cso**D-D.14).2**, as N rules out an "'884" trigger | **(C)** |
| **D-D.14).3** contradicts **D-D).3:** | see Cso**D-D.14).3**, as N rules out a PSN | **(C)** |

### II.C.15 ARCHIBALD - Document.15 / NK41

Archibald's technique teaching is based on a "*data communications network*" which uses a "leased line" 102, as *"primary communications channel*" and a "*dial-up line*" 101 of a *"telephone network"* 200 as "*backup*/*secondary communications channel*" between two modems 100 and 300, which in turn are connected to the two DTEs 50 and 450. When one of the two modems encounters a reduction of the "signal quality" on the rented line it automatically sets-up a dial line "data connection".

From the document.15 disclosures result 15 "not-ants"/"contradicts" relations:

| | | |
|---|---|---|
| **D-A.15).1** contradicts **D-A).1:** | see Cso**D-A).1**, as Archibald rules out a packet switching network | **(C)** |
| **D-A.15).2** contradicts **D-A).2:** | see Cso**D-A).2**, as above | **(C)** |
| **D-A.15).3** contradicts **D-A).3:** | see Cso**D-A).3**, as above | **(C)** |
| **D-A.15).4** contradicts **D-A).4:** | see Cso**D-A).4**, as Archibald rules out connection of a telephone | **(C)** |
| **D-A.15).5** contradicts **D-A).5:** | see Cso**D-A).5**, as Archibald rules out a packet switching network | **(C)** |
| **D-A.15).6** contradicts **D-A).6:** | see Cso**D-A).6**, as above | **(C)** |
| **D-B.15).1** contradicts **D-B).1:** | see Cso**D-B).1**, as above | **(C)** |
| **D-C.15).1** contradicts **D-C).1:** | see Cso**D-C).1**, as above | **(C)** |
| **D-C.15).2** contradicts **D-C).2:** | see Cso**D-C).2**, as above | **(C)** |
| **D-C.15).3** not-ants **D-C).3:** | see Cso**D-C).3**, as A ants nothing in this regard | **(N)** |
| **D-C.15).4** contradicts **D-C).4:** | see Cso**D-C).4**, as Archibald rules out a packet switching network | **(C)** |
| **D-C.15).5** contradicts **D-C).5:** | see Csob**D-C).5**, as A. rules out a packet switching network | **(C)** |
| **D-D.15).1** contradicts **D-D).1:** | see Cso**D-D).1**, as A rules out a network management for this | **(C)** |
| **D-D.15).2** contradicts **D-D).2:** | see Cso**D-D).2**, as A rules out an "'884" trigger for this | **(C)** |
| **D-D.15).3** not-ants **D-D).3:** | see Cso**D-D).3**, as A has first to determine an "*error rate*" | **(N)** |

### II.C.16 VAZVAN-Document.16/S1

This alleged anticipation document is of particular interest concerning the question of identifying additional relevant properties/attributes/concepts, as discussed in Section I.B. These additional relevant properties/attributes/ concepts were not at all needed in the FSTP analysis of the '884 PTR so far, but adding the TT.Vazvan to the '884 PTR's RS might have raised feelings of uneasiness about the question, how far it were anticipating the '884 TT.p - though it deals with a technical problem quite different from the one resolved by the '884 TT.p²¹⁾.

In order to prove such feelings are without any foundation, this Section II.C.16 shows the massive differences in the D-attributes - and even clearer in the B-attributes alias concepts - underlying both of them, the '884 TT.p and the TT.Vazvan (see the D-ANC and the B-ANC matrices in Section II.A.1.3-4), i.e. that not a single one of the D-attributes or B-attributes of the TT.Vazvan actually would disclose the peer D-attribute or B-attribute of the TT.p.

Of particular interest is here that these differences are caused also by '884 concepts introduced only when this alleged prior art document was presented (e.g. the "permanent" concept in C.15), which had not been noticed prior to having added the TT.Vazvan to the '884 PTR's RS - although these additional properties/attributes/concepts did exist prior to this addition (but then would be irrelevant, see Section I.A.5).

Vazvan's technique teaching deals with an integrated system of mobile terrestrial as well as satellite networks, which he calls MUMTS (= multimode universal mobile telecommunications system), connected also to fixed line networks (31, 33, 34, 44), which is used by so-called MMTs/DMTs (= multimode/dual mode terminals) terminals (43). While moving, a terminal of this kind may establish one "connection" - more precisely: one "data link" - after another to several networks, one at a time, by requesting access to the respective network and, after have received same, use the various services of the then "network connected". An MMT/DMT may forward its connection (i.e. data link), as it moves from one network to another one between these, by "handover" alias "hand-off", more precisely by "access (requested/granted) handover alias hand-off". The handover decision for it always is based also on the quality of the connection - while an '884 change-over signal often ignores quality.

Note that VAZVAN's "*connection*" (it is a "data link" in internationally standardized telecommunications experts' language**²⁰⁾**) is not the '884 end-terminal-to-end-terminal "communications connection" of a telephone call disclosed in the '884 specification. I.e.: In VAZVAN's patent
**i)** A "*connection*" is to be understood as the data link between on the one hand DMT/MMT and on the other hand MSC (terrestrial) or satellite earth station (non-terrestrial) - see e.g. page 7:33, 8:36, 9:4, 11:10 12:5-6, 13:11-12, 21:4, 21:35, 22:2, 22:15, 24:14, 24:20, 24:37, 25:3, 25:28, 25:33.
**ii)** A "*connection*" allows the user of a DMT/MMT "real-time access" (page 8:34) to a network in the MUMTS, more precisely: to its MSC (terrestrial network) or its satellite earth station (non-terrestrial network). It realizes the connectivity of a DMT/MMT with the MUMTS, but not an end-terminal-to-end-terminal communications connection - though this access connection is necessary for the technical realization of the latter.
**iii)** A "*connection*" between a DMT/MMT and its current network is replaced, in an "access handover" by a new "*connection*" between this DMT/MMT and the new MSC respectively the new satellite earth station (page 6:8, 6:16-16, 9:1-6, 13:11-12, 20:9). The DMT/MMT does not therefore permanently have access, as in the '884 case, to a network necessary for its data transmission, but must instead request this access each time before entering such a network (page 9:4-6) and thereby leave its current network, because it may only belong to a single network at any time (apart from handover periods), namely to the network whose VLR it contains (page 20:1-6, 20:9-11).
**iv)** A "*connection*" of the DMT/MMT in a new network exists only after its MSC or satellite earth station has granted it access, i.e. it has "accepted" the handover (page 7:2 for the former, 7:4 for the latter). The DMT/MMT cannot at any time use a line-switching network for establishing a line-switched connection to the second switch - which is not even disclosed by VAZVAN (because not needed in it).
**v)** *"Access requests*" to a network are alien to the '884 patent, where (see e.g. the lines 8 and 9 in its Fig. 1) the access to both networks is permanently available to both switches.
**vi)** A "*call*" could in principle stand for a) an end-terminal-to-end-terminal data transmission, and/or b) of the '884 communications connections of a telephone call, and/or which c) permanently uses the same two switches - but VAZVAN does not disclose any of these 3 features, but refers exclusively to "data calls".
**vii)** For a "*call*", VAZVAN does not disclose either that its data transmission - realized over a packet-switching network - is guaranteed to be of real-time quality by instantly changing to a line-switching network as soon as the latter is challenged, as this network simply need not be available anytime, while in the '884 case it is.
**viii)** VAZVAN does maintain that a "*call would not be interrupted*" by his handover of a "connection" during a call using it (page 19/20) - but he discloses absolutely nothing enabling how he would achieve this (as this was definitively not part of ordinary skill at his priority date, just as it is today).
**ix)** VAZVAN explicitly discloses that his handover of a "connection" between two networks of his MUMTS requires elaborate cooperation and information exchanges between these networks for achieving it (see the description of FIG.1, page 6:19-page 7:20) - while the '884 change-over requires no such cooperation and/or information exchanges between the involved packet-switched and line-switched networks (which both even don't know about an '884 change-over taking place between them).
**x)** VAZVAN explicitly discloses that his handover decision of a "connection" is always based also on the quality of the connection - while in many cases the '884 change-over signal requires no such consideration.

The aforementioned differences **i)-x)** show that VAZVAN and the '884 patent deal with totally different telecommunications configurations, totally different problems and hence totally different solutions.

Vazvan's TT is restricted per se to mobile networks and mobile terminals. Since its description at one point (page 9:29-31) is however vague and speaks also of fixed networks/telephone terminals, the preceding paragraph also allows the corresponding generalization - but this has no effect on the following relational facts.

From the document. 16 disclosures result 15 "not-ants"/"contradicts" relations:

| | | |
|---|---|---|
| **D-A.16).1** contradicts **D-A).1:** | see Cso**D-A).1**, since Vazvan rules out an '884-signal | **(C)** |
| **D-A.16).2** contradicts **D-A).2:** | see Cso**D-A).2**, since V rules out that the terminal itself triggers a signal | **(C)** |
| **D-A.16).3** not-ants **D-A).3:** | see Cso**D-A).3**, since V ants no packet switching network | **(N)** |
| **D-A.16).4** not-ants **D-A).4:** | see Cso**D-A).4**, since V ants no telephone calls | **(N)** |
| **D-A.16).5** contradicts **D-A).5:** | see Cso**D-A).5**, since V rules out the terminal always has PSN access | **(C)** |
| **D-A.16).6** not-ants **D-A).6:** | see Cso**D-A).6**, since V ants no access to a PSN | **(N)** |
| **D-B.16).1** not-ants **D-B).1:** | see Cso**D-B).1**, since V ants no packet switching network | **(N)** |
| **D-C.16).1** contradicts **D-C).1:** | see Cso**D-C).1**, since V rules out the terminal having constant LSN access | **(C)** |
| **D-C.16).2** not-ants **D-C).2**: | see Cso**D-C).2**, since V speaks only of data network | **(N)** |
| **D-C.16).3** not-ants **D-C).3:** | see Cso**D-C).3**, since V ants nothing in this regard | **(N)** |
| **D-C.16).4** contradicts **D-C).4:** | see Cso**D-C).4**, since V rules out the terminal having constant PSN access | **(C)** |
| **D-C.16).5** contradicts **D-C).5:** | see Cso**D-C).5**, since V rules out the terminal having constant LSN access | **(C)** |
| **D-D.16).1** contradicts **D-D).1:** | see Cso**D-D).1**, since V rules out a network management signal | **(C)** |
| **D-D.16).2** contradicts t **D-D).2:** | see Cso**D-D).2**, since V rules out a "footnote 13" signal | **(C)** |
| **D-D.16).3** contradicts **D-D).3:** | see Cso**D-D).3**, since V rules out a "user transparent" signal | **(C)** |

### III. THE INVENTION'S SUBJECT MATTER AND FUTURE ELABORATIONS ON IT

The meanings of the terms in the below claims' wordings are based on this patent application's TT.p**^{1),2)}**.

The TT.p disclosed comprises an IT architecture - i.e. any one of this TT.p's embodiments is a computer HW/SW system working time-efficiently together with many quite different .) HW/SW computer system interfaces and ..) information structures and their complex interrelations - allowing to overcome the hitherto technical barriers for a versatile real-time patent expert system, being capable:
▪ "in its rehearsal/analysis mode", of performing for any PTR its FSTP analysis and then
▪ "in its real-time mode", of replying instantly to any query concerning this PTR's FSTP analysis.

"Real-time" means that the FSTP Expert System is able to reply to any query for an information/item referring to this PTR's FSTP analysis within the period of time tolerable in a fluent real-life conversation about this information or item being queried - i.e. within at most 5 seconds.

Within a PTR's FSTP analysis underlying the below claims, the term "information" may denote (parts of) ontologies and/or somehow automatically and/or interactively as such identifiable and recognizable items of information. I.e.: The term "item" of information denotes one or several parts of this information being meaningful to the resp. skilled person - who holds a university diploma with focus on automatic language and/or knowledge translation and several years of practicing patents' technical analysis.

There are evident implications of this patent application's disclosures to be used in future claims:
▪ Elaborating on "equivalent TT" resistance and generation of meaningful variations of an invented TT.p.
▪ Elaborating on a claim's violation.
▪ Elaborating on having several TT's per document and/or several FSTP-B-levels per TT.
▪ Elaborating on in/output presentation and identification/clicking/highlighting issues.
▪ Comparing two different analyses of a PTR with each other, e.g. for different pmgp's.
▪ Translating the original D-/B-level language into a skill-oriented or formal or computer processable one.
▪ Restricting and/or relaxing the limitations of at least one FSTP notion, e.g. "D-/B-level", "disclosure", "plcs/pmgp dependency", "q-cM", "thought", "sub-patent-law", "finiteness", "combinability", "q-AC", "q-AC/mod(q-cM)", ... and/or its combination and/or relation with at least another one, such as the "ANC relation", "plcs-option", ....
▪ Varying attributes and/or concepts in time and/or over other concepts, in particular checking their pmgp-/plcs-independencies under a variety of limitations and/or considering limitations inherent in AC embodiments.
▪ "FSTP-HW" support, be it by ASICs ("application specific integrated chips") or these integrating SKBCs ("specific knowledge based controllers").
▪ Using the FSTP in identifying/determining "Patent securitization" and "TT.p invention inducement" pragmatics.
▪ Using the FSTP for applying parts of some NPS to some PTR problem.
▪ Using the FSTP outside of the patent area for determining a venture's (i.e. its innovation's) semantic/pragmatic heights over the pertinent prior knowledge and/or for designing "best fit" TTs.
▪ Using the FSTP for designing a subject matter specific Expert System.
▪ Using the FSTP Expert System for marketing ventures' TTs alias products.

### FOOT NOTE

**¹** In interpreting a patent's claim, the US precedents allow its specification to impose a "construct limitation" on a claim's meaning iff its wording refers to this construct by a "means plus function" clause (otherwise ignore its limitations as disclosed by its specification) - while the precedents of the BGH and Article 69 of the European Patent Convention (EPC) require first determining, from the patent's specification/figures/claims, the meanings of the claim's terms and the TT.p, the patents claim is based on, for assessing they don't contradict each other (whereby the TT.p therein is supposed to be an enablingly disclosed²⁾ resolution of the technical problem given by the patent and that it contains only one independent method and/or apparatus claim¹²⁾), and only then to perform the claim's interpretation based on the so determined meanings of the claim's terms (and hence of the TT.p underlying it, see Sections II.A.1.1-2).
Both national patent systems, **"NPS**'s" (comprising the nation's patent law, patent precedents, patent authority's regulations, sworn-in technical experts, ...), also called "national legal systems, **NLS**'s" **-** "national" here standing for US and EU - allow in a patent ex- and implicit disclosures of properties/facts, i.e. **"patent intrinsic"** resp. **"patent extrinsic"** disclosures, meaning that a TT.p's property is
▪ **"explicitly disclosed"** iff it contains wordings and/or graphics explicitly representing this property's disclosure, and
▪ **"implicitly disclosed"** iff there is no such wording/graphic, but
   **(a)** the person of skill (pertinent to the TT.p) knows - in the BGH its own sworn-in technical expert - that this property of TT.p is implied by the wordings/graphics of the specification/claim of the patent, and/or
   **(b)** it is indispensable, as otherwise the wording's meaning in its specification and in the claim were contradicting (EPC only), and/or
   **(c)** one or several TT.i's, the combination of which anticipates TT.p, is/are limited by a property, the contrary property being ex- or implicitly disclosed by document.p to be an **X**).**n** of TT.p - such an **X**).**n** is often not noticed as a property of TT.p (see Section I.a.5).
These definitions of ex-/implicit alias in-/extrinsic disclosures - as to a patent's/claim's (non)obviousness problem - apply also for any non-patent document and seemingly within any NPS (though coming here with different flavors). Both NPS's seem to share the same view as to the denial to a patent owner of his constitutional right to get a fair trial, if a court refuses to recognize his TT.p's **X**).**n**,
The great importance of such implicit alias extrinsic disclosures - then being skill-based (as in **(a))** or logic-based (as in **(b)) -** of a patent is discussed in Sections I.B-E, exemplified by Section II.A.1.2, and visualized by means of FIGs 2. In many PTR's the best way of dealing with them is to introduce an additional "maximal B-level" of terms/notions (see Section I.A.5), which precisely and nonambiguously represents the meanings of such implicit/extrinsic as well as all explicit/intrinsic disclosures^{10),14)} - as practiced by the FSTP test when analyzing a patent's/claim's (non)obviousness over prior art (see in particular Section I.K).
**²** In several NPS's, their precedents contained presentiments of this direction of thinking: The US Supreme Court asks in its KSR decision for considering "creative ideas", and its resp. counterpart in Germany decided on nonobviousness of a TT.p by it being distinguished from prior art by more than 1 "independent mental step", both as disclosed by the patent at issue. More precisely: The X^{th} Panel of the German BGH elaborated, already since its 1999 ground laying "Spannschraube" decision, in 2 dozens of decisions on the indispensability of first determining this TT.p - for clarifying the meanings of a claim's technical terms (i.e. what their meanings are, as determined by the TT.p underlying it, being the semantics/pragmatics association base of the sentence of this claim, as explained by the end of Section I.E), and performing this patent/claim interpretation only on this basis¹⁾. Already on this firm ground, the BGH explicitly identified in its *"Gegenstandsträger"* decision (2008) the notion of several **"independent mental steps" -** here called **"independent thoughts" -** after having implicitly identified such independent thoughts in several preceding decisions confirming the nonobviousness of their resp. TT.p's.
None of these BGH decisions quite made it to the term "independent thought", but they still used other terms representing less innovative notions by talking about such thoughts' consequences, such as quoting more than one "change of elements" or "change of their sequence of execution". I.e.: These decisions did not yet recognize that such technical changes are depending on the inventors first having created the resp. "thoughts of change" controlling them - as recognized by the US Supreme Court's KSR decision - i.e. that such independent thoughts alias creative ideas are indispensably underlying such changes and hence expansions of prior art¹⁰⁾.
Rationalizing these terms/notions, one sees that a thought of this kind of change is nothing else but a thought of change of a concept¹⁰⁾ of prior art. Such a change of a concept of prior art is called, here, this prior art's **"conceptual modification, 1-cM"** of RS, more precisely¹⁴⁾ a **"1-cM of some AC from RS⁺",** more precisely a **"1-cM of some attribute X.i).n in this AC"** (also see Sections I.A.1 and I.A.4). The notion **of "q-cM of some AC from RS⁺",** q≥0, is then defined accordingly to consist of q 1-cMs and the result of its change to an AC is denoted **by "AC/mod(q-cM)",** q=0,1,2,...
Note that, for a PTR, a 1-cM of some attribute **X.i).n** of some AC at some time⁹⁾ may carry through to another reference to this concept in another **X'.i').n'** of AC, which may turn a potential NC-relation of **X'.i).n'** into an A-relation. This is possible, in particular, if this concept is referred to twice, by **X.i).n** and by **X'.i).n',** which to avoid on an appropriately defined facts presentation level of the PTR to be analyzed is one of the primary objectives of the FSTP method.
**³** While in the '884 patent only its claims section is provided in English, its English specification is provided by the US patent 6,954,453 B1, serving as the reference base in all subsequent quotations from the '884 specification. The 3 US patents 7,145,902, 7,483,431 and 7,936,751 are divisionals of the '453 patent, i.e. have identical specifications. As they all disclose by their specification the same TT.p, only the US patents' "claims differentiation" is an issue - requiring to analyze claims one-by-one, the result of this FSTP analysis holding even stronger for the claims of 4 US patents of this patent family. As no "primate of claims' wordings" is known in the EPC, here the '884 patent is considered for simplicity.
The selection of these 16 documents - out of a total of ca. 50 allegedly prior art documents, submitted to the BGH in the nullification complaint against the '884 patent - is based on a decision by the BGH. These 16 are: doc.1 = WO 90/12466, doc.2 = US 5,347, 516, doc.3 = Lucent, doc.4 = doc.12, doc.5 = JP7-154426, doc.6 = JP57-159153, doc.7 = doc.8, doc.8 = IDB-64/2, doc.9 = Malek, doc.10 = Wacker, doc.11 = AVM, doc.12 = US 5,517,662, doc.13 = Lee, doc.14 = US 4,977,556, doc.15 = US 5,479,650, doc.16 = WO 96/28947. Actually, only the first 13 of them were selected by the BGH, the remaining 3 were submitted by Cisco/Nokia later. The non-patent document.i's are available from the author - the others from the respective databases.
The fact that 16 potential anticipation documents.i are considered goes against the trend in the US and EU to allow only the combination of a few TT.i's to anticipate TT.p. But, this large number has the charm of bringing up properties of the TT.p - presented subsequently - which may discourage future invalidity attacks on it right from the beginning. This is one of the explanations, why the German BGH court case is taken here, although the analogous case is pending also at the Delaware District Court.
⁴ In general, this derivation may be tedious, but it is trivial in the '884 case, as the '884 D/B-ANC matrices show at first sight.
⁵ This is rooted in Wittgenstein's epistemological research on thinking in a natural language (see e.g. items 3 and 4 of his "Tractatus Logico-Philosophicus"). More recently this has been approved by Dijkstra**¹⁵⁾** and all the approaches to formal specification of systems. Already Kant had identified this fundamental deficiency of thinking in terms/notions of natural language by an even stronger statement, saying: "I maintain that in any special doctrine of nature only so much *real science* can be found, as there is *mathematics* found" ("Metaphysical Foundations of Natural Science", Immanuel Kant, 1786). His early insight has, unknowingly, been the guiding theme in developing the FSTP test. It thus can be viewed as being the *real science* in the special doctrine of factual technical indication of (non)obviousness (in patent law) - which here is seen as a special doctrine of nature, due to its factuality (being meaningless otherwise).
**⁶** For not mixing-up this notion of "data transfer" alias TRANSFER**^{7),8),20)}** with "transferring data" see footnote 20.
**⁷** The meaning of this "substantially in real-time" attribute of a data transfer/TRANSFER is that it takes place sufficiently synchronous to the real life process, to which it refers, e.g. to a telephone call process. Specifically as to this process and its data transfer/ TRANSFER, the '884 patent and all international telecommunications organizations require any lag time to be smaller than 0.5 sec. None of the above 16 document.i's strains, its data transfer would achieve this real-time quality - probably being the main reason, why they completely refrain from claiming that it were suitable for a telephone call (they even don't mention telephony, at all) **^{6),8),20)}**.
Note: The synchrony property/attribute alias real-time property/attribute of the '884 specific data transfer/TRANSFER is not "absolute" but only "substantial", and only as induced by the user expectations as to a telephone call. I.e.: Therein the tolerable lag time of the data transfer/TRANSFER during call set-up would be slightly longer than its tolerable lag time during speaking. But the '884-TT.p abstracts from this differentiation: Its monitoring of the telephone call's data transfer/TRANSFER and its detecting a delay - be it occurring during call set-up of this telephone call or later - makes it generate a signal which initiates a transfer (=change over) of this data transfer/TRANSFER from the PSN used to using the LSN (see Section II.A.1.3).
**⁸** Such event of a time delay (implying a delay for ever and not regarding how the first switch becomes aware of it) may occur in various locations in the TRANSFER monitored (i.e. somewhere in the communications connection considered) and in a large number of situations. Examples of reasons and of places of their possible occurrences are: The first switch is running out of buffer space as needed (e.g. for packetizing the data incoming from a telephone set) when using the packet-switching network for outgoing data of the communications connection considered, or it ran out of other resources to this end (e.g. appropriate compression chip resources), or it cannot forward a packet to the packet-switching network (e.g. somebody has pulled the plug to it or it has encountered some internal management limitation), or it discovers - whereby the '884 TT.p need not explain to the skilled person, how to achieve this discovery - unacceptable delays/jitter on the data received by the second switch, or that the second switch has a similar problem as just identified for the first one, or ...., whereby any of these events may occur as soon as the 1^{st} switch has performed any activity in this communications connection, which has come into existence as the 1^{st} switch has received from the calling end terminal the address of the end terminal to be called**^{6),7),20)}**.
It is trivial only by today - i.e. only in hindsight - that the automatic release of an '884 change-over signal at any occurrence of this event does guarantee the real time quality of the '884 communications connection considered, i.e. of its '884 TRANSFER monitored, thus meeting the above requirement of warranting its col. 3:59-62 real time quality.
**⁹** These 11 '884 D-attributes are: **A).1-A).6, C).2, C).3** and **D).1-D).3.**
But note another D-level problem arising here, in the general case of a q-AC/mod(q-cM) anticipating TT.p: For making each **D-**X).n be anticipated by this q-AC's resp. **D-X.i).n**/mod(q-cM), q 1-cMs must be invented**¹⁰⁾** one by one, as thinking is a sequential process. A sequence of performing them may contain a 1. or 2.... or q^{th} 1-cM, which is technically barred due to at least one of the 1-cMs preceding it in this sequence, i.e. making it contradictory**^{14).A}**. If this applies for any sequence, this value of q is just a lower bound for Q**^{plcs}**. It is left for further study, whether there always is an appropriate B-level avoiding such questions.
**¹⁰** For a PTR, D/B-concepts and their universes are terms and their sets of values/instantiations (see Section I.A.4), which model issues known by the person of pertinent skill and hence are assumed to be noncontroversial: They provide the D/B-fundaments for logical D/B-expressions/attributes ("**referring**" to these concepts' values), which describe the D/B-properties of the elements used by its TTs. No TT.i's attributes and no combination of them would anticipate all the TT.p's attributes - otherwise this TT.i resp. this combination would anticipate TT.p**¹⁴⁾**. Note that any attribute may be viewed as binary concept, e.g. any D-attribute of TT.p (see below).
A "**conceptual modification, 1-cM"** of a **X.i**).**n** being NC-related to **X**).**n**, is defined to be a modification of this **X.i).n's** TS or U, aiming at making **X**.**i**).**n**/mod(1-cM) ants **X**).**n** (see**¹⁴⁾** Section I.A.4 and I.B.1). Thus, if a 1-cM is executed on a binary attribute X.i).n, its value is toggled. If a PTR's ANC matrix is plcs-independent (see Section I.A.5), also any 1-cM of any of its attributes **X**.**i**).**n** is called **"plcs-independent".** Same arguments may lead to qualifying a 1-cM as "**pmgp**-**independent**", too**¹⁴⁾**.
**AXIOM:** Inventing a 1-cM of a TT.i's attribute requires creating at least one thought. Any such thought is called **"1-cM supportive".**
Any 1-cM supportive thought is called **"plcs-** resp. **pmgp-independent",** iff its 1-cM is plcs- resp. pmgp-independent. If a PTR's ANC matrix is plcs-/pmgp-independent (which is not known a priori, as then the TT.p was not known yet, hence also the ANC matrix) for any 1-cM belonging to a Q**^{plcs}**/Q**^{pmgp}**-path**¹⁴⁾** at least one supportive thought had to be created by the TT.p inventor on his way to the TT.p after starting from the prior art, and this thought was plcs-/pmgp-independent. This plcs-/pmgp-independent thought was indispensably required for finding the TT.p and had to be created by him. Thereby the plcs-/pmgp-independencies can be proven only after TT.p has been found.
Note: After the TT.p has been found, the prior art is definitively expanded by its **X).n'**s **-** but nobody has ever postulated prior art were also expanded by the **X.i).n**/mod(q-cM) with the q-cMs belonging to Q**^{plcs/}**Q**^{pmgp}**-paths leading from RS to TT.p.
The notion of **"independent thoughts"** alias **"creative ideas"** used by the Supreme Courts**²⁾** cannot mean anything else but thoughts being independent from prior art and hence from each other as to patent law carrying semantics plcs and patent monopoly granting pragmatics pmgp, i.e. as to both norms (implicitly) controlling the resp. national patent law legislature/precedents (see Section I.B.2).
Next the above B-level for the '884 PTR is given. See also FIG 2c-e and the Technical Report #1 of the FSTP project ("The D/B-Levels in the '884 PTR Problem"), where - just for redundant confirmation - the below 28 C.k's are shown to be disclosed explicitly and implicitly**¹⁾** by the '884 patent and pertinent telecommunications skill. I.e.: The transformation of the TT.p description from its D-level presentation into its functionally equivalent B-level presentation is predetermined by the TT.p - and in principle requires no pertinent skill. Then recognizing is trivial that these B-level concepts are plcs-/pmgp--independent (over the prior art as represented by RS).
Note that it is completely irrelevant, whether an additional relation exists between some of these concepts in a TT.i (making them plcs-or pmgp⁻-dependent there): Its absence from TT.p could be made another implicitly disclosed property of it, thus distinguishing it even further going from RS.

| | | | | |
|---|---|---|---|---|
| **D**-**A).1** | **C.1:** | "A switch is a different subscriber to the PSN and to the LSN", | **C.2:** | "A switch is positioned totally outside the networks", |
| | **C.3:** | "A switch knows considered communications connection", | **C.4:** | "A second switch is known", |
| | **C.5:** | "A com. conn.'s data transfer (DT) starts over the PSN", | **C.6:** | "An '884 signal may be recognized at any time", |
| | **C.7:** | "An '884 signal may be generated at any time", | | |
| **D-A).2** | **C.8:** | "A first switch internal change trigger is known", | **C.9:** | "Real-time quality of comm. conn.'s DT monitored", |
| | **C.10:** | "Change already with potential quality loss indication", | **C.11:** | "Change-over of considered comm. connection only", |
| **D-A).3** | **C.12:** | "Change possible with start of PSN data transfer", | | |
| **D-A).4** | **C.13** | "Switch has interface for connecting to it at least one ISDN or analog or mobile telephone", | | |
| **D-A).5** | **C.14:** | "DT start immediately with telephone call connection establishment", | | |
| **D-A).6** | **C.15:** | "The PSN and LSN accesses of a switch are both permanent and different from each other", | | |
| **D-B).1** | **C.16:** | "Any pair of accessible LSN and PSN is usable" (applicable only for the method claim, which is immaterial here), | | |
| **D-C).1** | **C.17:** | "The PSN access is not needed for establishing an LSN connection", | | |
| **D-C).2** | **C.18:** | "The user-DT is free of retransmission", | | |
| **D-C).3** | **C.19:** | "DT times in communications connection less than 0.5 seconds", | | |
| **D-C).4** | **C.20:** | "The first switch needs no consensus for starting sending telephone-call data over the PSN", | | |
| **D-C).5** | **C.21:** | "The first switch needs no consensus for changing-over to LSN at signal detection", | | |
| **D-D).1** | **C.22:** | "A change-over '884 signal is released at any occurrence of at least 1 of the 3 '884 events monitored", | | |
| **D-D).2** | **C.23:** | "A signal initiates a change-over if and only if '884 signal", | **C.24:** | "An '884 signal cannot be rejected by anyone/-thing", |
| **D-D).3** | **C.25:** | "An '884 signal is possible with the start of the PSN DT", | **C.26:** | "An '884 signal affects only the comm. conn. considered", |
| | **C.27:** | "An '884 signal has no confirmation requirement", | **C.28:** | "An '884 signal can be transparent to both DT users". |

The above identifiers **C.1-C.28** abbreviate the FSTP names of the B-concepts **B-C.1** - **B-C.28,** as well as the full names of the resp. B-attributes **B-X).1,** ..., **B-X).28** introduced in Section I.A.4. Some of these B-attributes/concepts **B-X).n** are identical to the above **D-X).n,** others are refinements (see the left margin, their initial names being **A).1-D).3,** i.e. without prefix "D").
The two tables below show, firstly, the above table once more but using this just explained full notation (i.e. identifying by **"B-X).n"** the resp. B-attribute and, behind the ":", by **"B-C.n** = T" the value of this B-concept for the TT.p), and secondly, the resp. table for document. 1 in this full notation (e.g. identifying behind the ":", by **"B-C.n** = T/F", the value of this B-concept for the TT.1).

| | | | | | |
|---|---|---|---|---|---|
| **B-A).1:** | **B-C.1** | = T, | **B-A).2:** | **B-C.2** | = T, |
| **B-A).3:** | **B-C.3** | **=** T, | **B-A).4:** | **B-C.4** | = T, |
| **B-A).5:** | **B-C.5** | **=** T, | **B-A).6:** | **B-C.6** | = T, |
| **B-A).7:** | **B-C.7** | **=** T, | | | |
| **B-A).8:** | **B-C.8** | **=** T, | **B-A).9:** | **B-C.9** | = T, |
| **B-A).10:** | **B-C.10** | = T, | **B-A).11:** | **B-C.11** | = T, |
| **B-A).12:** | **B-C.12** | = T, | | | |
| **B-A).13:** | **B-C.13** | = T, | | | |
| **B-A).14:** | **B-C.14** | = T, | | | |
| **B-A).15:** | **B-C.15** | = T, | | | |
| **B-B).1:** | **B-C.16** | = T, | | | |
| **B-C).1:** | **B-C.17** | = T, | | | |
| **B-C).2:** | **B-C.18** | = T, | | | |
| **B-C).3:** | **B-C.19** | = T, | | | |
| **B-C).4:** | **B-C.20** | = T, | | | |
| **B-C).5:** | **B-C.21** | = T, | | | |
| **B-D).1:** | **B-C.22** | = T, | | | |
| **B-D).2:** | **B-C.23** | = T, | **B-D).3:** | **B-C.24** | = T, |
| **B-D).4:** | **B-C.25** | = T, | **B-D).5:** | **B-C.26** | = T, |
| **B-D).6:** | **B-C.27** | = T, | **B-D).7:** | **B-C.28** | = T, |

While the preceding table shows the B-level description of the '884 TT.p by means of the above B-concepts, the table below shows the B-level description of the TT.1 (see Section II.C.1, showing its D-level ANC relation, and the introduction to Section II.C).

| | | | | | |
|---|---|---|---|---|---|
| **B-A.1).1:** | **B-C.1** | = F, | **B-A.1).2:** | **B-C.2** | = T, |
| **B-A.1).3:** | **B-C.3** | = T, | **B-A.1).4:** | **B-C.4** | = T, |
| **B-A.1).5:** | **B-C.5** | = T, | **B-A.1).6:** | **B-C.6** | = F, |
| **B-A.1).7:** | **B-C.7** | = F, | | | |
| **B-A.1).8:** | **B-C.8** | = F, | **B-A.1).9:** | **B-C.9** | = F, |
| **B-A.1).10:** | **B-C.10** | = F, | **B-A.1)11:** | **B-C.11** | = T, |
| **B-A.1).12:** | **B-C.12** | = F, | | | |
| **B-A.1).13:** | **B-C.13** | = F, | | | |
| **B-A.1).14:** | **B-C.14** | = F, | | | |
| **B-A.1).15:** | **B-C.15** | = F, | | | |
| **B-B.1).1:** | **B-C.16** | = F, | | | |
| **B-C.1).1:** | **B-C.17** | = F, | | | |
| **B-C.1).2:** | **B-C.18** | = F, | | | |
| **B-C.1).3:** | **B-C.19** | = F, | | | |
| **B-C.1).4:** | **B-C.20** | = F, | | | |
| **B-C.1).5:** | **B-C.21** | = F, | | | |
| **B-D.1).1:** | **B-C.22** | = F, | | | |
| **B-D.1).2:** | **B-C.23** | = F, | **B-D.1).3:** | **B-C.24** | = F, |
| **B-D.1).4:** | **B-C.25** | = F, | **B-D.1).5:** | **B-C.26** | = T, |
| **B-D.1).6:** | **B-C.27** | = F, | **B-D.1).7:** | **B-C.28** | = F. |

Note: It is not clear, whether an "F" above stands for an "N" or even a "C" in the first line of the B-ANC matrix.
¹¹ In general the patent at issue and/or document.i might deal with several **X).n's** resp. **X**.**i**).**n**'s, namely when disclosing several TT.p's resp. TT.i's. We here assume for simplicity, there is only one single such TT.p resp. TT.i, and hence **X).n** and **X.i).n** - as adapting the FSTP tests to the general case is straightforward.
**¹²** One **X).n** column potentially may be removed by a "sub patent law" 1-cM of some **X.i).n** (see Sections I.B.2.b) and I.M), while the removal of 2 **X).n** columns by 2 1-cMs would likely no longer be "sub patent law", NNI support being indispensable anyway.
**¹³** All these considerations only hold, if TT.p has been described completely - see IIA1.2 for a counterexample.
**¹⁴** For a plcs-independent ANC matrix of a PTR let denote by the terms (omitting the D/B-prefix, see Sections I.A.1-5):
▪ **"anticipation-combination, AC"** of its TT.p an arbitrary combination of the **X**.**i**).**n**'s this matrix,
▪ "**RS**⁺ the set of all such ACs, <AC>, called **"RS's combinatorial hull"** over this matrix (see **G** below),
▪ **"q-cM"** a set of q 1-cMs of an AC from RS⁺, 0≤q<∞, i.e. **"0-cM"** is the nonmodification of this AC,
▪ **"q-anticipation-combination, q-AC"** any AC for which there is a q-cM such that "q-AC/mod(q-cM) ants TT.p", q≥0,
▪ **"plcs-height, Q^{plcs}**" of TT.p over RS the minimal such q, being defined as ∞ if there is no q-AC in RS⁺,
▪ **"plcs^{xxx}-height, Q^{plcs/xxx}**" of TT.p over RS the minimal q, xxx standing for one of the 4 options C below, "normal" as default,
▪ **"pmgp-height, Q^{pmgp}**" of TT.p over RS the minimal q, if pmgp is recognized in full.
Let for any such q-AC and q-cM, q=0,1,2,..., the relation "q-AC/mod(q-cM) anticipates TT.p" be called
**A. "contradiction-free",** iff "q-AC/mod(q-cM) not-contradicts (TT.p or any TT.i involved in q-AC)" (see below).
**B. "element integrity preserving",** iff its disclosures are **"element-wise",** i.e. **"element-by-element"** (see below).
**C. "free"** resp. **"normal",** iff it is subject to none resp. both limitations **A** and **B** (of the in total 4 **"plcs options").**

- To **A:**: In some Highest Courts' precedents, a TT.i somehow contradicting TT.p - in particular if TT.i does it manifold - is to be excluded from any AC, as TT.i then **"teaches away"** the skilled person from inventing the TT.p (see Section I.B.2).
- To **B:**: All Highest Courts' precedents require that .) a q-AC's anticipates-relation must not be "cherry-picking", by picking for the **X).n's** of an element X of TT.p peer **X**.**i**).**n**'s of different TT.i's and :) only a small number of documents.i are combined into any q-AC (e.g. i≤4 or 5, seemingly including pertinent skill documents.i, see Section I.B.2.b)).
- To **C:**: From **"Q^{plcs/free}"** for a PTR its other 3 values of "Q**^{plcs/xxx}**" can be derived by the FSTP method.
This footnote 14 goes on, in **D-E,** with clarifying the intriguing interrelations between the notions of "D/B-levels" and "plcs-/pmgp-independencies" resp. of "pmgp" and "creativity". It recurs in **F** to the futility of all these mental aids provided by the FSTP analysis of a PTR, if already in the very early stage of its TT.p's interpretation a court denies applying skill for answering technical questions and answers them by gut feeling - i.e., F shows again (see II.A.1.2), into which absurdity even an excellent Highest Court may be dragged by applying common-sense where skill is mandatory, and that the redundancy provided by a B-level presentation of the resp. PTR problem would have barred this nonsense. **G** finally clarifies that searching may be creative.
- To **D:**: Instead of an abstract analysis of what an ideal redundancy provided by a B-level presentation of a PTR problem might be - the addition of which to the problem's D-level presentation for enabling assessing the completeness and correctness and plcs-independency of its analysis on the B-level, just as the addition of a few redundant bits to a byte's presentation enables checking the integrity of its presentation - this section D. demonstrates by a simple example
▪ why such redundancy also here (just as in coding theory) is not unique, i.e. choices are normal and very helpful,
▪ that the search for an optimal D-level dramatically improves the understanding of the PTR problem at issue, in particular as it asks for carefully justifying this B-level presentation by common-sense and elementary-scientific knowledge underlying the PTR's TT.p - potentially using also some pertinent skill, as explained in **"To E**." below.
This example also explains (together with **"To E."),** which support is provided by the FSTP analyzer on this stage. The simple example is: A PTR, the subject area of which are lie detectors, which consists of
▪ a TT.p of an antenna, being a planar square of wire of edge length n*3.1415 cm, whereby document.p explicitly states that the appropriate value of n is known by lie detection skill (e.g. small/large values of n for scanning for small/big lies),
▪ and a prior art RS consisting of only a single TT.i, which also is a planar antenna being a wire, bent as a parallelogram, and of length between 1 and 20 cm.
The PTR (plcs-) problem is: What is the plcs-height of TT.p over TT.i - to begin with for n=1?
A first plcs-limitation of TT.p over TT.i is that the latter's range of their common concept LBS (= length of base side of TT.p resp. TT.i) must be changed by a 1-cM to exactly 3.1415 cm. But for the rest the above D-level presentation of TT.p and TT.i does not say, how many additional 1-cMs must be imposed on TT.i parallelograms (of LBS = 3.1415 cm) to make them anticipate a TT.p square (of LBS = 3.1415 cm). Thus, common-sense/science B-level redundancy must be added to this D-level presentation of the PTR problem by identifying a further common TT.p/TT.i concept. Common-sense/Geometry suggests two alternative concepts as this B-level redundancy of the PTR problem presentation:
**1.)** A second TT.p/RS common concept, "parallelogram's side-lengths", has for a TT.p antenna the range "<3.1415> cm", i.e. is binary, while for a TT.i antenna its range is "<0, 6.2830> cm. Imposing, by a 1-cM, the former on the latter range doesn't yet make a TT.i antenna (of LBS = 3.1415 cm) anticipate a TT.p antenna, due to infinitely many remaining parallelograms. For achieving this anticipation, a third TT.p/RS common concept, "parallelogram's angles", with range "<90>°" for TT.p, must be imposed (by a 1-cM) on a TT.i's range "<0, 180>°".
**2.)** Another second TT.p/RS common concept, "parallelogram's shape", with the range "square" for TT.p. This choice enables a single 1-cM of its TT.i range "<any>" such that TT.i antennas (of LBS = 3.1415 cm) anticipate the TT.p.
I.e.: Case **1.)** needs 3 cMs and case **2.)** 2 cMs, hence the plcs-height of TT.p over RS is 2 - the TT.p/RS common concept in case **2.)** being derived from PTR's explicit disclosures solely by common-sense/elementary-science.
As patent law awards only non-common-sense/-elementary-science inventions, this search for this kind of a B-level is the rule - it is part of the indispensable intellectual effort for determining Q**^{plcs}**. In particular: Deriving for a PTR from its Q**^{plcs/free}** its Q**^{plcs/normal}** (or one of the other two Q**^{plcs/xxx}s** in between) requires only common-sense. An exemplary consequence of this is shown by the three square points in Section II.A.2.2.
In this potentially sophisticated and/or even controversial search of a B-level - with the smallest plcs-height of TT.p over RS over any set of plcs-independent TT.p/RS common concepts - this check for plcs-independence is straightforward. E.g., in both cases further concepts may have been identified/defined, such as
▪ in case **1.):** a "height of parallelogram" concept having the range "<3.1415> cm" for the TT.p and for the TT.i the range "<0, 3.1415> cm", and
▪ in case **2.):** also the just defined "height of parallelogram" concept.
But this additional concept is automatically derivable by the FSTP analyzer from the above resp. concepts by common-sense/elementary-geometry, and hence is plcs-dependent on them. Note: If this "height of parallelogram" concept were identified and input to the FSTP ES prior to the above two cases, it would render their concepts plcs-dependent, i.e. irrelevant (see Section I.A.5). Though, this concept doesn't reduce PTR's Q**^{plcs}** to below "2", as determined before.
In all these cases, the disclosures resp. alleged anticipations of properties of TT.p/TT.i may be explicit or implicit**¹⁾.**
Note also: Further enriching the "parallelogram" concept of case **2.)** to yet another TT.p/RS common concept of a TT.p antenna - namely to "parallelogram = square with LBS = n*3.1415 cm with n=1,2,3,...", which would render all preceding concepts plcs-dependent from it and reduce PTR's Q**^{plcs}** to "1" - is inadmissible, as it is not based solely on common-sense/elementary-geometry, as these don't justify any value of n, being determined solely by pertinent skill.
In total: Identifying, for a PTR and skill/pmgp-independent, the various potential B-levels and assessing a B-level such that its concepts are plcs-independent and its value Q**^{plcs}** is maximal, is a typical min-max-search as known from many optimization problems. **The FSTP Expert System supports this potentially elaborate min-max-search by automatically checking any potential B-level for the plcs-independency of is concepts and by storing them and their checks so that they are instantly presented to its user upon his query for this information.**
- **To E:**: For a PTR problem the determination of the precedingly discussed technical secondary (patent law carrying) semantic fact represents the indispensable first part of its fact analysis. Subsequently the second and final part of this fact analysis is briefly discussed and emphasized that the FSTP Expert System supports also leveraging on the first part, when determining the impacts of skill alias (patent monopoly granting) pragmatics, pmgp, on a superset of Q**^{plcs}**-PS (see section I.B.2). Thereby the FSTP Expert System may be able to perform (semi-)automatic checks for these pmgp-impacts on the now plcs-independent remaining Q**^{plcs}**-ACs, but also here it would store these impacts and their checks such that they are instantly presented to its user upon his query for this information.
These impacts are D-/B-level independent, as pmgp has no relation to this distinction.
Though the transformation of a PTR problem from its original D-level presentation to its B-level presentation may increase the uncertainties about the impacts of skill/pmgp on its Q**^{plcs}**-ACs, as the B-level may be more "skill/pmgp-loaded" - but such uncertainty may have existed already on its D-level presentation.
Looking a few years ahead: pmgp- and skill are finite and formalizeable (see I.M), and hence a potential reduction of the value of **Q^{plcs}** by pmgp may be determinable by a finite exhaustive search of all resp. combinations of the finite number of pmgp items and the anyway finite number of Q^{plcs}-ACs. This finiteness cannot become unmanageable voluminous: An arbitrarily large number of such combinations is namely totally counterintuitive to the notion of pmgp - as it here is supposed to potentially render a PTR's TT.p obvious over its RS, i.e. usually in only very few steps.
- **To F:**: At this point it is worthwhile remarking: While the above discussed sophisticated notions of plcs-limitations, of skill/pmgp, of pertinent skill language level (see Section I.D), and of skill-based implicit disclosures^{**1**)} legally are of fundamental importance in a patent's (claim's) interpretation**²⁾**, judges tend to simply ignore all these allegedly "subtle" legal requirements and often substitute all these clear and fundamental notions by their own gut feelings. In particular the B-level presentation of a PTR problem, with its clarifications of a TT.p's distinctions as to its prior art RS - often being more "skill loaded" than its D-level presentation, by good reasons - has no chance to only be noticed by them in such cases. I.e.: While the B-level exposes the facts underlying this PTR problem much clearer than the D-level, it likely will encounter much more difficulties to be accepted or only considered by the judges, as they often feel everything were theirs to determine personally - i.e. don't appreciate the scientification of their work. This section F. recapitulates this phenomenon, already presented in Section II.A.1.2, in terms/notions closer to the aforesaid then reasonable there.
The FSTP analysis of a PTR problem prescribes the FSTP user first to figure out and precisely describe its TT.p - by means of his common-sense/elementary-scientific understanding and/or TT.p specific skill/pmgp: Thus, as to interpreting some wordings disclosing its TT.p, a layman can and as to other wordings he cannot perform this step dependably/correctly. In particular, there is no fixed rule of when common-sense/elementary-science reaches its limits und when skill is indispensable. And the situation becomes totally confused, if a court^{**3**)}
▪ first puts such '884 disclosures' explicit wordings as to its data transfer technique - which explain maximally tolerable delay times in Internet telephony, i.e. explicitly state that they have to be smaller than 0.5 seconds, and that it actually achieves this property by proactively replacing a telephone call's Internet connection by a classical PSTN/ISDN connection on the occurrence of clearly disclosed and technically totally new risk indicators, prior to its quality being affected - as being very technical in front of its own technical expert for explanation and/or confirmation, thereby emphasizing it were absolutely clueless as to telecommunications technique,
▪ but then, after discovering it dislikes its expert's technical written and verbally repeated clear statements that this hard time-limit is absolutely mandatory for telephone calls and hence for Internet telephony - which he rigorously reconfirmed, on being questioned several times as to this limit by the court during its hearing - puts this wording's disclosures as being nontechnical, hence decidable alone by common-sense, i.e. by the court on its own.
As a consequence, the court decided that the respective absolutely established terms and notions of telecommunications, even formally agreed on by all national and international standard setting bodies**²⁰⁾** - namely that a data transfer technique supposed to be suitable for Internet telephony must exclude delays of more than 0.5 seconds, as was known from science for decades already, and hence described by the '884 patent as the decisive property of its TT.p, due to its proactive reaction on innovative early indications - are not interpretable as limiting the TT.p, as in Internet telephone calls: Due to their price advantage, it decided delay times of "several seconds" were tolerable in Internet telephone calls, disregarding that the '884 patent states the contrary to be a requirement and actually is met by its data transfer technique. It explicitly states that its decision against its own technical expert - who approves the correctness of this requirement statement for Internet telephone calls - were of no concern, as this decision were nontechnical.
Technically it is true that - if the '884 patent's problem to be solved were allowing breaks of "several seconds" in Internet telephone calls to occur, which ex- and implicitly contradicts the '884 specification and the '884 claim 8, as stated also by the court's technical expert - several of the prior art documents had already anticipated this alleged '884 solution, which the court strangely postulated on its own. This raises the question, why the court then did not recognize any one of the several anticipations of this alleged '884 data transfer technique, but instead used the obviousness (alleged) argument for destroying the '884 patent in Germany - without mentioning any one of the sophisticated technical disclosures of the '884 specification. This is a nice example of possible consequences of the replacement of skill by (alleged) common-sense, which the transformation of the PTR-problem to a B-level presentation is set out to bar - by enforcing the EPC compliance of a patent's interpretation.
But even if a court does not try such juggling - thus pretending to completely understand a problem or its solution, which is wrong as it simply refuses to take notice of parts of the specification's and claim's wording of fundamental importance - the question for the completeness of the understanding and/or description of a problem is nontrivial to reply, indeed. An above simple example in the subsequent paragraphs shows, why this is so.
- **To G:**: This section **G** of footnote 14 finally clarifies, under what circumstances a TT.p is indicated to be nonobvious over an RS of TT.i's, if TT.p just checks all combinations of attributes **X.i).n,** anyone referring to all its possible concept values - assuming the set of all such reference-specific combinations is finite and at least one of them anticipates TT.p, which then is called an **"ideal"** such combination.
Thereby pmgp would render any TT.p as indicated obvious, if it is an exhaustive search of this set for an ideal combination and for its checks there is no advantage over RS and/or skill being disclosed by document.p. I.e.: For indicating a TT.p as nonobvious, it must avoid an exhaustive search of this set for an ideal combination and/or its checks of this set's combinations must comprise at least one advantage over RS and/or skill, which is ex- or implicitly disclosed by document.p. Both requirements may be met for any number of combinations and then indicate the resp. TT.p as nonobvious. Examples of such TT.p's are:
▪ TT.p1 first performs some reorderings of this set (consisting of n**²⁴** combinations, n>=2) and then needs to check for an ideal combination only e.g. the n⁶ first combinations, while an exhaustive search for it may need n²⁴ checks, or
▪ TT.p2 avoids the initial reorderings of TT.p1 but finds an ideal combination by exhaustive random checks for it, i.e. by potentially up to n**²⁴** checks, yet now the checks are modified to be e.g. faster or cheaper or non-destructive or ..., or
▪ TT.p3 may be based on changes of TT.p1 and of TT.p2 such as to enable combining their advantages.
In all such cases TT.p is still based on an exhaustive search in some set for an ideal combination, but now the above requirement is met for indicating it nonobvious.
**¹⁵** E. W. Dijkstra in 'Teaching and Learning Formal Methods', by C. N. Dean et al., 1996: "So-called 'natural language' is wonderful for the purposes it was created for, such as to be rude in, to tell jokes in, to cheat or to make love in (and Theorists of Literary Criticism can even be content-free in it), but it is hopelessly inadequate when we have to deal unambiguously with situations of great intricacy, situations which unavoidably arise in such activities as legislation, arbitration, mathematics or programming."
**¹⁶** Here the acronyms "plcs", "pmgp", and "NNI" (and their variants) carry technically and legally precise meanings. Legislation and/or precedents unfortunately don't know this preciseness**¹⁵⁾** when using their resp. terms - such as **"inventive height", "creative height", "amount of creativity", "size of inventive step", "independent thought", "creative idea",** ... related to an invention - the meanings of which mostly somehow refer to plcs or pmgp or NNI, without explaining how exactly - and thus invite problems.
**¹⁷** The initial data transfer in an ISDN for establishing a network connection**²⁰⁾** - which need not be established in a packet switching network, as there network connections permanently exist between all DTE's actually connected to it**²⁰⁾** - must not be confused with starting a telephone call or a real-time communications connection: This initial data transfer does not yet belong to a telephone call or a real-time communications connection, in the sense that it is not yet starting a "telephone call set-up" procedure indispensable in any telephone call. The same applies, if the initial packet-switched data transfer in the communications connection considered, establishes a V.120 connection first, or gains access to a network first. See also footnotes 6 and 7.
**¹⁸** Note that, according to the EPC, this wording "Indeed any packet-switching network could be used ... within the scope of the present invention." of the '884 specification explicitly discloses that one of the innovations of the '884 TT.p is that it is capable of using **ANY** PSN (whichever it may be) in conjunction with **ANY** LSN (whichever it may be). I.e.: A TT.i based on a combination of a specific LSN with a specific PSN is absolutely irrelevant here, as it does not disclose this innovative property of the '884 TT.p.
This holds in particular for any alleged anticipation document.i failing to disclose somehow (i.e. explicitly or implicitly^{**1**)}) this '884 property of its TT.i or the TT.i of which even contradicts this '884 property. These are e.g. all documents.i focusing on the ISDN as providing both, an LSN as well as a PSN, and thus totally depending on a specific combination of both alleged networks.
Also: Such documents.i show independently of each other that their ISDN focus excludes anticipating the '884 invention:
**(1)** The '884 patent limits ISDNs as being used as line switching networks only, by explicitly stating:
   o *"If an ISDN network exists, an ISDN-B channel is used* as *the data channel"* (col. 4:61-62), and
   o "Data *packets are thereby sent through the B channel"* (col. 4:62-63).
**(2)** The classification of networks as packet-switching or line-switching is shown in the '884 Figures 1-4: In the '884 TT.p, "PSTN/POTS" is a synonym to "ISDN". Hence, as the term PSTN/POTS always stands for a line-switching network, this also applies for the term ISDN.
**(3)** Col. 9:8-10 is explicit: The 1^{st} switch's basic state provides that initially *"data* is *sent into the Internet through* *the IP switch* 72" - and thus excludes the line switching device 73 from use in the packet-switched transfer, as would be necessary for using an ISDN's packet-switching function as packet-switching network.
**(4)** Claims 1 and 2 clearly assume that their two switches can change-over to the line-switching network with their considered packet-switched data transfer, even with a total failure of the packet-switching network - which is impossible in an ISDN. In the event of a total failure of a thus understood "ISDN packet-switching network" the limitations 1.e) resp. 2.d) in both claims cannot be realized, as the ISDN packet-switching functionality would be required for this - namely for transferring the ISDN signaling command SETUP by this packet-switching functionality of the ISDN, see col. 9:46-47 - which would not be available after this event.
**(5)** Feature a) of claim 1 is technically and cost-wise complete nonsense, if an ISDN is considered as the invention's line-switching network (to which the first switch has access) and its packet-switching function as its packet-switching network: The first switch then namely has already, with its ISDN access, always also access to this hypothetical packet-switching network. Then establishing a connection over the ISDN - according to limitation a) - to this own access point of the hypothetical packet-switching network would technically be completely absurd, just as establishing such a connection over the ISDN to a remote access point of the hypothetical "ISDN-packet-switching network": In both cases - if they were technically realizable at all, which then would be pathological cases - establishing such a connection would bring no advantage but unavoidably additional cost (which is to be lowered by using the packet-switching network).
**(6)** The international standardizations body solely responsible for ISDNs, the ITU-T (= International Transportation Union - Telecommunications) and their pertinent standard, the "Recommendation H.323", clearly defines an ISDN as a line-switching network (as a *"switched circuit network - SCN)").* I.e., at the '884 priority date, the ITU-T had already clarified that an ISDN is a line switching network, thus negatively deciding the question (which was controversially debated by some only in the early 80's), whether an ISDN's packet-switching function might allow to call it a packet-switching network.
**¹⁹** See also Section II.A.1.2
**²⁰** These are the terms/notions of the pertinent ordinary skill in telecommunications, namely of the **"ISO OSI Reference Model",** being - since it became existent - the one and only one commonly accepted terminological/notional basis of all international and national pertinent standards setting organizations (i.e. of the all industries ISO, of the all telecommunications industries CCITT/ITU-T, of the all electrical devices IEEE, of the all Internet issues developing IETF, the US ANSI, the German DIN, the British BSI, the French AFNOR, the .....). Thus, these terms'/notions' use in the '884 patent is self-evident, unless it were explicitly and clearly stated otherwise. This broad consensus of national/international bodies is based on their insights that using the layman's language in telecommunications inevitably creates chaos - e.g. generates by its various and in important details contradictory meanings of the layman's notions of such terms as "connection", elaborated on below.
Note: The OSI Reference Model as such is an international standard, and hence the meanings of its natural English language wordings are those provided on the level of professionalism (see Section I.D) of the person of pertinent skill. I.e., the terms/notions of the OSI Reference Model were not chosen to be immediately graspable by the layman, but to provide to the persons skilled in the art a commonly accepted/necessary notional basis.
Stating within the specification of a US telecommunications patent its use of the only existing internationally/nationally agreed on terminological/notional telecommunications Reference Model - i.e. for explaining its skill when using telecommunica-tion terms/notions - would be as strange as stating in it the use of the "Webster's Unabridged Dictionary". I.e.: The ISO OSI Reference Model's use in the '884 patent is self-explaining by skill.
Accordingly, their notion of "transfer" denotes the whole data transfer of a phone call - and should not be mixed-up with "transferring data" (in the communications connection considered (see Section II.A.1.2), which deals with details of this transfer. It is highlighted subsequently in this footnote, where appropriate, by capital letters for avoiding misunderstandings.
More precisely: This TRANSFER comprises much more than just the actual transferring of data, e.g. also the *"change from packet switching to line switching* ..." therein (see col. 9:43-52). Together with col. 9:37-41 this clarifies the tight notional relation between a TRANSFER and a communications connection, and also that this change of the monitored TRANSFER results from and affects only this communications connection considered (as otherwise the line-switching connection might be overloaded a priori, thus obviously not achieving its intended real time quality). See Section II.A.1.2 for further limitations on this TRANSFER.
As to the notion of the term "connection" used multiple times here: There is no universal meaning of this term. Its notion is always depending on this term's context identified by its prefix. In telecommunications, the term "communications connection" stands for an "abstract communications application association" (see the first pages of the above OSI Reference Model) of two communicating parties - hence its name. It belongs to the OSI layer 7 (= L7), i.e. it is an "abstract application connection" alias "L7-connection". In case of a telephone call its communications connection is the abstract telephony association between the abstract models of the telephone sets of the caller and callee. It becomes "existing" - as an association between a caller's and a callee's phone model - exactly when on the caller's end terminal the address of the callee's end terminal is identified.
"Establishing" an existing connection denotes the process of performing its abstract technical realization, which comprises activities possible only after it became existing. This first step of establishing alias "setting-up" a communications connection is colloquially denoted by the vague term "calling". The skilled person knows about the technical details of abstract local resource requirements to be met and agreements to be achieved between the caller's/callee's terminals during a call set-up. A call resp. its communications connection may enter - after its "set-up phase" - into its "use phase" and eventually into its "termination phase". In all phases a call requires performing, between its (resp. its communications connection's) end-terminals, some end-terminal-to-end-terminal data transfer, in total the above TRANSFER.
I.e.: A call's communications connection is an end-terminal-to-end-terminal connection, while its switch-to-switch segment may use a packet-switching or a line-switching socalled "network connection" (alias "L3-connection"). In telecommunications "tech talks" these prefixes - "L7", "application"/"communications", "network"/"L3", "link"/"L2", ... - would frequently be omitted, as they are clear to the skilled telecommunications person anyway.
Accordingly: The event of a time delay (implying a delay for ever and abstracting from how the first switch becomes aware of it) may occur in a large number of situations and in several locations in the TRANSFER monitored resp. its communications connection - and need not be caused by the packet-switching network, at all, but may be caused outside of it. Practical examples of reasons of possible such events are:
▪ The first switch ran out of buffer space as needed (e.g. for packetizing the data incoming from a telephone set) when using the packet-switching network for the communications connection considered, or it ran out of other resources needed to this end (e.g. appropriate compression/decompression resources), or it cannot forward a packet to the packet-switching network (e.g. somebody has pulled the plug to it or it has encountered some internal management limitation), or it discovers unacceptable delays on the data received by the second switch or that
▪ the second switch has one of the resource mismatch problems as just identified for the first switch (the skilled person needs no explanation of how to achieve this discovery).
Any of these events may occur after the TRANSFER began in this communications connection. I.e.: The patents-in-suit definitively do not consider the period of time prior to the existence of this communications connection.
**²¹** VAZVAN does not mention a telephone call anywhere. He does indeed mention:
▪ telephones - at that time frequently used as data modems supporting devices, e.g. by means of the then very popular "acoustic couplers" between telephones to these modems - and thereby also discloses the additional technical conditions necessary for them ("fixed networks", page 9:29, or "data terminal equipment' separate from "radio unit", page 13:4-5). It does not, however, disclose in a single word that these would meet both the fundamental technical requirements set by:
   o **Data processing data transmission technology** (main feature: no remaining bit errors or packet losses whatsoever and thus, if appropriate, data transmission section based data transmission repetition, thus excluding meeting the telephony real-time requirement) such that it is suitable also for
   o **Telephone call data transmission technology** (main feature: signal delay < 0.5 sec, therefore often no data transmission repetition whatsoever but instead, as appropriate, acceptance of remaining bit errors and / or packet losses, i.e. unconditionally meeting telephony real-time requirement - being diametrically opposite to the then established data transmission requirement, as described in the preceding bullet point).
   In other words: Solely the mention of the possibility of also involving a telephone in the realisation of an MMT/DMT-VAZVAN nowhere refers to any more than this - is not a disclosure of having this telephone integrated into the two above and diverging data transmission technologies in a way such that this facilitates an '884 real-time data transmission.
▪ "calls terminated in a mobile station" und "calls originating in a mobile station", page 19:20 and 33, but he does not disclose anywhere with a single word that these calls could be **telephone** calls. Instead the only universally disclosed interpretation of these calls is that they are **"data** calls" (e.g. page 12 at several points or page 13:4-5 "data terminal equipment'), and this corresponds to the situation of interest at the time and its feasibility expectation. In other words: the mere mention of the word "call" as such is not a disclosure of any kind that it may comprise "telephone call", with its considerably different telephony data transmission technology as compared to (see the preceding bullet point) the data processing data transmission technology solely referred to everywhere else by VAZVAN.
I.e.: VAZVAN does not claim his change-over to a line-switching network works in a telephone call per arbitrary packet-switching network (as is the case with the '884 change-over) - and it actually does not work this way, as shown above e.g. in vii) and viii).

## Claims

1. A method for managing an analysis of a patent's or any other endeavor's claim (and the technical teaching TT.p underlying it) over at least one document.i (and the technical teaching TT.i underlying it), PTR denoting the set of information about this patent or endeavor and its claim and these documents.i (and the technical teachings TT.p and TT.i), whereby the user of this method interacts with this method's application by a computer system, which
▪ repeatedly reads information from, writes it into, copies it to, or transforms it from/to/within this computer system's various memory sections via their various interfaces during executing the steps (a)-(e),
whereby this information comprises items of a
▪ first kind, given by the user, comprising information identifying or describing at least one item of the PTR or one natural science law or one NPS or one skill, which are input to the computer system by the user, and a
▪ second kind, the below (a)-(e), which are generated by the execution of this method's steps (a)-(d), and
whereby applying this method comprises at least once executing any one of the steps **(a)-(e),** i.e. compiling
**(a)** as **(a)**-item at least one first kind item into at least one technical formal fundamental fact of TT.p or a TT.i,
**(b)** as **(b)**-item at least one technical formal fundamental TT.i fact disclosing its peer TT.p fact,
**(c)** as **(c)**-item at least one of the PTR's either basic or semantic or pragmatic technical secondary or final/nonaudited formal fact as a formal expression based on a (c)-item combination supposed to anticipate TT.p,
**(d)** as **(d)**-item at least one interrelation between items or commenting on it resp. them or on additional insight achieved while executing at least one of the steps (a)-(e), and
**(e)** inputting all such second kind items into this information and defining all interrelations - as directed by the user - between all items in the information, such that
a query for any item in this information is replied to by this method automatically and instantly by displaying to its user all this item's information and all its such interrelations to other items.

2. A method according to claim 1, whereby at least one item of this information is
▪ available to this application a priori and/or input to it during its execution, and/or
▪ in a presentation comprising the result of at least one of the steps **(a)-(e).**

3. A method according to claim 1 or 2, wherein executing step **(b)** and **(c)** is subject to at least one of the limitations that any q-anticipation-combination (q-AC) is contradiction-free or element-integrity preserving or as given by an NLS.

4. A method according to one of the claims 1-3, being subject to the limitation that at least one or all of its steps **(a)-(e)** is resp. are executed interactively with the FSTP user and/or automatically by the FSTP itself.

5. A method according to one of the claims 1-4, being subject to the limitation that the execution of at least one of the steps **(a) - (e)** takes place on a D- or B-level of presentation of the fundamental facts of the TT.p/TT.i- alias TT-set.

6. A method according to one of the claims 1-5, being subject to a given limitation of the presentation of at least one item input or output during the FSTP analysis.

7. A method according to one of the claims 1-6, being subject to the limitation that it may complete a given alleged q-CM to q'-cM such that it modifies some q'-AC to anticipate TT.p or prove there is no such completion with q' <= a given value.

8. An apparatus for managing an analysis of a patent's or any other endeavor's claim (and the technical teaching TT.p underlying it) over at least one document.i (and the technical teaching TT.i underlying it), PTR denoting the set of information about this patent or endeavor and its claim and these documents.i (and the technical teachings TT.p and TT.i), whereby the user of this apparatus interacts with this method's application by a computer system, which
▪ repeatedly reads information from, writes it into, copies it to, or transforms it from/to/within this computer system's various memory sections via their various interfaces during executing the steps **(a)-(e),**
whereby this information comprises items of a
▪ first kind, given by the user, comprising information identifying or describing at least one item of the PTR or one natural science law or one NPS or one skill, which are input to the computer system by the user, and a
▪ second kind, the below **(a)-(e)** which are generated by the execution of this method's steps **(a)-(d),** and
whereby applying this apparatus comprises at least once executing any one of the steps **(a)-(e),** i.e. compiling
**(a)** as **(a)**-item at least one first kind item into at least one technical formal fundamental fact of TT.p or a TT.i,
**(b)** as **(b)**-item at least one technical formal fundamental TT.i fact disclosing its peer TT.p fact,
**(c)** as **(c)**-item at least one of the PTR's either basic or semantic or pragmatic technical secondary or final/nonaudited formal fact as a formal expression based on a **(c)**-item combination supposed to anticipate TT.p,
**(d)** as **(d)**-item at least one interrelation between items or commenting on it resp. them or on additional insight achieved while executing at least one of the steps **(a)-(f),** and
**(e)** inputting all such second kind items into this information and defining all interrelations - as directed by the user - between all items in the information, such that
a query for any item in this information is replied to by this method automatically and instantly by displaying to its user all this item's information and all its such interrelations to other items.

9. An apparatus according to claim 8, whereby at least one item of this information is
▪ available to this application a priori and/or input to it during its execution, and/or
▪ in a presentation comprising the result of at least one of the steps **(a)-(e).**

10. An apparatus according to claim 8 or 9, wherein executing step **(b)** and **(c)** is subject to at least one of the limitations that any q-anticipation-combination (q-AC) is contradiction-free or element-integrity preserving or as given by an NLS.

11. An apparatus according to one of the claims 8-10, being subject to the limitation that at least one or all of its steps **(a)-(e)** is resp. are executed interactively with the FSTP user and/or automatically by the FSTP itself.

12. An apparatus according to one of the claims 8-11, being subject to the limitation that the execution of at least one of the steps **(a) - (e)** takes place on a D- or B-level of presentation of the fundamental facts of the TT.p/TT.i- alias TT-set.

13. An apparatus according to one of the claims 8-12, being subject to a given limitation of the presentation of at least one item input or output during the FSTP analysis.

14. An apparatus according to one of the claims 8-13, being subject to the limitation that it may complete a given alleged q-CM to q'-cM such that it modifies some q'-AC to anticipate TT.p or prove there is no such completion with q' <= a given value.
